(19) **Europäisches Patentamt**
European Patent Office
Office européen des brevets

(11) **EP 3 127 272 B1**

(12) **EUROPÄISCHE PATENTSCHRIFT**

(45) Veröffentlichungstag und Bekanntmachung des Hinweises auf die Patenterteilung:
**29.04.2020  Patentblatt 2020/18**

(21) Anmeldenummer: **15727535.5**

(22) Anmeldetag: **30.03.2015**

(51) Int Cl.:
*H04L 9/06* (2006.01)          *H04L 9/08* (2006.01)
*G06F 7/58* (2006.01)

(86) Internationale Anmeldenummer:
**PCT/AT2015/050082**

(87) Internationale Veröffentlichungsnummer:
**WO 2015/149099 (08.10.2015 Gazette 2015/40)**

(54) **VERSCHLÜSSELUNGSVERFAHREN UND PSEUDO-ZUFALLSZAHLENGENERATOR**

ENCRYPTION METHOD AND PSEUDO-RANDOM NUMBER GENERATOR

PROCÉDÉ DE CHIFFREMENT ET GÉNÉRATEUR DE NOMBRES PSEUDO-ALÉATOIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.03.2014  AT 502362014**

(43) Veröffentlichungstag der Anmeldung:
**08.02.2017  Patentblatt 2017/06**

(60) Teilanmeldung:
**16202664.5 / 3 174 239**

(73) Patentinhaber:
• **Hödl, Iris-Anna**
  **1200 Wien (AT)**
• **Hödl, Maximilian**
  **2020 Hollabrunn (AT)**

(72) Erfinder: **Hödl, Josef**
**2500 Baden (AT)**

(74) Vertreter: **Wildhack & Jellinek**
**Patentanwälte**
**Landstraßer Hauptstraße 50**
**1030 Wien (AT)**

(56) Entgegenhaltungen:
**EP-A1- 1 901 477          WO-A1-2006/030447**
**DE-A1- 19 736 954          US-A1- 2006 039 558**
**US-A1- 2008 112 560          US-A1- 2010 054 461**
**US-A1- 2012 076 293          US-B1- 6 259 789**

## Beschreibung

Die Erfindung betrifft ein Verfahren zur Erstellung von Pseudo-Zufallszahlen - im Weiteren auch kurz nur als Zufallszahlen bezeichnet - für eine Verschlüsselung bzw. Entschlüsselung gemäß Anspruch 1 und 3 sowie ein Verfahren zur Ermittlung und Anwendung einer Transformationsvorschrift gemäß Anspruch 6 und 8. Schließlich betrifft die Erfindung ein Computerprogrammprodukt gemäß Anspruch 13.

Aus dem Stand der Technik ist eine Vielzahl unterschiedlicher symmetrischer Verfahren zur Verschlüsselung von Rohdatenfolgen bekannt. Dokument US 2012/0076293 A beschreibt einen Zufallszahlengenerator und Transformationsvorschrift gemäß des Oberbegriffs der unabhängigen Ansprüche.

Es ist Aufgabe der Erfindung einen deterministischen Pseudo-Zufallszahlengenerator - im Weiteren auch kurz nur als Zufallszahlengenerator bezeichnet - bereitzustellen, der hoch chaotisches Verhalten zeigt. Weiters soll eine Transformationseinheit zur Verschüsselung und/oder Entschlüsselung von Rohdaten bereitgestellt werden. Schließlich sollen eine Verschlüsselungsmaschine und eine Entschlüsselungsmaschine mit den genannten Vorteilen bereitgestellt werden.

Die Aufgabe wird durch die in den unabhängigen Ansprüchen beanspruchten Gegenstände gelöst. Bevorzugte Ausführungsformen sind in den abhängigen Ansprüchen definiert.

Zur sicheren Verschlüsselung von Rohdaten ist vorgesehen, dass der innere Zustand der Transformationseinheit sowie der innere Zustand des Zufallszahlengenerators nach einer Anzahl von Verschlüsselungen von Bytes, insbesondere nach der Verschlüsselung jedes Bytes, abhängig vom jeweils zu verschlüsselnden Rohdaten-Byte und/oder vom jeweiligen Endergebnis der Verschlüsselung geändert und aktualisiert wird und dieser neue innere Zustand der jeweils nächsten Verschlüsselung zugrunde gelegt wird, wobei insbesondere der Zufallszahlengenerator Zufallszahlen erstellt, die für die Auswahl der Transformationsvorschriften verwendet werden, und/oder der Zufallszahlengenerator Zufallszahlen erstellt, die für die Aktualisierung der inneren Zustände des Zufallszahlengenerators und der Transformationseinheit herangezogen werden.

Mit dem vorliegenden Verfahren ist es möglich, sehr lange Passwörter, z.B. mit ca. 100 000 Bytes, zu verwenden, wobei die Änderung jedes Bytes den inneren Zustand und damit die Verschlüsselung maßgeblich beeinflusst.

Zur sicheren Entschlüsselung von Rohdaten ist vorgesehen,

- dass der innere Zustand der Transformationseinheit sowie der innere Zustand des Zufallszahlengenerators nach einer Anzahl von Entschlüsselungen von Bytes, insbesondere nach der Entschlüsselung jedes Bytes, abhängig vom jeweils verschlüsselten Byte und/oder vom jeweiligen entschlüsselten Byte geändert und aktualisiert wird und dieser neue innere Zustand der jeweils nächsten Entschlüsselung zugrunde gelegt wird, wobei insbesondere

- der Zufallszahlengenerator Zufallszahlen erstellt, die für die Auswahl der inversen Transformationsvorschriften verwendet werden, und/oder der Zufallszahlengenerator Zufallszahlen erstellt, die für die Aktualisierung der inneren Zustände des Zufallszahlengenerators und der Transformationseinheit herangezogen werden.

Eine besonders einfache und sichere Verschlüsselung, bei der jedes Byte der verschlüsselten Datenfolge von jedem Byte der Rohdaten im jeweiligen Block abhängt, sieht vor, dass

a) die Transformationseinheit und der Zufallszahlengenerator in einen Initialzustand gesetzt werden,
b) die einzelnen sequentiell vorliegenden Bytes der Rohdaten innerhalb desselben Blocks hintereinander in der vorgegebenen Reihenfolge vom ersten bis zum letzten Byte von der Transformationseinheit verschlüsselt werden,
c) nachdem alle Bytes des Blocks verschlüsselt wurden, die Transformationseinheit sowie der Zufallszahlengenerator erneut in den Initialzustand gesetzt werden, und
d) die einzelnen sequentiell vorliegenden Bytes der im jeweiligen Block vorliegenden Daten innerhalb desselben Blocks entgegen der vorgegebenen Reihenfolge vom letzten bis zum ersten Byte von der Transformationseinheit verschlüsselt werden.

Eine Entschlüsselung sieht entsprechend vor, dass

a) die Transformationseinheit sowie der Zufallszahlengenerator in einen Initialzustand abhängig vom jeweiligen Passwort gesetzt wird.
b) die einzelnen sequentiell vorliegenden Bytes der im jeweiligen Block vorliegenden zu entschlüsselnden Daten innerhalb desselben Blocks entgegen der vorgegebenen Reihenfolge vom letzten bis zum ersten Byte von der Transformationseinheit entschlüsselt werden,
c) nachdem alle Bytes des Blocks entschlüsselt wurden, die Transformationseinheit sowie der Zufallszahlengenerator erneut in den Initialzustand gesetzt wird, und
d) die einzelnen sequentiell vorliegenden Bytes der so erhaltenen Daten innerhalb desselben Blocks hintereinander in der vorgegebenen Reihenfolge vom ersten bis zum letzten Byte von der Transformationseinheit entschlüsselt werden.

Zur Erhöhung der Abhängigkeiten der verschlüsselten Datenfolge von jedem einzelnen Byte der

Rohdaten kann vorgesehen werden, dass die zuvor beschriebenen Verschlüsselungsschritte a) bis d) mehrfach für denselben Block wiederholt werden, wobei gegebenenfalls bei der letzten Wiederholung ausschließlich die Schritte a) und b) durchgeführt werden.

Eine Entschlüsselung sieht entsprechend vor, dass die Entschlüsselungsschritte a) bis d) mehrfach für denselben Block durchgeführt werden, wobei gegebenenfalls bei der letzten Durchführung ausschließlich die Schritte a) und b) ausgeführt werden.

Um Datenfolgen mit beliebiger vorgegebener Länge vorteilhaft verschlüsseln zu können und um Abhängigkeiten der verschlüsselten Datenfolge von sehr lange vorher verarbeiteten Daten zu ermöglichen, kann vorgesehen sein, dass nach der Durchführung des Schritts b) oder eines der Schritte b) oder alternativ nach der Durchführung des Schritts d) oder eines der Schritte d) und noch vor der darauffolgenden Zurücksetzung in den jeweiligen Initialzustand der innere Zustand der Transformationseinheit und des Zufallszahlengenerators abgespeichert wird und als neuer Initialzustand für die Verschlüsselung des jeweils nächsten Blocks herangezogen wird.

Eine Entschlüsselung sieht entsprechend vor, dass nach der Durchführung des Schrittes b) oder eines der Schritte b) oder alternativ nach der Durchführung des Schrittes d) oder eines der Schritte d) und noch vor der darauffolgenden Zurücksetzung in den jeweiligen Initialzustand der innere Zustand der Verschlüsselungsmaschine, bestehend aus dem inneren Zustand der Transformationseinheit und dem inneren Zustand des Zufallszahlengenerators abgespeichert wird und als neuer Initialzustand für die Entschlüsselung des jeweils nächsten Blocks herangezogen wird.

Eine vorteilhafte Ermittlung von Transformationsvorschriften sieht vor, dass gemeinsam mit dem Setzen eines Initialzustands der Verschlüsselungsmaschine eine Anzahl von Grund-Transformationsvorschriften in Abhängigkeit vom Initialzustand vorgegeben wird, und

- abhängig vom inneren Zustand der Transformationseinheit eine Anzahl T aus diesen Grund-Transformationsvorschriften in einer vorgegebenen Reihenfolge ausgewählt wird,
- wobei die Transformationsvorschrift aus den einzelnen ausgewählten Grund-Transformationsvorschriften zusammengesetzt wird, sodass bei der Anwendung der Transformationsvorschrift auf das zu verschlüsselnde Byte die ausgewählten Grund-Transformationsvorschriften in der jeweiligen Reihenfolge auf das zu verschlüsselnde Byte angewandt werden.

Eine Entschlüsselung sieht entsprechend vor, dass gemeinsam mit dem Setzen eines Initialzustands der Entschlüsselungsmaschine eine Anzahl T von Grund-Transformationsvorschriften in Abhängigkeit vom Initialzustand der Transformationseinheit vorgegeben wird, und

- abhängig vom inneren Zustand eine Anzahl T aus diesen Grund-Transformationsvorschriften in einer vorgegebenen Reihenfolge ausgewählt wird, wobei die Transformationsvorschrift aus den einzelnen ausgewählten Grund-Transformationsvorschriften zusammengesetzt wird, sodass bei der Anwendung der Transformationsvorschrift auf das zu entschlüsselnde Byte die ausgewählten Grund-Transformationsvorschriften in der jeweils umgekehrten Reihenfolge auf das zu verschlüsselnde Byte angewandt werden, und
- dass insbesondere die Grund-Transformationsvorschriften der Transformationseinheit den Inversen der Grund-Transformationsvorschriften der Transformationseinheit einer mit demselben Passwort initialisierten Verschlüsselungsmaschine entsprechen, und- dass insbesondere die Reihenfolge der Anwendung der einzelnen Grund-Transformationsvorschriften für die Bildung einer Transformationsvorschrift in der umgekehrten Reihenfolge wie bei der Verschlüsselung erfolgt.

Eine vorteilhafte Ermittlung von Transformationsvorschriften, mit der eine enorm große Menge an möglichen Transformationsvorschriften potentiell zur Verfügung steht, sieht vor, dass die Transformationsvorschrift aus den einzelnen ausgewählten Grund-Transformationsvorschriften sowie zusätzlich einer Spezial-Transformationsvorschrift zusammengesetzt wird, sodass bei der Anwendung der Transformationsvorschrift auf das zu verschlüsselnde Byte die ausgewählten Grund-Transformationsvorschriften in der jeweiligen Reihenfolge auf das zu verschlüsselnde Byte angewandt werden und, insbesondere danach, noch zusätzlich die Spezial-Transformationsvorschrift angewendet wird, und

dass die Spezial-Transformationsvorschrift bei jedem Verschlüsselungsschritt oder nach einer Anzahl von Verschlüsselungsschritten, abgeändert wird, insbesondere ausschließlich für eine vorgegebene Anzahl von Abänderungen, und

dass insbesondere die Verwendung und/oder Abänderung der Spezial-Transformationsvorschrift je nach Gegebenheit an- und abgeschaltet wird.

Eine Entschlüsselung sieht entsprechend vor, dass die Transformationsvorschrift aus der Spezial-Transformationvorschrift und aus den einzelnen ausgewählten Grund-Transformationsvorschriften gebildet wird, sodass bei der Anwendung der Transformationsvorschrift auf das zu entschlüsselnde Byte, insbesondere zuerst, die Spezial-Transformationsvorschrift und, insbesondere anschließend, die ausgewählten Grund-Transformationsvorschriften in der jeweils umgekehrten Reihenfolge auf das zu entschlüsselnde Byte angewandt werden,

- dass die Spezial-Transformationsvorschrift bei jedem Entschlüsselungsschritt oder nach einer Anzahl von Entschlüsselungsschritten abgeändert wird, insbesondere ausschließlich für eine vorgegebene Anzahl von Änderungen, und- dass insbesondere die Verwendung und/oder Abänderung der Spezial-Transformationsvorschrift je nach Gegebenheit an und ab geschaltet wird.

Zur vorteilhaften Initialisierung des Verschlüsselungsverfahrens anhand eines Passworts, kann vorgesehen sein, dass vor der Verschlüsselung der Rohdaten

a) als Passwort eine Anzahl von sequentiell angeordneten Bytes vorgegeben wird,
b) gegebenenfalls dem Passwort seine Länge in Bytes und/oder eine Checksumme beigefügt wird,
c) gegebenenfalls, sofern die Länge des Passwortes eine vorgegebene Länge unterschreitet, das Passwort, insbesondere durch Wiederholung des Passwortes, auf die vorgegebene Länge verlängert wird und somit ein normalisiertes Passwort erstellt wird,
d) ein vorgegebener Start-Zufallszahlengenerator mit vorgegebenen Werten initialisiert wird,
e) die vom Start-Zufallszahlengenerator erstellten Zufallszahlen mit den Bytes des, gegebenenfalls normalisierten Passwortes verknüpft werden und eine erste Initialisierungs-Datenfolge erstellt wird,
f) diese Initialisierungsfolge wird verwendet um eine erste Verschlüsselungsmaschine, umfassend eine erste Transformationseinheit und einen ersten Zufallszahlengenerator zu erstellen und zu initialisieren.
g) das erste Passwort mit der ersten Verschlüsselungsmaschine verschlüsselt wird, und damit ein zweites Passwort erhalten wird, h) das erstellte zweite Passwort mit von dem Zufallszahlengenerator der ersten Verschlüsselungsmaschine erstellten Zufallszahlen verknüpft wird und so eine zweite Initialisierungs-Datenfolge erstellt wird, und diese zur Erstellung und Initialisierung einer weiteren Verschlüsselungsmaschine verwendet wird.

Eine Verbesserung der Initialisierung, die selbst bei kleinen Abweichungen vom Passwort zu völlig anderen Ergebnissen führt, sieht vor, dass i) wobei die folgenden Schritte j), k) und l) optional mehrfach, durchgeführt werden, nämlich

j) dass jeweils das für die Initialsierung der Verschlüsselungsmaschine verwendete Passwort (Wa mit dieser Verschlüsselungsmaschine verschlüsselt wird und dadurch ein nächstes Passwort erhalten wird,
k) dass dieses Passwort mit Zufallszahlen des jeweils zuletzt erstellten Zufallszahlengenerators verknüpft wird und so eine weitere Initialisierungs-Datenfolge erstellt wird, und
l) dass eine nachfolgende weitere Verschlüsselungsmaschine mit einer Transformationeinheit und einem Zufallszahlengenerator mit der jeweiligen zuletzt erstellten Initialisierungs-Datenfolge definiert, erstellt und initialisiert wird, und
m) dass die letzte derart erstellte Verschlüsselungsmaschine als Verschlüsselungsmaschine herangezogen wird.

Eine vorteilhafte Initialisierung einer Entschlüsselungsmaschine sieht vor, dass zur Initialisierung einer Entschlüsselungsmaschine

- eine Verschlüsselungsmaschine erstellt wird, und dass anschließend eine Entschlüsselungsmaschine mit einem Zufallszahlengenerator und einer Transformationeinheit erstellt wird,
- der innere Zustand des Zufallszahlengenerators der Verschlüsselungsmaschine auf den inneren Zustand des Zufallszahlengenerators der Entschlüsselungsmaschine übertragen wird und
- der innere Zustand der Transformationseinheit der Verschlüsselungsmaschine auf den inneren Zustand der Transformationseinheit der Entschlüsselungsmaschine übertragen wird, die Inversen der Transformationsvorschriften und/oder Grund-Transformationsvorschriften, sowie gegebenenfalls der Spezial-Transformationsvorschrift, ermittelt werden und als inverse Transformationsvorschriften und/oder inverse Grund-Transformationsvorschriften, sowie gegebenenfalls der inversen Spezial-Transformationsvorschrift, in die Transformationeinheit der Entschlüsselungsmaschine gespeichert werdenund insbesondere im Falle einer Änderung der Transformationsvorschriften während der Kodierung der Daten auch die nicht invertierten Transformationsvorschriften und/oder die nicht invertierte Grund-Transformationsvorschriften, sowie gegebenenfalls die nicht invertierten Spezial-Transformationsvorschrift, gespeichert werden.

Ein vorteilhaftes Verfahren zur Erstellung von deterministischen Pseudo-Zufallszahlen, das eine Rückkopplung mit den verschlüsselten Daten ermöglicht, sieht vor, dass eine Anzahl H von Auswahlregistern mit jeweils einer vorgegebenen Anzahl Z von Werten von 1 bis Z in beliebiger Reihenfolge vorgegeben werden,

a) dass dem ersten Auswahlregister eine erste Adressiereinheit vorgeschaltet ist, die mittels eines, insbesondere bei jedem Verschlüsselungsschritt zyklisch inkrementierten, in der Adressiereinheit befindlichen, ersten Zeigerwertes auf eine Speicherposition des ersten Auswahlregisters verweist,
b) dass die an der vom ersten Zeiger ausgewählten Speicherposition im ersten Auswahlregister befindliche Zahl ermittelt wird und diese mit der in der zweiten Adressiereinheit befindlichen Zahl verknüpft, insbesondere modulo Z genommen und um eins erhöht wird und dann der neue Inhalt der Adressiereinheit gebildet wird, und der so erhaltene Wert einen zweiten Zeigerwert bildet, der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird, und/oder für die weiteren Auswahlregister jeweils die an der vom jeweiligen Zeiger ausgewählten Speicherposition im jeweiligen Auswahlregister befindliche Zahl ermittelt wird und dem jeweils nächsten Zeiger zugewiesen oder zu diesem hinzugezählt oder von diesem abgezogen wird, und der Wert des jeweils nächsten Zeigers zur Adressierung einer Speicherposition im jeweils nächsten Auswahlregister herangezogen wird,

d) dass eine Anzahl Z von deterministischen Teil-Zufallszahlengeneratoren vorgegeben wird,

e) dass der vom letzten Zeigerwert der Adressiereinheit adressierte Wert des letzten Auswahlregisters zur Auswahl des Teil-Zufallszahlengenerators herangezogen wird,

f) dass gegebenenfalls zur Auswahl einer Mehrzahl von Zufallszahlengeneratoren jeweils der erste Zeiger nach vorgegebenen Kriterien abgeändert, insbesondere erhöht, verringert, inkrementiert oder dekrementiert, wird und die Schritte a) bis e) erneut durchgeführt werden, und

g) mit dem jeweils ausgewählten Teil-Zufallszahlengenerator eine Zufallszahl erstellt und zur Verfügung gehalten wird.

Eine bevorzugte externe Beeinflussung des Zufallszahlengenerators sieht vor, dass dass abhängig von am Eingang anliegenden Werten, insbesondere dem zu verschlüsselnden Byte und/oder dem verschlüsselten Byte und/oder von Zufallszahlen, der Wert eines der Adressiereinheiten abgeändert wird,

- wobei diese Werte mit dem in der jeweiligen Adressiereinheit befindlichen Wert verknüpft werden, vorzugsweise das Resultat dann modulo Z genommen und um eins erhöht wird, und der Wert dann der jeweiligen Adressiereinheit zugewiesen wird,- wobei gegebenenfalls nach Vorliegen eines externen Triggersignals, insbesondere ausgelöst durch eine vorzunehmende Verschlüsselung oder Entschlüsselung eines oder einer vorgegebenen Anzahl von Bytes, jeweils der Wert der nächsten Adressiereinheit abgeändert wird und für den Fall, dass im vorherigen Schritt der Wert der letzten Adressiereinheit abgeändert wurde, wiederum die erste Adressiereinheit abgeändert wird.

Ein weiteres vorteilhaftes Vorgehen beim Erstellen von Zufallszahlen, sieht vor dass eine Anzahl H von Auswahlregistern mit jeweils einer vorgegebenen Anzahl Z von Werten von 1 bis Z in beliebiger Reihenfolge vorgegeben werden,

a) dass dem ersten Auswahlregister eine erste Adressiereinheit vorgeschaltet ist, die mittels eines, insbesondere bei jedem Verschlüsselungsschritt zyklisch inkrementierten, Werts sowie eines vom inneren Zustand des Zufallsgenerators abhängigen weiteren Registers aufgrund einer vorab vorgegebenen Rechenoperation einen ersten Zeigerwert ermittelt, der auf eine Speicherposition des ersten Auswahlregisters verweist,

b) dass die an der vom ersten Zeiger ausgewählten Speicherposition im ersten Auswahlregister befindliche Zahl ermittelt wird und eine zweite Adressiereinheit mittels dieser Zahl sowie mittels eines vom inneren Zustand des Zufallsgenerators abhängigen weiteren Registers aufgrund der vorab vorgegebenen Rechenoperation einen zweiter Zeigerwert ermittelt, der auf eine Speicherposition des zweiten Auswahlregisters verweist, und der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird,

d) dass eine Anzahl von deterministischen Teil-Zufallszahlengeneratoren vorgegeben wird,

e) dass der vom letzten Zeigerwert der Adressiereinheit adressierte Wert des letzten Auswahlregisters zur Auswahl des Teil-Zufallszahlengenerators herangezogen wird, und

g) mit dem jeweils ausgewählten Teil-Zufallszahlengenerator eine Zufallszahl erstellt und zur Verfügung gehalten wird.

Eine bevorzugte externe Beeinflussung des Zufallszahlengenerators sieht vor, dass abhängig von am Eingang anliegenden Werten, insbesondere dem zu verschlüsselnden Byte und/oder dem verschlüsselten Byte und/oder von Zufallszahlen, einer der Werte der weiteren Register abgeändert wird,

- wobei gegebenenfalls nach Vorliegen eines externen Triggersignals, insbesondere ausgelöst durch eine vorzunehmende Verschlüsselung oder Entschlüsselung, oder einer vorgegebenen Anzahl von Triggersignalen eine Aktualisierung vorgenommen wird,
- wobei bei ersten Aktualisierung jeweils der Wert des ersten weiteren Registers abgeändert wird, und bei jeder weiteren Aktualisierung der Wert des weiteren Registers der jeweils nächsten Auswahlstufe abgeändert wird, und für den Fall, dass im vorherigen Schritt der Wert des weiteren Registers der letzten Auswahlstufe abgeändert wurde, wiederum die der Wert des weiteren Registers der ersten Auswahlstufe abgeändert wird.

Alternativ oder zusätzlich kann zur externen Beeinflussung des Zufallszahlengenerators vorgesehen sein, dass abhängig von am Eingang anliegenden Werten, insbesondere einem zu verschlüsselnden Byte und/oder einem verschlüsselten Byte und/oder von Zufallszahlen, eines der Auswahlregister abgeändert wird, und insbesondere zwei in den Auswahlregistern abgespeicherte Werte miteinander vertauscht werden,

- wobei der Index des einen Wertes eine Reihe von vorgegebenen Werten nach einer vorab vorgegebenen Reihenfolge durchläuft, insbesondere durch zyklisches Hochzählen zwischen 1 und Z, und der Index des zweiten Wertes durch die am Eingang anliegenden Werte festgelegt wird,- wobei gegebenenfalls nach Vorliegen eines externen Triggersignals, insbesondere ausgelöst durch eine vorzunehmende Verschlüsselung oder Entschlüsselung eines Bytes oder einer vorgegebenen Anzahl von Bytes, nach jeder Vertauschung oder nach einer vorgegeben Anzahl von Vertauschungen in einem Auswahlregister zum jeweils nächsten Auswahlregister gewechselt wird und für den Fall, dass im vorherigen Schritt in dem letzten Auswahlregister bereits die vorgegebene Anzahl von Vertauschungen statt gefunden hat, wieder das erste Auswahlregister für Abänderungen herangezogen wird.

Bevorzugt kann vorgesehen sein, dass bei einem Verschlüsselungsverfahren oder Entschlüsselungsverfahren das Verfahren zur Erstellung von Zufallszahlen verwendet wird.

Weiters wird ein Verfahren zur Ermittlung und Anwendung von Transformationsvorschriften beschrieben. Die so erstellten Transformationsvorschriften sind vorteilhaft geeignet, bei Ver- und Entschlüsselungsverfahren verwendet zu werden. Hierbei ist vorgesehen, dass eine Anzahl G von Auswahlregistern mit jeweils einer vorgegebenen Anzahl A Werten 1 bis A in beliebiger Reihenfolge vorgegeben werden, wobei in jedem Auswahlregister jeweils eine Anzahl von einzelnen Speicherpositionen im jeweiligen Auswahlregister repräsentierenden Zahlen vorgegeben wird, wobei jede eine Speicherposition repräsentierende Zahl jeweils einmal im Auswahlregister enthalten ist, a) dass dem ersten Auswahlregister eine erste Adressiereinheit vorgeschaltet ist, die mittels eines, insbesondere bei jedem Verschlüsselungsschritt zyklisch inkrementierten, in der Adressiereinheit befindlichen ersten Zeigerwertes auf eine Speicherposition des ersten Auswahlregisters verweist,b) dass die an der vom ersten Zeiger ausgewählten Speicherposition im ersten Auswahlregister befindliche Zahl ermittelt wird und diese mit der in der zweiten Adressiereinheit befindlichen Zahl verknüpft, insbesondere modulo A genommen und um eins erhöht wird, und dann der neue Inhalt der Adressiereinheit gebildet wird, und der so erhaltene Wert einen zweiten Zeigerwert bildet, der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird, und/oder

dass für die weiteren Auswahlregister jeweils die an der vom jeweiligen Zeiger ausgewählten Speicherposition im jeweiligen Auswahlregister befindliche Zahl ermittelt wird und dem jeweils nächsten Zeiger zugewiesen oder zu diesem hinzugezählt oder von diesem abgezogen wird, und der Wert des jeweils nächsten Zeigers zur Adressierung einer Speicherposition im jeweils nächsten Auswahlregister herangezogen wird,

d) dass eine Anzahl von Grund-Transformationsvorschriften vorgegeben wird,

e) dass der vom letzten Zeigerwert der Adressiereinheit adressierte Wert des letzten Auswahlregisters zur Auswahl der Grund-Transformationsvorschriften herangezogen wird,

f) dass gegebenenfalls zur Auswahl einer Mehrzahl von Grund-Transformationsvorschriften jeweils der erste Zeiger nach vorgegebenen Kriterien abgeändert, insbesondere erhöht, verringert, inkrementiert oder dekrementiert, wird und die Schritte a) bis e) erneut durchgeführt werden, und

g) ein Datenwert, insbesondere ein zu verschlüsselndes Byte oder ein zu entschlüsselndes Byte, angegeben wird und die ausgewählte Transformationsvorschrift auf den Datenwert angewendet wird, gegebenenfalls die mehreren ausgewählten Grund-Transformationsvorschriften hintereinander, im Falle der Verschlüsselung in der Reihenfolge ihrer Auswahl oder im Falle der Entschlüsselung entgegen der Reihenfolge ihrer Auswahl, auf den Datenwert angewendet werden und das Ergebnis der Anwendung zur Verfügung gehalten wird. Das Verfahren erlaubt eine vorteilhafte Rückkopplung und führt zu schwer vorhersehbaren Transformationsvorschriften.

Eine bevorzugte externe Beeinflussung der Ermittlung der Grund-Transformationsvorschriften sieht vor, dass abhängig von am Eingang anliegenden Werten, insbesondere dem zu verschlüsselnden Byte und/oder dem verschlüsselten Byte und/oder von Zufallszahlen, der Wert eines der Adressiereinheiten abgeändert wird,

- wobei diese Werte mit dem in der jeweiligen Adressiereinheit befindlichen Wert verknüpft werden, vorzugsweise das Resultat dann modulo A genommen und um eins erhöht wird und und der Wert dann der jeweiligen Adressiereinheit zugewiesen wird,- wobei gegebenenfalls nach Vorliegen eines externen Triggersignals, insbesondere ausgelöst durch eine vorzunehmende Verschlüsselung oder Entschlüsselung eines oder einer vorgegebenen Anzahl von Bytes, jeweils die nächste Adressiereinheit abgeändert wird und für den Fall, dass im vorherigen Schritt die letzte Adressiereinheit abgeändert wurde, wiederum die erste Adressiereinheit abgeändert wird.

Weiters betrifft die Erfindung ein Verfahren zur Ermittlung und Anwendung von Transformationsvorschriften. Die so erstellten Transformationsvorschriften sind vorteilhaft geeignet, bei Ver- und Entschlüsselungsverfahren verwendet zu werden. Hierbei ist vorgesehen, dass dass eine Anzahl G von Auswahlregistern mit jeweils einer vorgegebenen Anzahl A Werten 1 bis A in beliebiger Reihenfolge vorgegeben werden, wobei in jedem Auswahlregister jeweils eine Anzahl von einzelnen Speicherpositionen im jeweiligen Auswahlregister repräsentierenden Zahlen vorgegeben wird, wobei jede eine Speicherposition repräsentierende Zahl jeweils einmal im Auswahlregister enthalten ist,

a) dass dem ersten Auswahlregister eine erste Adressiereinheit vorgeschaltet ist, die mittels eines, insbesondere bei jedem Verschlüsselungsschritt zyklisch inkrementierten, Wertes eines Registers sowie eines vom inneren Zustand des Zufallsgenerators abhängigen weiteren Registers aufgrund einer vorab vorgegebenen Rechenoperation einen ersten Zeigerwert ermittelt, der auf eine Speicherposition des ersten Auswahlregisters verweist,

b) dass die an der vom ersten Zeiger ausgewählten Speicherposition im ersten Auswahlregister befindliche Zahl ermittelt wird und eine zweite Adressiereinheit mittels dieser Zahl sowie mittels eines vom inneren Zustand des Zufallsgenerators abhängigen weiteren Registers aufgrund der vorab vorgegebenen Rechenoperation einen zweiter Zeigerwert ermittelt, der auf eine Speicherposition des zweiten Auswahlregisters verweist, und der dann zur Adressierung einer Speicherposition im zweiten Auswahlregister herangezogen wird,

c) dass gegebenenfalls für die weiteren Adressiereinheiten und die weiteren Auswahlregister analog zur Adressiereinheit und zum Auswahlregister vorgegangen wird,

d) dass eine Anzahl von Grund-Transformationsvorschriften vorgegeben wird,

e) dass der vom letzten Zeigerwert der Adressiereinheit adressierte Wert ($\Phi_G$) des letzten Auswahlregisters zur Auswahl der Grund-Transformationsvorschriften herangezogen wird,

f) dass gegebenenfalls zur Auswahl einer Mehrzahl von Grund-Transformationsvorschriften jeweils das Register nach vorgegebenen Kriterien abgeändert, insbesondere erhöht, verringert, inkrementiert oder dekrementiert, wird und die Schritte a) bis e) erneut durchgeführt werden, und

g) ein Datenwert, insbesondere ein zu verschlüsselndes Byte oder ein zu entschlüsselndes Byte, angegeben wird und die ausgewählte Transformationsvorschrift auf diesen Datenwert angewendet wird, gegebenenfalls die mehreren ausgewählten Grund-Transformationsvorschriften hintereinander, im Falle der Verschlüsselung in der Reihenfolge ihrer Auswahl oder im Falle der Entschlüsselung entgegen der Reihenfolge ihrer Auswahl, auf diesen Datenwert angewendet werden und das Ergebnis der Anwendung zur Verfügung gehalten wird.

Eine bevorzugte externe Beeinflussung des Zufallszahlengenerators sieht vor, dass abhängig von am Eingang anliegenden Werten, insbesondere dem zu verschlüsselnden Byte und/oder dem verschlüsselten Byte und/oder von Zufallszahlen, einer der Werte der weiteren Register abgeändert wird,

- wobei nach Vorliegen eines externen Triggersignals, insbesondere ausgelöst durch die Anfrage nach einer Grund-Transformation, oder einer Anzahl von Triggersignalen eine Aktualisierung vorgenommen wird,
- wobei bei ersten Aktualisierung jeweils der Wert des ersten weiteren Register abgeändert wird, und bei jeder weiteren Aktualisierung der Wert des weiteren Registers der jeweils nächsten Auswahlstufe abgeändert wird, und für den Fall, dass im vorherigen Schritt der Wert des weiteren Registers der letzten Auswahlstufe abgeändert wurde, wiederum die der Wert des weiteren Registers der ersten Auswahlstufe abgeändert wird.

Alternativ oder zusätzlich kann zur externen Beeinflussung der Ermittlung der Grund-Transformationsvorschriften vorgesehen sein, dass abhängig von am Eingang anliegenden Werten, insbesondere einem zu verschlüsselnden Byte und/oder einem verschlüsselten Byte und/oder Zufallszahlen eines der Auswahlregister abgeändert wird, und insbesondere zwei in den Auswahlregistern abgespeicherte Werte miteinander vertauscht werden,

- wobei der Index des einen Wertes eine Reihe von vorgegebenen Werten nach einer vorab vorgegebenen Reihenfolge durchläuft, insbesondere durch zyklisches Hochzählen zwischen 1 und A, und der Index des zweiten Wertes durch die am Eingang anliegenden Werte festgelegt wird,
- wobei gegebenenfalls nach Vorliegen eines externen Triggersignals, insbesondere ausgelöst durch eine vorzunehmende Verschlüsselung oder Entschlüsselung eines Bytes oder einer vorgegebenen Anzahl von Bytes, nach jeder Vertauschung oder nach einer vorgegeben Anzahl von Vertauschungen in einem Auswahlregister zum jeweils nächsten Auswahlregister gewechselt wird und für den Fall, dass im vorherigen Schritt in dem letzten Auswahlregister bereits die vorgegebene Anzahl von Vertauschungen statt gefunden hat, wieder das erste Auswahlregister für Abänderungen herangezogen wird.

Eine Transformationseinheit, die eine extrem große Anzahl an Transformationsvorschriften ermöglicht, sieht vor, dass abhängig von am Eingang anliegenden Werten, insbesondere einem zu verschlüsselnden Byte und/oder einem verschlüsselten Byte und/oder Zufallszahlen die Transformationsvorschriften oder die Grund-Transformationsvorschriften modifiziert werden, wobei die für die Entschlüsselung verwendeten Transformationsvorschriften zu den für die Verschlüsselung verwendeten Transformationsvorschriften invers sind, wobei nach einer vorgegebenen Anzahl von Abänderungen in einer Transformationsvorschrift oder Grund-Transformationsvorschrift, zur jeweils nächsten Transformationsvorschrift oder Grund-Transformationsvorschrift, gewechselt wird und für den Fall, dass im vorherigen Schritt die letzte Transformationsvorschrift oder Grund-Transformationsvorschrift, abgeändert wurde, wieder die erste Transformationsvorschrift oder Grund-Transformationsvorschrift, für Abänderungen herangezogen wird.

Bevorzugt kann vorgesehen sein, dass bei einem Verschlüsselungsverfahren oder Entschlüsselungsverfahren das Verfahren zur Ermittlung und Anwendung einer Transformationsvorschrift verwendet wird.

Weiters beschrieben ist eine Verschlüsselungsmaschine, die eine besonders sichere Verschlüsselung gewährleistet, eine Aktualisierungseinheit, die den Zustandsspeicher der Transformationseinheit nach einer Anzahl von durchgeführten Verschlüsselungen, insbesondere nach der Verschlüsselung jedes einzelnen Bytes, abhängig vom jeweils verschlüsselten Byte sowie vom jeweiligen Endergebnis der Verschlüsselung und/oder abhängig von vom Zufallszahlengenerator erstellten Zufallszahlen ändert und aktualisiert, und die gegebenenfalls den Zustandsspeicher des Pseudo-Zufallszahlengenerators nach einer Anzahl von durchgeführten Verschlüsselungen, insbesondere nach der Verschlüsselung jedes einzelnen Bytes, abhängig vom jeweils zu verschlüsselnden Byte sowie vom jeweiligen Endergebnis der Verschlüsselung und abhängig von vom Zufallszahlengenerator vorher erstellten Zufallszahlen ändert und aktualisiert.

Die Erfindung betrifft auch eine entsprechende Entschlüsselungsmaschine eine Aktualisierungseinheit, die den Zustandsspeicher der Transformationseinheit nach einer Anzahl von durchgeführten Entschlüsselungen, insbesondere nach der Entschlüsselung jedes einzelnen Bytes, abhängig vom jeweils zu entschlüsselnden Byte sowie vom jeweiligen Endergebnis der Entschlüsselung und/oder abhängig von vom Zufallszahlengenerator erstellten Zufallszahlen ändert und aktualisiert, und die gegebenenfalls den Zustandsspeicher des Pseudo-Zufallszahlengenerators nach einer Anzahl von durchgeführten Entschlüsselungen, insbesondere nach der Entschlüsselung jedes einzelnen Bytes, abhängig vom jeweils zu entschlüsselnden Byte sowie vom jeweiligen Endergebnis der Entschlüsselung und abhängig von vom Zufallszahlengenerator vorher erstellten Zufallszahlen ändert und aktualisiert.

Hierbei kann insbesondere vorgesehen sein, dass die Verschlüsselungsmaschine zur Durchführung sämtlicher vorstehend genannter Verfahren zur Verschüsselung ausgebildet ist.

Analog kann vorteilhaft vorgesehen sein, dass die Entschlüsselungsmaschine zur Durchführung sämtlicher vorstehend genannter Verfahren zur Entschüsselung ausgebildet ist.

Ein Programm zur Durchführung eines der Verfahren kann auf einem Datenträger abgespeichert werden.

Weiters kann auch eine verschlüsselte Datenfolge auf einem Datenträger abgespeichert werden.

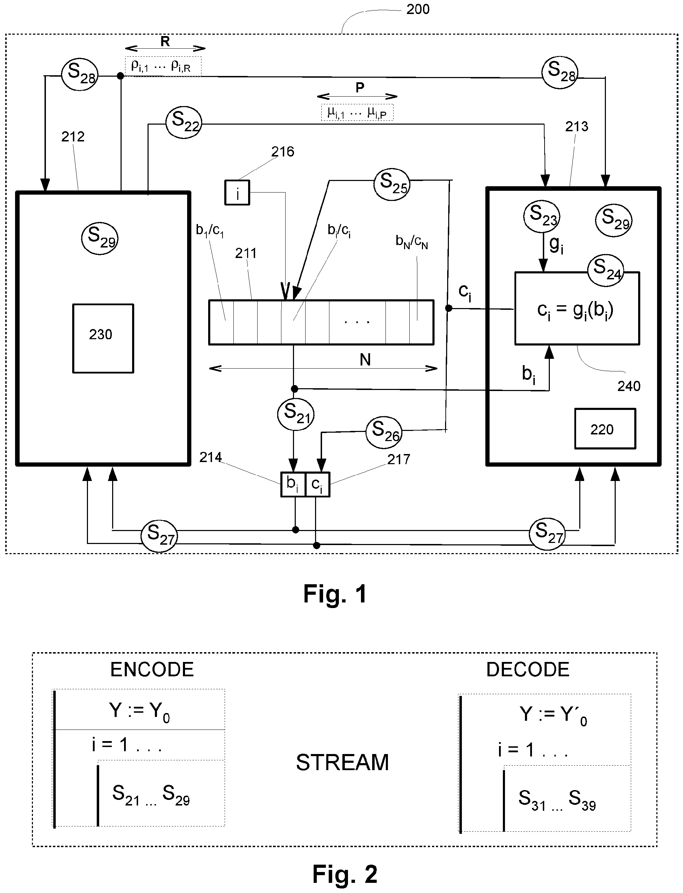

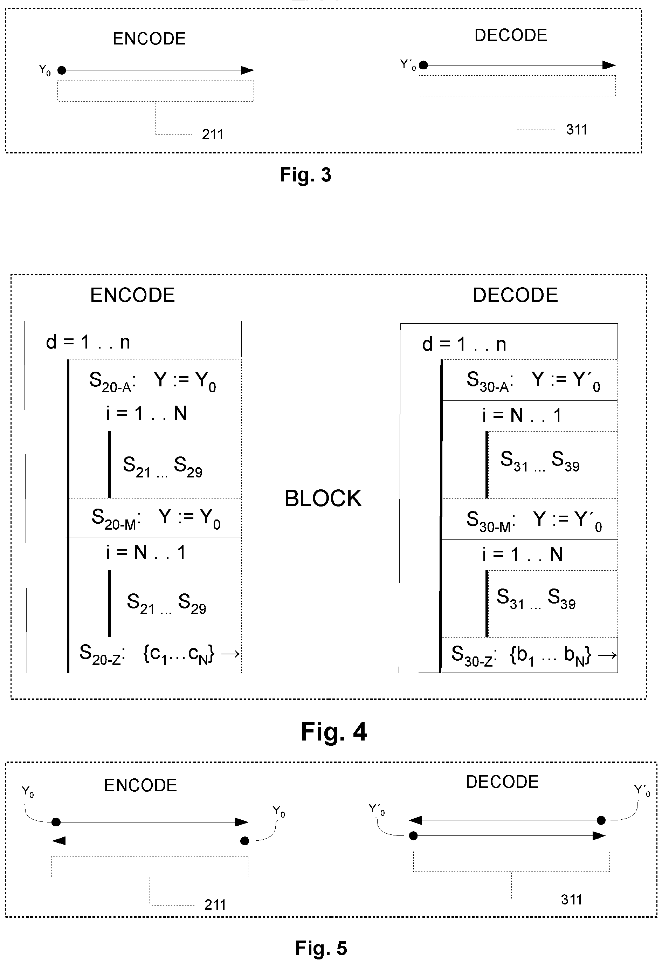

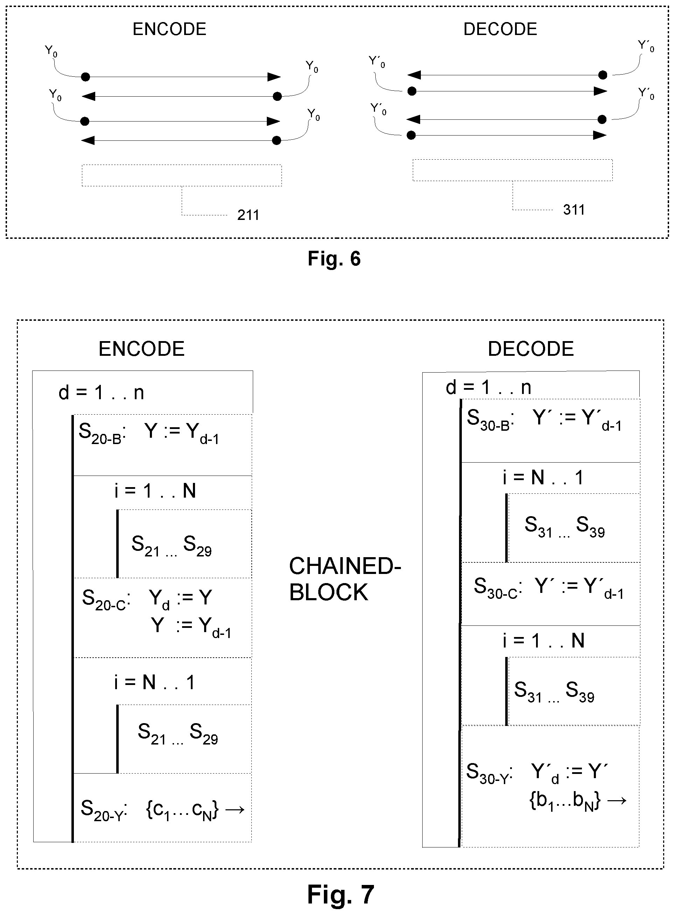

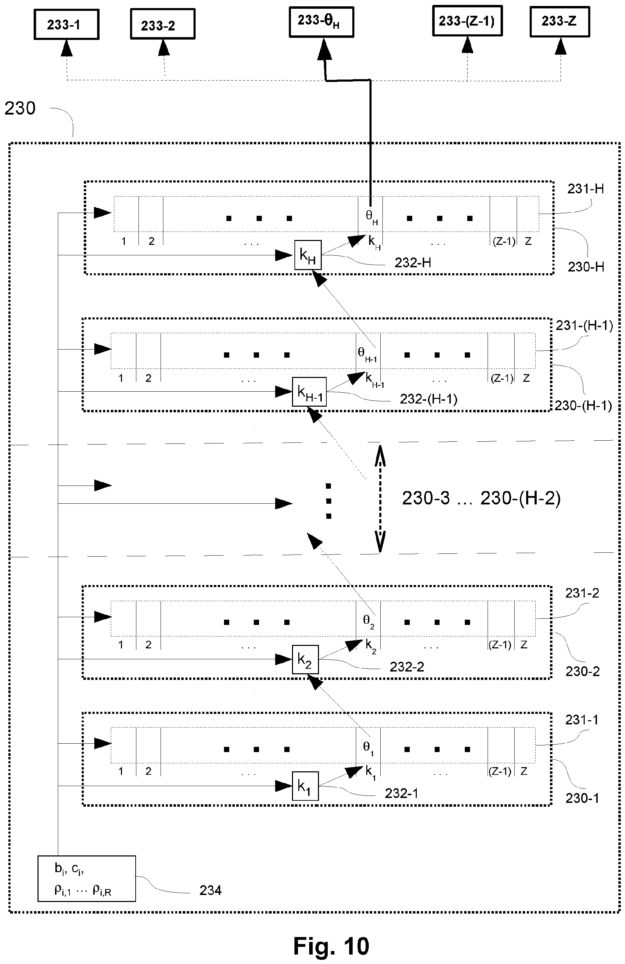

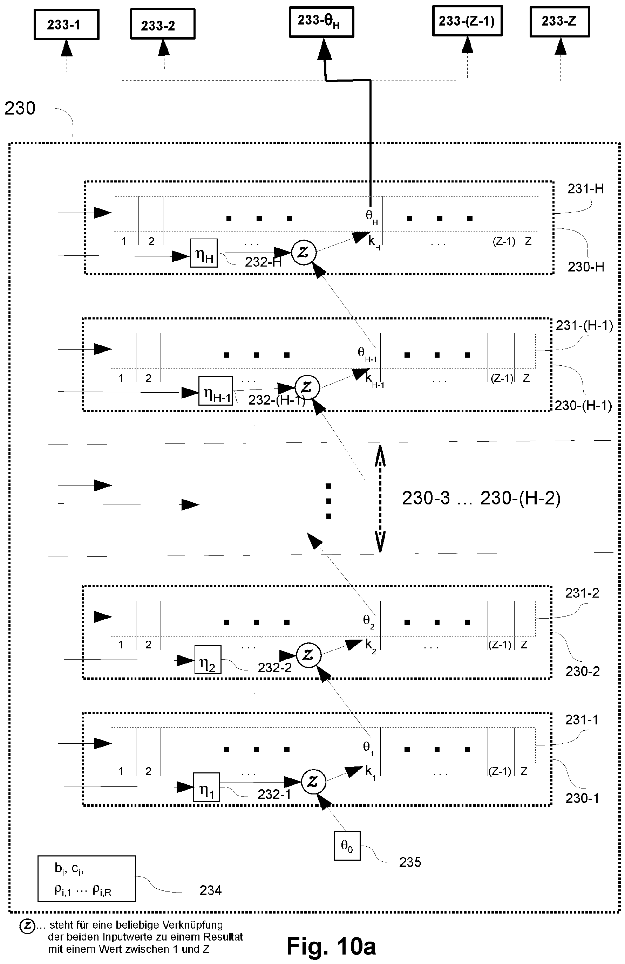

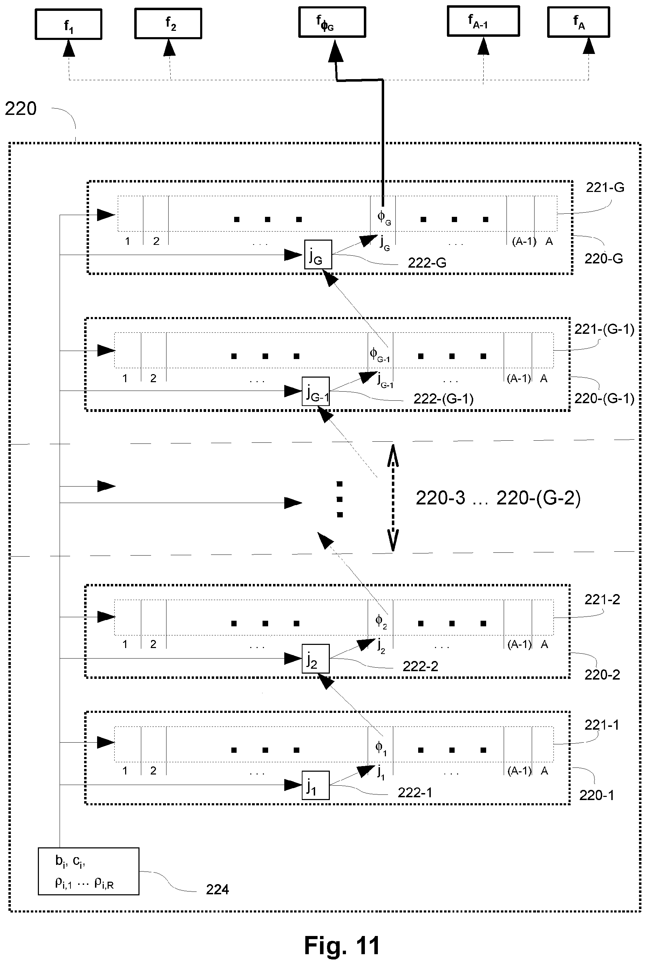

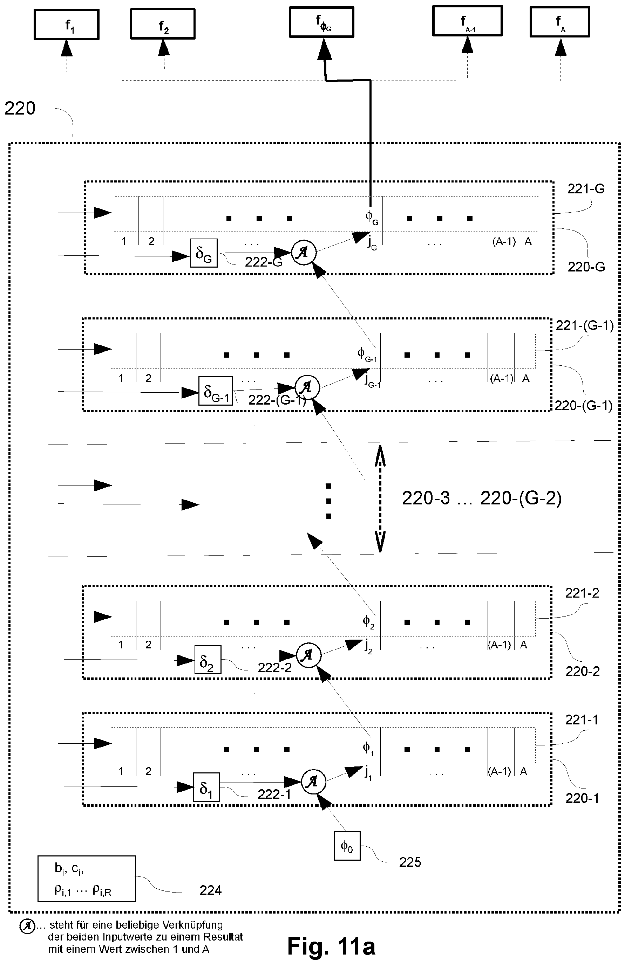

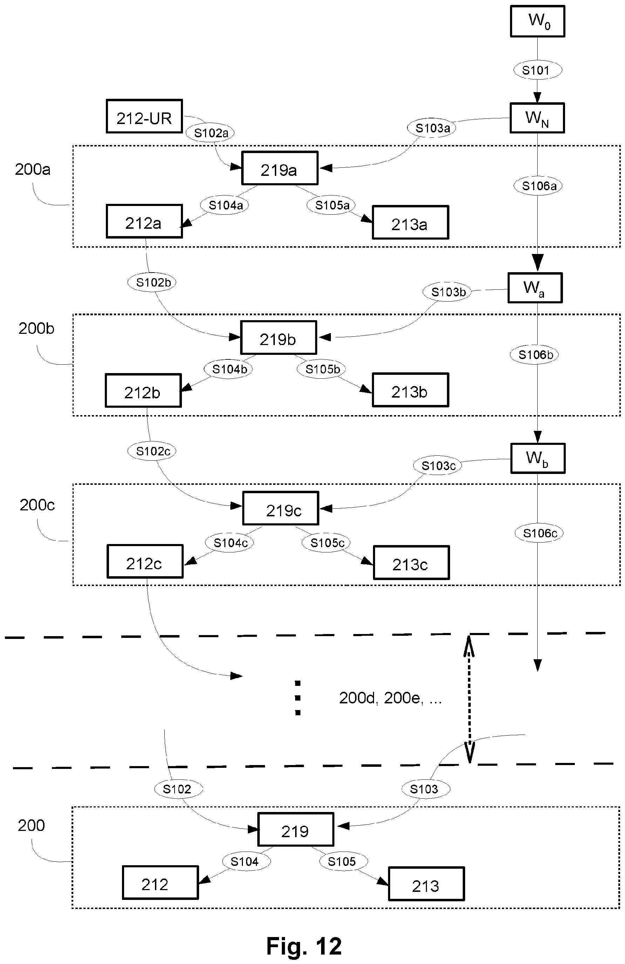

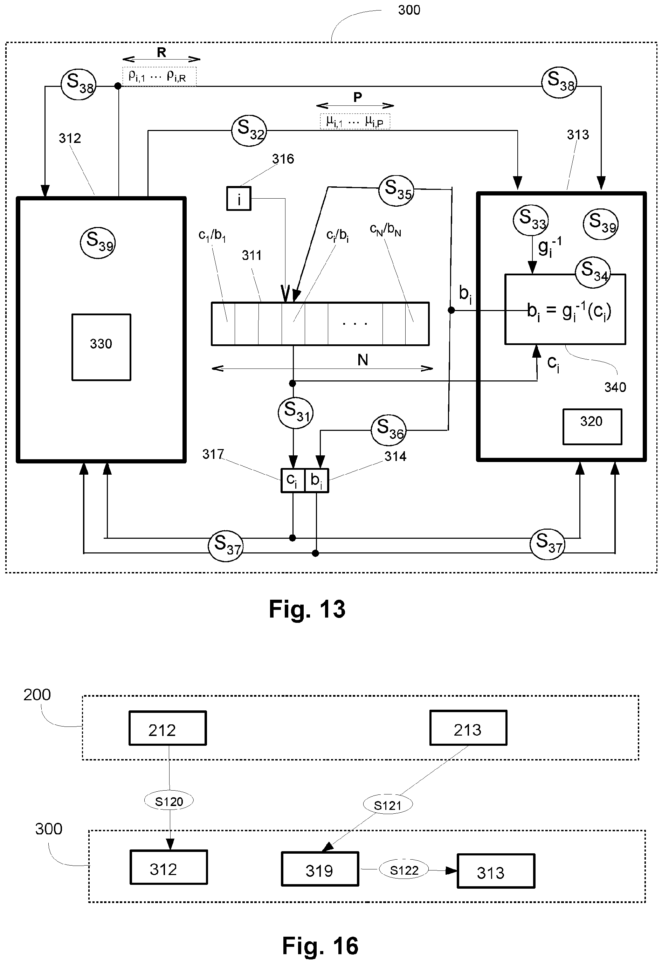

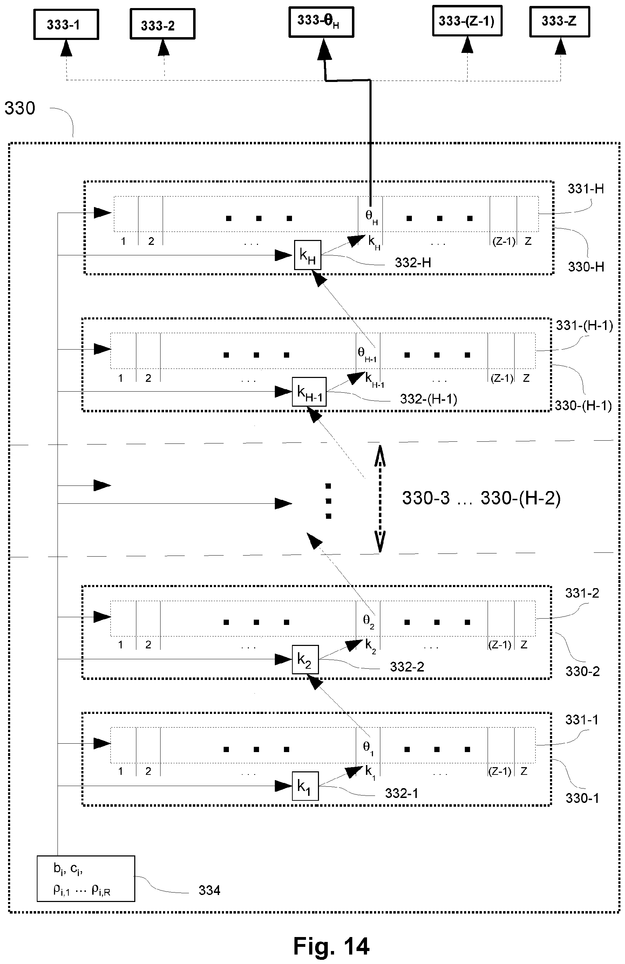

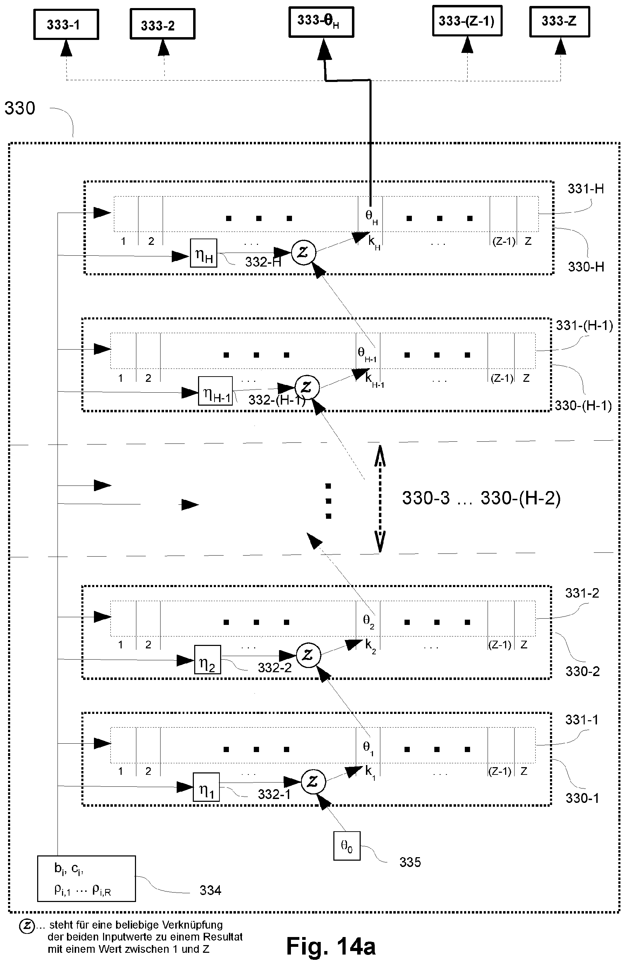

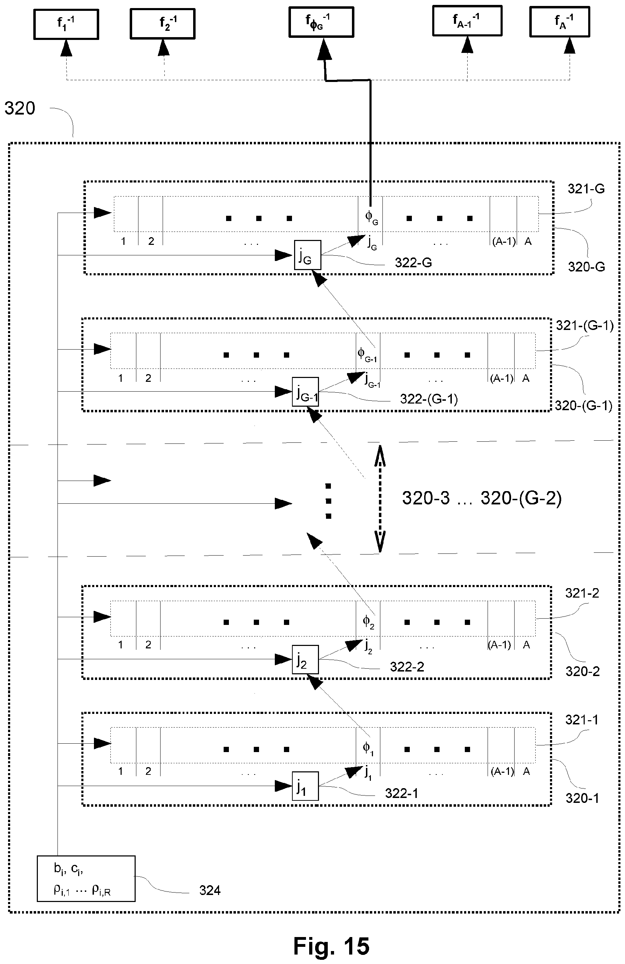

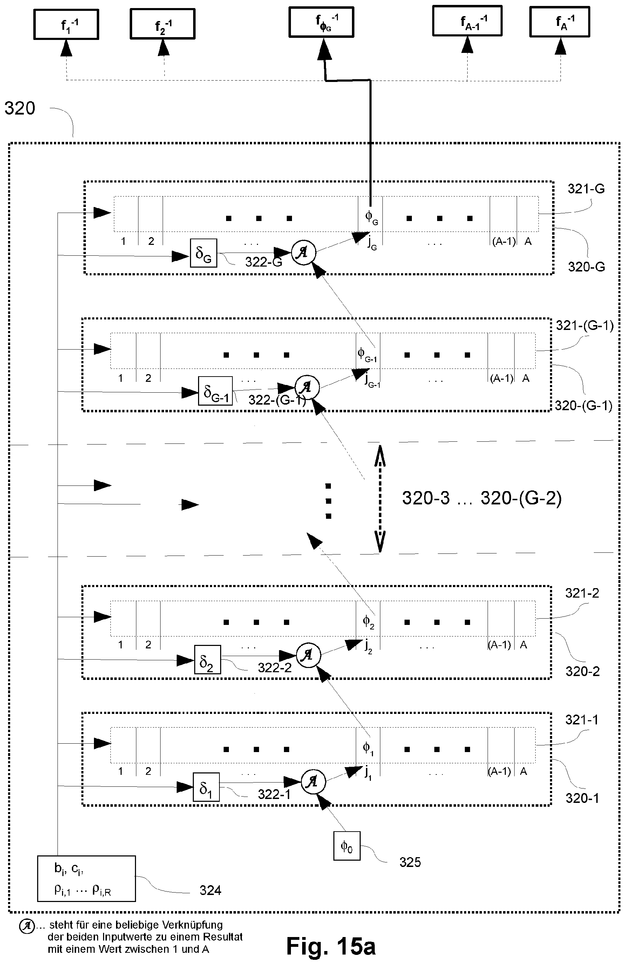

Fig. 1 zeigt eine bevorzugte Ausführungsform einer Verschlüsselungsmaschine. Fig. 2 und 3 zeigen eine mögliche Art der Verschlüsselung sowie Entschlüsselung. Fig. 4 und 5 zeigen eine bevorzugte Art der blockweisen Verschlüsselung sowie Entschlüsselung. Fig. 6 bis 9 zeigen eine bevorzugte Art der blockweisen Verschlüsselung sowie Entschlüsselung mit erhöhter Sicherheit. Fig. 10 zeigt eine bevorzugte Ausführungsform eines Zufallszahlengenerators für eine Verschlüsselungsmaschine. Fig. 10a zeigt eine alternative Ausführungsform eines Zufallszahlengenerators für eine Verschlüsselungsmaschine. Fig. 11 zeigt eine bevorzugte Ausführungsform einer Transformationseinheit für eine Verschlüsselungsmaschine. Fig. 11a zeigt eine alternative Ausführungsform einer Transformationseinheit für eine Verschlüsselungsmaschine. Fig. 12 zeigt eine vorteilhafte Initialisierung einer Verschlüsselungsmaschine. Fig. 13 zeigt eine bevorzugte Ausführungsform einer Entschlüsselungsmaschine. Fig. 14 zeigt eine bevorzugte Ausführungsform eines Zufallszahlengenerators für eine Entschlüsselungsmaschine. Fig. 14a zeigt eine alternative Ausführungsform eines Zufallszahlengenerators für eine Entschlüsselungsmaschine. Fig. 15 zeigt eine bevorzugte Ausführungsform einer Transformationseinheit für eine Entschlüsselungsmaschine. Fig. 15a zeigt eine alternative Ausführungsform einer Transformationseinheit für eine Entschlüsselungsmaschine. Fig. 16 zeigt die Initialisierung einer Entschlüsselungsmaschine.

## Verschlüsselung

In Fig. 1 ist eine Veschlüsselungsmaschine 200 mit einem Datenspeicher gemäß einem **ersten Ausführungsbeispiel** dargestellt. Dieser Datenspeicher 211 wird vor der eigentlichen Verschlüsselung mit den zu verschlüsselnden Rohdaten befüllt. Bei dem vorliegenden Ausführungsbeispiel umfasst der Datenspeicher eine Anzahl von N=4096 Bytes zu je 8 Bit.

Die Verschlüsselungsmaschine 200 umfasst einen Pseudo-Zufallszahlengenerator 212, im Folgenden auch kurz nur Zufallszahlengenerator bezeichnet, zur Erzeugung von Pseudo-Zufallszahlen, im Folgenden als Zufallszahlen $\rho$ bzw $\mu$ bezeichnet. Der Zufallszahlengenerator 212 verfügt über einen Zustandsspeicher sowie einem externen Eingang, mit dem der Zustandsspeicher gefüllt, initialisiert bzw. geändert werden kann. Weiters verfügt der Zufallszahlengenerator 212 über einen Ausgang, an dem er auf Anfrage Zufallszahlen $\rho$ bzw $\mu$ abgibt. Unter Zufallszahlen $\rho$ bzw $\mu$ wird eine Folge von Zahlen verstanden, die grundsätzlich vollständig deterministisch aus dem Zustand des Zufallszahlengenerators 212 und den allenfalls dem Zufallszahlengenerator 212 zugeführten Werten abgeleitet werden kann, aber idealer Weise jemandem, dem die Werte des Zustandsspeichers des Zufallszahlengenerators 212 nicht bekannt sind, keine oder zu wenig Hinweise liefert, um kryptographisch verwertbare Vorhersagen für die nächsten zu erwartenden Zahlen zu erlauben.

Die Verschlüsselungsmaschine 200 umfasst ferner eine Transformationseinheit 213. Die Transformationseinheit 213 wird von einer nicht dargestellten Steuereinheit angesteuert, die die entsprechenden zu verschlüsselnden Bytes aus dem Datenspeicher 211 an der betreffenden Stelle i, ausgewählt durch die Indexeinheit 216, entnimmt und nach der Verschlüsselung wieder an die betreffende Stelle i im Datenspeicher 211 einträgt. Die Transformationseinheit 213 verfügt über einen Eingang, an dem jeweils ein Byte der im Datenspeicher 211 abgespeicherten Daten zur Verschlüsselung anliegt. Am Ausgang der Transformationseinheit 213 liegt nach der Durchführung der Verschlüsselung jeweils das verschlüsselte Byte an. In dem vorliegenden Ausführungsbeispiel wird jeweils ein Byte des Datenspeichers 211 aus diesem ausgelesen und zur Verschlüsselung an die Transformationseinheit 213 übermittelt. Anschließend wird das verschlüsselte Byte an diejenige Stelle des Datenspeichers 211 geschrieben, aus dem das Rohdaten-Byte ausgelesen wurde.

Die Transformationseinheit 213 verfügt über eine Anzahl A von vorgegebenen eineindeutigen Grund-Transformationsvorschriften $f_1$, ..., $f_A$. Diese sind in einem dafür vorgesehenen Speicher abgelegt. Eine bevorzugte Weise der Abspeicherung einer der Grund-Transformationsvorschriften $f_1$, ..., $f_A$ für Bytes mit einer Bitanzahl von B besteht darin, einen Speicher mit $2^B$ Bytes zur Verfügung zu stellen, wobei für jeden der möglichen $2^B$ mittels eines Bytes darstellbaren Werte jeweils ein meist anderer Wert angegeben wird. Um die Eindeutigkeit und damit die Umkehrbarkeit der Grund-Transformationsvorschriften $f_1$, ..., $f_A$ zu gewährleisten, wird jeder Wert, entsprechend einer Zahl zwischen 0 und $2^B$-1, jeweils nur ein einziges Mal in einen der $2^B$ Speicher geschrieben. In dem vorliegenden Ausführungsbeispiel mit B=8 Bits pro Byte wird für jede der Grund-Transformationsvorschriften $f_1$, ..., $f_A$ jeweils ein Speicher von 256 Bytes zur Verfügung gestellt. Die Anwendung der Grund-Transformationsvorschriften $f_1$, ..., $f_A$ auf ein zu transformierendes Byte mit 8 Bits, erfolgt derart, dass als Ergebnis dieses Byte zurückgegeben wird, welches sich an dieser Speicherpositionbefindet, deren Ordinalnummer, beginnend mit 0, dem als Zahl verstandenen, d.h. zwischen 0 und 255 = $2^B$-1, zu transformierenden Byte entspricht.

Prinzipiell besteht die Möglichkeit, Transformationen von Bytes ausschließlich mit den bereitgestellten Grund-Transformationsvorschriften $f_1$, ..., $f_A$ vorzunehmen. Dies hat jedoch den Nachteil, dass die Anzahl der möglichen Transformationen relativ klein ist. So lassen sich bei einem zur Verfügung stehenden Speicher von 1 MB etwa A=4000 Grund-Transformationsvorschriften $f_1$, ..., $f_A$ abspeichern. Der Raum an insgesamt zur Verfügung stehenden Transformationsvorschriften zur Transformation von Bytes mit 8 Bits auf ebenso große Bytes beträgt jedoch $(2^8)! \sim 10^{506}$ Transformationen. Die Grund-Transformationsvorschriften $f_1$, ..., $f_A$ stellen also nur einen extrem kleinen Teilraum aus dem gesamten Raum der möglichen Transformationsvorschriften dar.

Aus diesem Grund verwendet das vorliegende Ausführungsbeispiel Transformationsvorschriften $g_1$, ... , die aus mehreren Vorschriften, ausgewählt aus den Grund-Transformationsvorschriften $f_1$, ..., $f_A$, zusammengesetzt sind. Eine Transformationsvorschrift g kann, beispielsweise als Folge von T Zufallszahlen $\mu_1$ - $\mu_T$ vorgegeben oder durch eine Anzahl von mittels einer später beschriebenen Auswahleinheit ermittelten Zahlenfolge erstellt werden, indem für jede Zahl der Zahlenfolge jeweils eine der Grund-Transformationsvorschriften $f_{\mu 1}$, ..., $f_{\mu T}$ ausgewählt wird und die derart ausgewählten Grund-Transformationsvorschriften $f_{\mu 1}$, ..., $f_{\mu T}$ hintereinander in der Reihenfolge der jeweiligen sie bestimmenden Zahlen auf das zu verschlüsselnde Rohdaten-Byte b angewendet werden.

$$c = g(b) = f_{\mu 1}(f_{\mu 2}( \; ... \; f_{\mu T}(b) \; ... \; ))$$

Um eine für einen Angreifer schwer zu entschlüsselnde Verschlüsselung bereitzustellen, ist es von großem Vorteil, die vorliegende Menge bzw. Gruppe der Transformationsvorschriften möglichst voll zu nutzen. Durch die Verkettung einer Anzahl T der vorliegenden A Grund-Transformationsvorschriften $f_1$, ..., $f_A$ steht eine Anzahl von $A^T$ Transformationsvorschriften $g_1$, ... zur Verfügung. Werden Transformationsvorschriften g durch Verkettung von P=10 Grund-Transformationsvorschriften f erstellt und stehen bei 1MB Speicherplatz 4000 Grund-Transformationsvorschriften f zur Verfügung, so können insgesamt $4000^{10}$ ($\sim 10^{36}$) unterschiedliche Transformationsvorschriften g herangezogen werden, wobei der Aufwand der Verschlüsselung gegenüber der bloßen Verwendung der Grund-Transformationsvorschriften $f_1$, ..., $f_A$ nur T-fach bzw. zehnfach höher ist.

Durch die Auswahl der Anzahl A der Grund-Transformationsvorschriften $f_1$, ..., $f_A$ sowie der Anzahl T der für eine Verkettung verwendeten Grund-Transformationsvorschriften f kann insgesamt eine Abwägung zwischen Speicherbedarf, Rechenzeit und Sicherheit gefunden werden.

Die Ausführung der Grund-Transformationsvorschrift f kann auf unterschiedlichste Art implementiert sein, wobei lediglich die Bijektivität der Grund-Transformationsvorschriften f zu gewährleisten ist. Eine Grund-Transformationsvorschrift f kann beispielsweise derart realisiert werden, dass für jeden möglichen Wert eines Bytes jeweils ein in einem dem Wert zugeordnetem Speicher abgespeicherter Transformationswert zur Verfügung steht. Bei einer Bytelänge von 8 Bit stehen insgesamt $256 = 2^8$ verschiedene mögliche Werte zur Verfügung, sodass für Grund-Transformationsvorschriften f für Bytes mit 8 Bit ein Speicher mit 256 Bytes zu 8 Bit zur Verfügung gestellt wird, in dem jeder der Werte jeweils einmal vorkommt. Die Anwendung der Grund-Transformationsvorschrift f auf einen Wert x erfolgt, indem auf den Speicher bzw. auf dessen Speicherposition zugegriffen wird und der im Speicher an dieser Stelle befindlichen Wert als Resultat f(x) der Anwendung der Grund-Transformationsvorschrift auf den Wert x angesehen wird. Einen Speicher für die bei der Entschlüsselung benötigte Umkehrung oder Inverse $f^{-1}$ der Grund-Transformationsvorschrift f kann auf dieselbe Weise realisiert werden.

Eine alternative Variante zur Anwendung einer Grund-Transformationsvorschrift f auf einen Byte-Wert x besteht darin, den Byte-Wert x mit einer vorgegebenen Maske Mf einer bitweise durchgeführten Exklusiven-Oder--Verknüpfung (XOR-Verknüpfung) zu unterziehen. Hierbei ist lediglich die Maske Mf abzuspeichern, die jeweils dieselbe Länge aufweist wie das jeweilige Byte.

Die Umkehrung $f^{-1}$ einer derartigen Grund-Transformationsvorschrift ist ident der Grund-Transformationsvorschrift ($f^{-1}$=f).

Eine weitere Alternative, vorteilhaft bei Bytes bestehend aus insbesondere mehr als 8 Bits, besteht in der Vertauschung einzelner Bits bei der Anwendung der Grund-Transformationsvorschrift. Hierbei ist jeweils anzugeben, welche der Bits miteinander zu vertauschen sind. Die Umkehrung $f^{-1}$ einer derartigen Grund-Transformationsvorschrift f ist ident der Grund-Transformationsvorschrift ($f^{-1}$=f).

Schließlich kann, insbesondere bei Bytes bestehend aus vielen Bits vorgesehen sein, dass Grund-Transformationsvorschriften f nicht auf alle Bits des Byte angewendet werden, um Speicherplatz zu sparen. In diesem Fall können auch die vorstehend beschriebenen Arten von Grund-Transformationsvorschriften f jeweils auf einer angegebenen Teilbereich des Bytes angewendet werden.

Sämtliche der dargestellten Grund-Transformationsvorschriften können aufgrund ihrer Bijektivität untereinander kombiniert werden, um eine Transformationvorschrift g zu erreichen.

Für eine verbesserte Verschlüsselung kann die Transformationseinheit 213 an Stelle einer der ausgewählten Grund-Transformationsvorschriften $f_1...f_A$ eine Spezial-Transformationsvorschrift h auf das jeweilige zu verschlüsselnde Byte $b_i$ anwenden.

Die Spezial-Transformationsvorschrift h wird bei jeder Verschlüsselung oder nach einer Anzahl von Verschlüsselungen abgeändert. Insbesondere ist die Spezial-Transformationsvorschrift h durch vollständige Angabe aller $2^B$ Werte in einem Speicher mit $2^B$ Speicherplätzen analog zu den Grund-Transformationsvorschriften f festgelegt.

In Abhängigkeit vom zu verschlüsselnden Byte $b_i$, dem verschlüsselten Byte $c_i$ und gegebenenfalls Zufallswerte $\rho_i$ können zur Abänderung der Spezial-Transformationsvorschrift je zwei Werte miteinander vertauscht werden. Die Spezial-Transformationsvorschrift kann z.B. durch Vertauschen von zwei Funktionswerten auf je zwei vorgegebenen Positionen vorgenommen werden. Die erste Position kann durch einen Zählerwert eines fortlaufenden zyklischen Zählers, die zweite Position durch das zu verschlüsselnde Byte $b_i$, das verschlüsselte Byte $c_i$ oder eine Zufallszahl $\rho_i$ festgelegt werden. Die Verwendung der Spezial-Transformationsvorschrift h während der Durchführung der Kodierung erhöht die Anzahl der potentiell verwendeten Transformationsvorschriften g auf $(2^B)! =(2^8)! \sim 10^{506}$, ohne jedoch die Verarbeitungszeit wesentlich zu erhöhen.

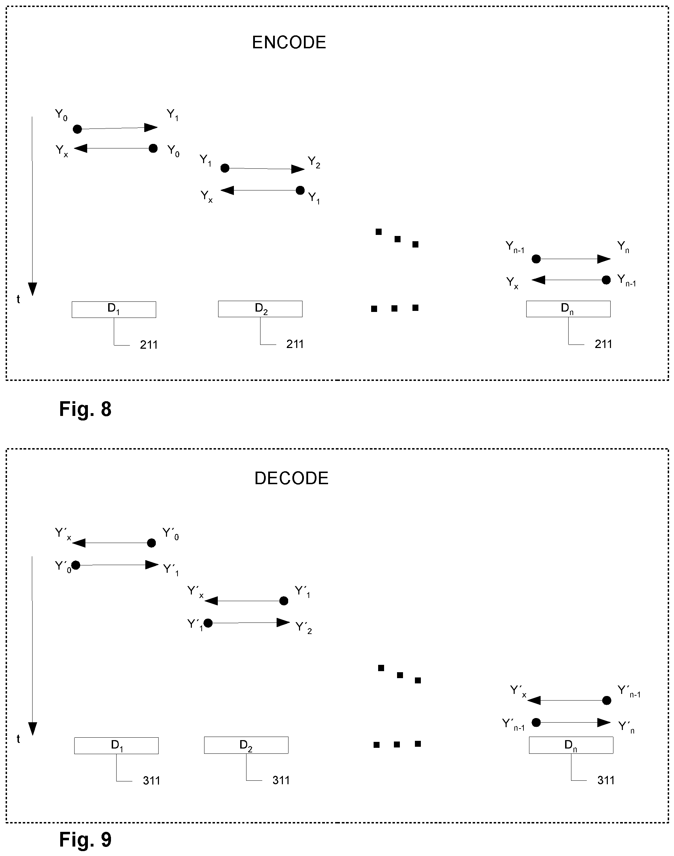

Eine Spezial-Transformationsvorschrift h unterscheidet sich nicht prinzipiell von einer Grund-Transformationsvorschrift. Der Unterschied liegt nur darin, dass diese, sofern ihre Anwendung vorgesehen ist, zusätzlich zu den normalen Grund-Transformationsvorschriften angewendet werden kann. Ihre Anwendung wird durch bestimmte Ereignisse ein und ausgeschaltet. So ein Ereignisse kann zum Beispiel der Wechsel zu einer Vorwärts- oder Rückwärtsbewegung der Kodierung **(siehe Fig. 6, Fig. 8)** sein, oder der Begin der Verarbeitung eines neuen Blockes **(siehe Fig. 4, Fig. 7)** sein. Es kann auch vorgesehen sein, dass die Spezial-Transformationsvorschrift h nur eine beschränkte Anzahl oft modifiziert wird.

Die Abänderung der Spezial-Transformationsvorschrift erfolgt nach Kodierung jedes oder nur bei eines Teiles der zu verschlüsselnden Bytes und kann nach einer Anzahl von Abänderungen überhaupt unterbleiben. Die Spezial-Transformationsvorschrift h bildet einen Teil des inneren Zustandes Y der Transformationseinheit.

Der Zufallszahlengenerator 212 und die Transformationseinheit 213 bieten die Möglichkeit, ihren jeweiligen momentanen inneren Zustand Y abspeichern und auszugeben und diesen zu einem beliebigen späteren Zeitpunkt auf Kommando von außen wiederherzustellen oder zu laden. Mehrere solche innere Zustände können abgespeichert und wiederhergestellt werden.

Der innere Zustand des Zufallszahlengenerators 212 und der Transformationseinheit 213 kann durch von außen vorgegebene Werte modifiziert werden.

Beim **ersten Ausführungsbeispiel ("STREAM")** eines Verschlüsselungsverfahrens werden die folgenden Schritte mit der in in **Fig. 1** dargestellten Verschlüsselungsmaschine 200 vorgenommen.

In einem ersten Schritt wird die Verschlüsselungsmaschine 200 mit dem Passwort $W_0$ initialisiert. Hierbei werden sämtliche internen Speicher des Zufallszahlengenerators 212 sowie der Transformationseinheit 213 in einen durch das Passwort $W_0$ bestimmten Initialzustand $Y_0$ gebracht. Eine bevorzugte Art der Initialisierung ist später mit Bezug auf **Fig. 12** näher dargestellt.

In einem zweiten Schritt wird der Datenspeicher 211 mit Rohdaten befüllt. Diejenige Menge an Rohdaten $b_1, ..., b_N$, die gleichzeitig im Datenspeicher 211 zur Verfügung steht, wird auch als Block oder Datenblock D bezeichnet. Ein Datenzeiger i, mit dem jeweils ein Rohdaten-Byte $b_i$ aus dem Datenspeicher 211 ausgewählt wird, wird auf den ersten Speicherplatz des Datenspeichers 211 gesetzt.

Die folgenden Iterationsschritte $S_{21}...S_{29}$ werden für sämtliche Bytes des Datenspeichers 211, wie in **Fig. 2 und 3** dargestellt. ausgeführt. Der im Speicher 216 abgespeicherte Datenzeiger i zeigt dabei anfangs auf das erste Byte $b_1$ des zu verschlüsselnden Datenblocks D und wird nach Durchführung der Iterationsschritte $S_{21}...S_{29}$ so lange inkrementiert, bis er auf das letzte Byte $b_N$ des zu verschlüsselnden Datenblocks D zeigt.

In einem ersten Iterationsschritt $S_{21}$ wird das Byte des Datenblockes D des jeweiligen vom Wert des Datenzeigers i ausgewählten Speicherplatzes des Datenspeichers 211 in einen Rohdaten-Zwischenspeicher 214 als Rohdaten-Byte $b_i$ kopiert und der Transformationseinheit 213 zugeführt.

In einem zweiten Iterationsschritt $S_{22}$ wird eine Folge von Zufallszahlen $\mu_{i,1}, ..., \mu_{i,P}$ an die Transformationseinheit 213 übermittelt. Für jede Iteration werden separate Zufallszahlen $\mu_{i,1}, ..., \mu_{i,P}$ ermittelt.

Die Transformationseinheit 213 ermittelt im dritten Iterationsschritt $S_{23}$ die Transformationsvorschrift $g_i$ in Abhängigkeit von ihrem internen Zustand und den ermittelten Zufallszahlen $\mu_{i,1}, ..., \mu_{i,p}$.

Das verschlüsselte Byte $c_i$ wird durch Anwendung der Transformationsvorschrift $g_i$ auf das zu verschlüsselnde Byte $b_i$ in einem vierten Iterationsschritt $S_{24}$ gemäß $c_i = g_i(b_i)$ ermittelt. Im vorliegenden Fall wird die Transformationsvorschrift $g_i$ durch Zusammensetzung, wie vorstehend beschrieben ermittelt, wobei die Auswahl von T Vorschriften aus den A Grund-Transformationsvorschriften $f_1, ..., f_A$ für die Zusammensetzung aufgrund der angegebenen Zufallszahlen $\mu_{i,1}, ..., \mu_{i,p}$ erfolgt.

In einem fünften Iterationsschritt S25 wird der Inhalt des jeweiligen vom Datenzeiger i ausgewählten Speicherplatzes des Datenspeichers 211 mit dem verschlüsselten Byte $c_i$ überschrieben. Anschließend wird in einem sechsten Iterationsschritt $S_{26}$ das verschlüsselte Byte $c_i$ in einen eigenen Schlüsseldaten-Zwischenspeicher 217 als verschlüsseltes Byte $c_i$ geschrieben.

In einem siebten Iterationsschritt $S_{27}$ werden das Rohdaten-Bytes $b_i$ und das verschlüsselte Byte $c_i$ an den Zufallszahlengenerator 212 und die Transformationseinheit 213 für die künftige Zustandsänderungen dieser übermittelt.

In einem achten Iterationsschritt $S_{28}$ werden weitere vom Zufallszahlengenerator 212 erzeugte Zufallszahlen $\rho_{i,1} ... \rho_{i,R}$ an den Zufallszahlengenerator 212 zurück und an die Transformationseinheit 213 für die künftige Zustandsänderungen übermittelt.

In einem neunten Iterationsschritt $S_{29}$ wird der innere Zustand des Zufallszahlengenerators 212 und der Transformationeinheit 213 mit Hilfe der in den Iterationsschritten $S_{27}$ und $S_{28}$ übermittelten Bytes bzw Zufallszahlen abgeändert.

Insgesamt ist es beim Verschlüsseln möglich aber nicht zwingend erforderlich, bei der Durchführung des neunten Iterationsschritts $S_{29}$ auch die Grund-Transformationsvorschriften $f_1, ..., f_A$ zu ändern, beispielsweise kann bei jeder Durchführung des neunten Iterationsschritts $S_{29}$ jeweils eine der Grund-Transformationsvorschriften $f_x$ abgeändert werden, beispielsweise bei Grund-Transformationsvorschriften, die durch vollständige Aufzählung ihrer Funktionswerte vorgegeben wurden, durch Vertauschen zweier Funktionswerte, i.e. $f_x(b_y) \leftrightarrow f_x(b_z)$. Dadurch wird die Anzahl der möglichen Transformationsvorschriften von ca $10^{36}$ nochmals auf ca $10^{506}$ verschiedene Transformationsvorschriften vergrößert, und macht so eine unbefugte Entschlüsselung weniger wahrscheinlich.

Sofern vorgesehen, kann die Abänderung der Spezial-Transformationsvorschift h im Rahmen des neunten Iterationsschrittes $S_{29}$ vorgenommen werden.

Je nach Fortschritt der Verschlüsselung entstehen bei der Transformationseinheit 213 sowie beim Zufallszahlengenerator 212 in Abhängigkeit von sowohl den bisherig verarbeiteten Rohdatenbytes $b_i$, den verschlüsselten Bytes $c_i$ und den vom Zufallszahlengenerator 12 gelieferten Zufallszahlen $\rho_{i,1} ... \rho_{i,R}$ unterschiedliche, innere Zustände.

Die Auswahl der Transformationsvorschrift $g_i$ ist daher sowohl direkt abhängig von dem inneren Zustand der Transformationeinheit 213 zum Zeitpunkt der Verschlüsselung des Rohdatenbytes $b_i$ als auch indirekt durch die von dem Zufallszahlengenerator 212 zum gleichen Zeitpunkt bereitgestellten Zufallszahlen $\rho_{i,1} ... \rho_{i,R}$, $\mu_{i,1}, ..., \mu_{i,P}$, die wiederum auch von dem inneren Zustand des Zufallszahlengenerators 212 in Abhängigkeit von den bis dahin verarbeiteten Rohdatenbytes und verschlüsselten Bytes unterschiedlich erzeugt werden.

Die Auswahl der Transformationsvorschrift $g_i$ ist daher abhängig von den Werten und der Reihenfolge aller $b_1$ bis $b_{i-1}$. Nach der Verschlüsselung wird der Wert des Zeigers i inkrementiert.

Nachdem die im Datenspeicher 211 abgelegten Rohdaten-Bytes $b_1, b_N$ allesamt verschlüsselt sind, können diese für die weitere Verwendung, insbesondere für die Übertragung an einen Empfänger, zur Verfügung gehalten werden. Nach der allfälligen weiteren Verarbeitung der Daten im Datenspeicher 211 wird dieser eventuell mit weiteren zu verschlüsselnden Daten wieder aufgefüllt, die analog wie oben verschlüsselt werden.

Es besteht die Möglichkeit, den Datenspeicher 211 vor der Verarbeitung mit pseudo und/oder echten Zufallsdaten zu ergänzen bzw zu erweitern.

Der innere Zustand sowohl des Zufallszahlengenerators 212 als auch der Transformationseinheit 213 ist am Beginn der neuerlichen Verarbeitung von weiteren Daten im Datenspeichers 211 gleich wie am Ende der vorherigen Verarbeitung der Daten des Datenspeichers 211.

Ein Vorgehen gemäß einem **zweiten Ausführungsbeispiel ("BLOCK"),** dargestellt in **Fig. 4 und 5,** zeigt eine Verbesserung, mit der die Abhängigkeiten der einzelnen Bytes $c_1, ... c_N$ der verschlüsselten Datenfolge von den Bytes $b_1, ... b_N$ der Rohdaten-Datenfolge erhöht wird. Bei diesem Vorgehen wird das vorstehend dargestellte Verfahren gemäß dem ersten Ausführungsbeispiel verwendet. Die für die Durchführung des Verschlüsselungsverfahrens verwendete Verschlüsselungsmaschine entspricht der Verschlüsselungsmaschine 200 des ersten Ausführungsbeispiels, das in **Fig. 1** näher dargestellt ist, wobei die Unterschiede im Folgenden näher erläutert werden.

Vor dem Beginn der Iterationsschritte $S_{21}...S_{29}$ wird in einem Vorbereitungsschritt $S_{20,A}$ der gesamte innere Zustand der Verschlüsselungsmaschine 200, d.h. der innere Zustand des Zufallszahlengenerators 212, sowie gegebenenfalls der innere Zustand der Transformationseinheit 213, in einem Zustandsspeicher abgespeichert. Dieser Zustand wird als Initialzustand $Y_0$ bezeichnet. Anschließend wird die Verschlüsselung vom ersten bis zum letzten Byte gemäß den Iterationsschritten $S_{21}$ bis $S_{29}$ durchgeführt. Nach der Verschlüsselung des gesamten Blocks, d.h. aller im Datenspeicher 211 befindlichen Rohdaten $b_1...b_N$, wird in einem Rücksetzschritt $S_{20,M}$ der Zufallszahlengenerator 212 sowie gegebenenfalls die Transformationseinheit 213 auf ihren jeweiligen Initialzustand $Y_0$ zurückgesetzt.

Daran anschließend wird eine Verschlüsselung gemäß den vorstehend beschriebenen Iterationsschritten $S_{21}...S_{29}$ erneut durchgeführt, wobei der Wert des Datenzeigers i anfangs auf die letzte Position N des Datenspeichers 211 zeigt und entgegen der zuvor durchlaufenen Richtung geführt wird, d.h. in diesem Fall dekrementiert wird, und dadurch die einzelnen Bytes des Datenspeichers 211 in umgekehrter Reihenfolge behandelt werden.

Anschließend werden die Daten in einem Ausleseschritt $S_{20,Z}$ aus dem Speicher gelesen und gegebenenfalls durch einen neuen Datenblock ersetzt.

Aufgrund dieses Vorgehens ist gewährleistet, dass der Wert jedes verschlüsselten Bytes $c_i$ vom Wert und Position sämtlicher Rohdaten-Bytes $b_i$ abhängig ist und eine Änderung eines beliebigen Rohdaten-Bytes $b_i$ Auswirkungen auf die Verschlüsselung aller anderen Bytes des Datenspeichers 211 hat. Jedes zu verschlüsselnde Rohdaten-Byte $b_i$ wird mit dem Vorgehen darüber hinaus zweifach verschlüsselt.

Die Verschlüsselung der im Datenspeicher 211 befindlichen Rohdaten kann gegebenenfalls auch mehrfach, wie in **Fig. 6** dargestellt, vorgenommen werden, wobei jeweils abwechselnd in der vorgegebenen Datenrichtung und anschließend entgegen der vorgegebenen Datenrichtung verschlüsselt wird. In einem solchen Fall wird die Verschlüsselungsmaschine 200 jeweils nach jedem Verschlüsselungsdurchlauf, d.h. nachdem das letzte Byte $b_1$ oder $b_N$ in oder entgegen der Datenrichtung verschlüsselt wurde, in den vorab abgespeicherten inneren Zustand $Y_0$ gesetzt.

Nach der oben beschriebenen Verarbeitung der Daten des Datenspeichers 211 und einer allfälligen weiteren Verwendung der Daten, werden der Zufallszahlengenerator 212 und die Transformationseinheit 213 wieder in den jeweiligen Initialzustand $Y_0$ gesetzt. Weitere eventuell verbliebene Rohdaten werden in den Datenspeicher 211 übertragen und die Verarbeitung mit den neuen Rohdaten beginnt von neuem. Es besteht die Möglichkeit, den Datenspeicher 211 vor der Verarbeitung mit Zufallsdaten zu ergänzen bzw zu erweitern.

Bei einem **dritten Ausführungsbeispiel ("CHAINED-BLOCK"),** dargestellt in **Fig. 7 und 8,** wird der Datenspeicher 211 bei der Verarbeitung der erstmals geladenen Daten wie bei dem zweiten Ausführungsbeispiel verarbeitet. Die Verarbeitung von verbliebenen und neu in den Datenspeicher 211 geladenen Daten unterscheidet sich von der Verarbeitung gemäß dem zweiten Ausführungsbeispiel dadurch, dass für den Zufallszahlengenerator 212 und die Transformationseinheit 213 die jeweiligen Initialzustände in den Verarbeitungsschritten $S_{20,B}$, $S_{20,C}$, $S_{20,Y}$ unterschiedlich zu dem zweiten Ausführungsbeispiel festgelegt werden. Bei diesen neuen Initialzuständen handelt es sich jeweils um die bei der vorhergehenden Verarbeitung von Daten erreichten inneren Zustände $Y_1, Y_2,...$ der Verschlüsselungsmaschine 200.

Diese neuen Initialzustände $Y_1, Y_2,....$ (**Fig. 8**) sind die inneren Zustände von Zufallszahlengenerator 212 und Transformationseinheit 213 nach Verarbeitung des Bytes an der letzten Stelle N im Datenspeicher 211 bei einer der Vorwärtsverarbeitungen der vorhergehenden Daten. Alternativ dazu kann auch der innere Zustand nach Verarbeitung des Bytes, an der Stelle 1 im Datenspeicher 211 bei einer der Rückwärtsverarbeitungen dafür verwendet werden.

Für eine Echtzeit-Datenübertragung weisen der Datenspeicher 211 und die Datenblöcke nur eine sehr geringe Anzahl von Rohdaten-Bytes $b_i$, eventuell sogar nur ein einziges Rohdaten-Byte, auf. Eine Verschlüsselung erfolgt byteweise, wobei nach der Verschlüsselung eines Datenblocks D - und damit des gesamten Datenspeichers 211 - ein neuer Datenblock D in den Datenspeicher 211 geladen wird. Eine solche Vorgehensweise eignet sich besonders gut zur laufenden Verschlüsselung von Daten, die als Datenstrom vorliegen und die gleichsam in Echtzeit weitergeleitet werden. Allenfalls besteht auch die Möglichkeit, wie für das zweite Ausführungsbeispiel beschrieben, den Datenstrom in sehr kleine Blöcke D mit nur wenigen, insbesondere weniger als 10 Bytes zu unterteilen und diese Blöcke gemäß dem zweiten oder dritten Ausführungsbeispiel zu verschlüsseln und als Block-Datenstrom zu übertragen. Sofern die Anzahl der Bytes pro Datenblock gering gehalten werden kann, kann die Verschlüsselung auch zur Echtzeit-Datenübertragung verwendet werden. Hierbei ermöglicht eine Auswahl der Größe der Datenblöcke, eine Abwägung zwischen Echtzeitfähigkeit bzw. Verzögerung und Sicherheit zu treffen.

## Zufallzahlensgenerator und Auswahleinheit

Grundsätzlich können sehr unterschiedliche deterministische Zufallszahlengeneratoren 212 verwendet werden. Eine Verbesserung, die für alle vorstehend dargestellten Ausführungsbeispiele verwendet werden kann, verwendet einen in **Fig. 10** dargestellten optimierten Zufallszahlengenerator 212 mit einer Auswahleinheit 230.

Im vorliegenden Fall ist der Zufallszahlengenerator 212 aus einer Anzahl Z von einfachen, deterministischen Teil-Zufallszahlengeneratoren 233-1 bis 233-Z zusammengesetzt, die - wie später noch beschrieben wird - abhängig vom inneren Zustand der Auswahleinheit 230 des Zufallszahlengenerartors 212 ausgewählt werden. Die Anzahl Z der Teil-Zufallszahlengeneratoren 233 ist vorab nicht vorgegeben und kann aufgrund eines Passwortes W bestimmt werden. Darüber hinaus ist es auch möglich, unterschiedliche Typen von Teil-Zufallszahlengeneratoren 233 vorab vorzugeben. Weiters kann auch vorgegeben werden, mit welcher Wahrscheinlichkeit die einzelnen Teil-Zufallszahlengeneratoren 233 aus den gegebenen Typen von Teil-Zufallszahlengeneratoren ausgewählt werden. Das Passwort W bestimmt dann mit Hilfe eines bereits vorhandenen Zufallszahlengenerators 212 die Anzahl Z der Teil-Zufallszahlengeneratoren 233, die Typen der Teil-Zufallszahlengeneratoren 232 und die Reihenfolge der Teilzufallszahlen 232 in der diese für den Aufbau des Zufallszahlengenerators 212 verwendet werden.

Die Initialisierung der Teil-Zufallszahlengeneratoren 233 erfolgt ebenso durch das Passwort W im Zusammenhang mit dem vorgegebenem Zufallszahlengenerator und wird später näher dargestellt.

Der Zufallszahlengenerator 212 weist eine Auswahleinheit 230 auf. Die Auswahleinheit 230 des Zufallszahlengenerators 212 dient zur Auswahl eines der Teil-Zufallszahlengeneratoren 233-1 bis 233-Z. Dessen Werte werden dann am Ausgang des Zufallszahlengenerators 212 bereitgehalten. Die Auswahleinheit 230 verfügt über eine Anzahl H von Auswahlregistern 231-1...231-H mit jeweils einer vorgegebenen Anzahl Z von Einzelregistern. Die Gesamtheit der Einzelregister eines Auswahlregisters 231-1...231-H enthält eine Permutation der Zahlen 1 bis Z.

Dem ersten der Auswahlregister 231-1 ist eine erste Adressiereinheit 232-1 vorgeschaltet, die einen ersten Zeiger $k_1$ enthält. Dieser erste Zeiger $k_1$ wird nach jeder Auswahl automatisch zyklisch inkrementiert oder dekrementiert. Der erste Zeiger $k_1$ bezeichnet bzw. referenziert eine Speicherposition im ersten Auswahlregister 231-1.

In einem weiteren Schritt wird die an der vom ersten Zeiger $k_1$ ausgewählte Speicherposition im ersten Auswahlregister 231-1 befindliche Zahl $\theta_1$ ermittelt. Diese Zahl $\theta_1$ wird in eine zweite Adressiereinheit 232-2 als zweiter Zeiger $k_2$ eingetragen oder zu diesem zweiten Zeiger $k_2$ hinzugezählt oder der zweite Zeiger $k_2$ wird durch eine sonstige Operation auf Grundlage der Zahl $\theta_1$ und seinem vorherigen Wert ermittelt. Der Wert des zweiten Zeigers $k_2$, der stets im Bereich von 1 bis Z liegt, wird zur Adressierung einer Speicherposition $k_2$ im zweiten Auswahlregister 231-2 herangezogen.

Je ein Auswahlregister 231 und je eine Auswahleinheit 232 werden jeweils zu einer Auswahlstufe 230-1...230-H zusammengefasst. Analog zur Auswahlstufe 230-1 werden auch die folgenden Auswahlstufen bis zur Auswahlstufe 230-H durchlaufen. Der Registerwert $\theta_H$ der letzten Auswahlstufe 230-H wählt dann den Teil-Zufallszahlengenerator 233- $\theta_H$ aus.

Grundsätzlich kann eine große Anzahl an Auswahlstufen 230-1...230-H in der Auswahleinheit 230 vorgesehen werden, wobei eine größere Anzahl von Auswahlstufen 230-1...230-H zu einer stärkeren Ressourcenbelastung führt und letztlich in einer erhöhten Datensicherheit resultiert, jedoch die Ausführungszeit der Verschlüsselung erhöht. Durch die Auswahl der Anzahl der Auswahlstufen 230-1...230-H kann somit eine Abwägung zwischen der Rechenleistung und Datensicherheit getroffen werden.

Im vorliegenden Fall sind insgesamt zehn H=10 Auswahlstufen 230-1...230-H vorgesehen. Für die Auswahlregister 231 und Adressiereinheiten 232 wird jeweils die an der vom jeweiligen Zeiger $k_1...k_H$ in der Adressiereinheit 231 ausgewählten Speicherposition im jeweiligen Auswahlregister 231 befindliche Zahl ermittelt und in den jeweils nächsten Zeiger k in der nächsten Adressiereinheit 231 eingetragen oder zu diesem hinzugezählt oder durch eine sonstige Operation mit den vorherigen Wert ermittelt. Der Wert des jeweils nächsten Zeigers k, dieser liegt stets im Bereich von 1 bis Z, wird zur Adressierung einer Speicherposition im jeweils nächsten Auswahlregister 231 herangezogen. Der vom jeweiligen Zeiger adressierte Wert $\theta_H$ des letzten Auswahlregisters 231-H wird zur Auswahl eines der Teil-Zufallszahlengeneratoren 233-1...233-Z herangezogen.

Die einzelnen Teil-Zufallszahlengeneratoren 233-1 ... 233-Z haben einen gemeinsamen inneren Zustand, wobei im Normalfall jeder der Teil-Zufallszahlengeneratoren 233-1 ... 233-Z jeweils über einen ihm zugewiesenen Teilbereich des inneren Zustandes verfügt. Es ist auch möglich, dass einzelne der Teil-Zufallszahlengeneratoren 233-1...233-Z auf die Teilbereiche der übrigen Teil-Zufallszahlengeneratoren 233-1...233-Z Lesezugriff oder gegebenenfalls auch Schreibzugriff haben.

In **Fig. 10a** ist eine alternative Ausführungsform eines Zufallszahlengenerators für eine Verschlüsselungsmaschine dargestellt. Im Folgenden werden lediglich die Unterschiede zwischen dem Zufallsgenerator der **Fig. 10** und zu dem Zufallsgenerator der **Fig. 10a** dargestellt.

Der in **Fig. 10a** dargestellte Zufallszahlengenerator umfasst weitere Register $\eta_1$, ..., $\eta_H$, wobei jeder Stufe jeweils ein solches weiteres Register $\eta$ zugeordnet ist. Diese weiteren Register $\eta$ können im Rahmen der noch zu beschreibenden Aktualisierung zwischen einzelnen Verschlüsselungsvorgängen abgeändert und von außen beschrieben werden, insbesondere in Abhängigkeit von den erstellten Zufallszahlen und Verschlüsselungsergebnissen. Im Zuge der Auswahl des jeweiligen Zufallszahlengenerators bleibt der Inhalt der Register $\eta_1$, ..., $\eta_H$ unverändert. Der Wert $\theta$ des jeweiligen Auswahlregisters 231 der jeweils vorangehenden Stufe 230 und der Wert des jeweiligen weiteren Registers werden einer Rechenoperation $\mathcal{Z}$ zugeführt und hieraus der Zeigerwert ermittelt, der für den Zugriff auf das Auswahlregister 231 der jeweiligen Stufe verwendet wird.

Zur Bestimmung des jeweiligen Werts $\theta_0$ für die erste Auswahlstufe 230-1 wird ein erster Zeiger $\theta_0$ herangezogen, der nach jeder Auswahl automatisch zyklisch inkrementiert oder dekrementiert wird und dessen Ergebnis der Rechenoperation $\mathcal{Z}$ zugeführt wird.

Eine Aktualisierung der Auswahleinheit kann bei der in **Fig. 10a** dargestellten Ausführungsform beinhalten, dass lediglich jeweils eines der Register $\eta_1$, ..., $\eta_H$ nach einer oder nach einer Anzahl von vorgenommenen Bildungen von Zufallszahlen abgeändert wird. Das zu modifizierende Register $\eta$ wird vorteilhafterweise jeweils nach einer oder einer Anzahl von Zufallszahlenanfragen zyklisch gewechselt.

Bei allen Ausführungsformen kann vorgesehen sein, dass nicht alle erstellten Zufallszahlen für die Verschlüsselung herangezogen werden, sondern dass die Möglichkeit besteht, abhängig vom Wert eines vorgegebenen Registers, insbesondere zwischen 0 und 5, jeweils eine Anzahl von Zufallszahlen zu verwerfen. Der Wert des Registers kann auch in Abhängigkeit der verschlüsselten Werte und/oder der entschlüsselten Werte und/oder der bereits ermittelten Zufallszahlen abgeändert werden.

## Transformationseinheit

Eine analog zu 230 aufgebaute Auswahleinheit 220 dient zur Auswahl einer Grundtransformation f aus den gegebenen Grundtransformationen $f_1$ bis $f_A$.

**Fig. 11** zeigt die Auswahleinheit 220 zur Auswahl von Grundtransformationsvorschriften f. Für die Zusammensetzung der Transformationsvorschrift g ist eine Anzahl von A Grund-Transformationsvorschrift $f_1$...$f_A$ vorgegeben, die - wie später noch beschrieben wird - abhängig vom inneren Zustand des Zufallszahlengenerators 212 gebildet und ausgewählt werden. Die Anzahl der Grund-Transformationsvorschrift $f_1$...$f_A$ sowie deren Inhalt kann aufgrund des Passwortes $W_0$ bestimmt werden. Darüber hinaus ist es auch möglich, unterschiedliche Typen von Grund-Transformationsvorschriften $f_1$...$f_A$ vorab vorzugeben.

Die Transformationseinheit 213 weist eine Auswahleinheit 220 auf. Die Auswahleinheit 220 dient zur Auswahl einer der Grund-Transformationsvorschriften $f_1$...$f_A$. Die Auswahleinheit 220 der Transformationeinheit 213 wird in **Fig. 11** näher dargestellt. Sie verfügt über eine Anzahl G von Auswahlregistern 221-1...221-G mit jeweils einer vorgegebenen Anzahl A von Einzelregistern. Die Gesamtheit der Einzelregister eines Auswahlregisters 221-1...221-G enthält eine Permutation der Zahlen 1 bis A.

Dem ersten der Auswahlregister 221-1 ist eine erste Adressiereinheit 222-1 vorgeschaltet, die einen ersten Zeiger $j_1$ enthält. Dieser erste Zeiger $j_1$ wird nach jeder Auswahl automatisch inkrementiert oder dekrementiert. Der erste Zeiger $j_1$ bezeichnet bzw. referenziert eine Speicherposition im ersten Auswahlregister 221-1.

In einem weiteren Schritt wird die an der vom ersten Zeiger $j_1$ ausgewählten Speicherposition im ersten Auswahlregister 221-1 befindliche Zahl $\Phi_1$ ermittelt. Diese Zahl $\Phi_1$ wird in eine zweite Adressiereinheit 222-2 als zweiter Zeiger $j_2$ eingetragen oder zu diesem zweiten Zeiger $j_2$ hinzugezählt oder der zweite Zeiger $j_2$ wird durch eine sonstige Operation auf Grundlage der Zahl $\Phi_1$ und seinem vorherigen Wert ermittelt. Der Wert des zweiten Zeigers $j_2$, der stets im Bereich von 1 bis A liegt, wird zur Adressierung einer Speicherposition $j_2$ im zweiten Auswahlregister 221-2 herangezogen. Analog zur Auswahleinheit des Zufallszahlengenerators werden auch hier je ein Auswahlregister 221 und je eine Auswahleinheit 222 jeweils zu einer Auswahlstufe 220-1...220-G zusammengefasst. Analog zur Auswahlstufe 220-1 werden auch die folgenden Auswahlstufen bis zur Auswahlstufe 220-G durchlaufen. Der Registerwert $\Phi_G$ der letzten Auswahlstufe 220-G wählt dann die Grundtransformation $\Phi_G$ aus.

Grundsätzlich kann eine große Anzahl an Auswahlstufen in der Auswahleinheit 220 vorgesehen werden, wobei eine größere Anzahl von Auswahlstufen 220-1...220-G zu einer stärkeren Ressourcenbelastung führt und letztlich in einer erhöhten Datensicherheit resultiert, jedoch die Ausführungszeit der Verschlüsselung erhöht. Durch die Auswahl der Anzahl G der Auswahlstufen 220-1...220-G kann somit eine Abwägung zwischen der Rechenleistung und Datensicherheit getroffen werden.

Im vorliegenden Fall sind insgesamt zehn G=10 Auswahlstufen 220-1...220-G vorgesehen. Für die Auswahlregister 221 und Adressiereinheiten 222 wird jeweils die an der vom jeweiligen Zeiger $j_1...j_G$ in der Adressiereinheit 221 ausgewählten Speicherposition im jeweiligen Auswahlregister 221 befindliche Zahl ermittelt und in den jeweils nächsten Zeiger j in der nächsten Adressiereinheit 221 eingetragen oder zu diesem hinzugezählt oder durch eine sonstige arithmetische Operation ermittelt. Der Wert des jeweils nächsten Zeigers j wird zur Adressierung einer Speicherposition im jeweils nächsten Auswahlregister 221 herangezogen. Der vom jeweiligen Zeiger adressierte Wert $\Phi_G$ des letzten Auswahlregisters 221-G wird zur Auswahl einer Grund-Transformationsvorschrift $f_1...f_A$ herangezogen. Die Länge des Auswahlregisters 221 entspricht normalerweise der Anzahl der verwendeten Grund-Transformationsvorschriften $f_1... f_A$.

Die Auswahleinheit 220, 230 des Zufallszahlengenerators 212 und der Transformationseinheit 213 sind sehr ähnlich aufgebaut. Die folgenden Verbesserungen werden für beide Auswahleinheiten 220, 230 gemeinsam beschrieben, können aber für jede der Auswahleinheiten 220, 230 separat vorgenommen werden.

Durch das vorstehend genannte Vorgehen wird lediglich eine Auswahl einer Grund-Transformationsvorschrift $f_1...f_A$ oder des Teil-Zufallszahlengenerators 233-1 ...233-Z getätigt, die von den einzelnen zu verschlüsselnden Rohdaten-Bytes $b_i$ vollkommen unabhängig ist und daher eine leichtere Rekonstruktion ermöglicht.

Die vorliegende Verbesserung sieht nunmehr eine von der Aktualisierungseinheit vorgenommene Aktualisierung der Auswahleinheit 220, 230 vor, wobei abhängig vom jeweiligen zu verschlüsselnden Byte $b_i$ und/oder vom jeweils verschlüsselten Byte $c_i$ und/oder von bereitgestellten Zufallszahlen $\rho_1... \rho_R$ der Wert eines der Zeiger $j_1...j_G$, $k_1...k_H$ in den Adressiereinheiten 222, 232 abgeändert wird. Hierbei wird der Zahlenwert der Adressiereinheit 222, 232 durch eine arithmetische Funktion aus dem alten Zahlenwert der Adressiereinheit 222, 232 und einem externen, über einen Eingang 224, 234 zur Verfügung gestellten Wert, z.B. dem Zahlenwert $b_i$ des unverschlüsselten Bytes, dem Zahlenwert $c_i$ des verschlüsselten Bytes oder den bereitgestellten Zufallszahlen $\rho_i$, neu berechnet. Sofern der sich daraus ergebende Wert die Länge des Auswahlregisters 221, 231 übersteigt, wird diese Länge entsprechend oft vom Zeigerwert abgezogen, dass der Zeiger j, k zwischen 1 und A bzw. Z liegt. Bei jedem Verschlüsselungsschritt wird jeweils der nächste Zeiger j, k abgeändert und für den Fall, dass im vorherigen Schritt der letzte G-te oder H-te Zeiger abgeändert wurde wird im nächsten Schritt wiederum der erste Zeiger j, k abgeändert.

Alternativ oder zusätzlich ist es möglich, dass abhängig vom jeweiligen zu verschlüsselnden Byte $b_i$ und/oder vom jeweils verschlüsselten Byte $c_i$ und/oder von bereitgestellten Zufallszahlen $\rho$ zwei Einzelregister eines der Auswahlregister 221, 231 abgeändert werden und zwar durch Vertauschung der in ihnen enthaltenen Werte. Die Auswahl dieser zwei Einzelregister ist auch abhängig von der Anzahl der bereits in diesem Auswahlregister 221, 231 durchgeführten Vertauschungen. Bei jedem Verschlüsselungsschritt wird eine Anzahl von Vertauschung durchgeführt. Nachdem eine bestimmte Anzahl von Vertauschungen in einem Auswahlregister 221, 231 durchgeführt wurden, wird dann zum nächsten Auswahlregister 221, 231 gewechselt. Für den Fall, dass im vorherigen Schritt das letzte Auswahlregister 221, 231 abgeändert wurde, wird dann wieder zum ersten Auswahlregister 221, 231 gewechselt.

Zur Auswahl einer Mehrzahl von Grund-Transformationsvorschriften $f_1$ , ..., $f_A$ oder einer Mehrzahl von Teil-Zufallszahlengeneratoren 233-1...233-Z wird jeweils der erste Zeiger $j_1,k_1$ nach vorgegebenen Kriterien abgeändert, insbesondere erhöht, verringert, inkrementiert oder dekrementiert, und die vorstehend genannten Schritte zur Adressierung der einzelnen Auswahlregister 221, 231 erneut durchgeführt, wobei jeweils diejenige Grund-Transformationsvorschrift $f_1$ , ..., $f_A$ für die Bildung der Transformationsvorschriften oder die Zufallszahl desjenigen Teil-Zufallszahlengenerators 233 herangezogen wird, deren Ordnungszahl dem Zahlenwert des im letzten Auswahlregister 221-G, 231-H referenzierten Wertes entspricht. Die Anzahl der Einzelregister eines Auswahlregisters 221, 231 entspricht der Anzahl A der zur Verfügung stehenden Grund-Transformationsvorschriften $f_1$ , ..., $f_A$ bzw. der Anzahl Z der zur Verfügung stehenden Teil-Zufallszahlengeneratoren 233.

Bevorzugt besteht auch die Möglichkeit, dass der Auswahleinheit 230 des Zufallszahlengenerators 212 oder der Auswahleinheit 220 der Transformationseinheit 213 jeweils weitere vom Zufallszahlengenerator 212 erstellte Zufallszahlen $\rho$ zugeführt werden und dass mittels dieser Zufallszahlen $\rho$ die Werte der jeweiligen Auswahlregister 221, 231 neu gesetzt bzw. modifiziert oder die Zeiger in den Adressiereinheiten 222, 232 überschrieben bzw. Modifiziert werden.

Bei der Ermittlung von Zufallszahlen $\rho$ durch den Zufallszahlengenerator 212 kann eine vorab festgelegte Anzahl von diesem erstellten Zufallszahlen herangezogen werden.

Mit einer solchen Auswahleinheit 220, 230 wird es vermieden, dass eine in einem Schritt vorgenommene Zustandsänderung durch eine in einem noch folgenden Schritt vorgenommene Zustandsänderung rückgängig gemacht wird.

Auch wird vermieden, dass Klartexte, die einander sehr ähnlich sind und einander nur in wenigen Zeichen unterscheiden, sich der verschlüsselte Text auch nur in diesen wenigen Zeichen unterscheidet.

Je größer die Anzahl G, H der Auswahlstufen 220, 230 gewählt wird, desto geringer ist die Wahrscheinlichkeit für eine spätere Übereinstimmung des verschlüsselten Textes oder des inneren Zustandes.

Die einzelnen Auswahlregister 221, 231 werden im Zuge der Initialisierung der Transformationseinheit 213 und des Zufallszahlengenerators 212 auf Werte gesetzt, die vom Passwort W sowie von aus dem Passwort W abgeleiteten Daten abhängen. Auch der Wert der Adressiereinheiten 222, 232 wird bei der Initialisierung auf einen vom Passwort W abgeleiteten Wert gesetzt. Der Inhalt der Auswahlregister 221, 231 sowie der Adressiereinheiten 222, 232 zählt zum inneren Zustand des Zufallszahlengenerators 212 oder der Transformationeinheit 213 und somit zum inneren Zustand der Verschlüsselungsmaschine 200.

Die Initialisierung der Auswahleinheiten 220, 230 erfolgt separat, sodass die inneren Zustände des Zufallszahlengenerators 212 und der Transformationeinheit 213 unterschiedlich sind.

Auch ist der Inhalt der Auswahlregister 221, 231 und der Auswahlzeiger 222, 232 grundsätzlich unterschiedlich, d.h. die Auswahleinheiten 220, 230 greifen auf unterschiedliche innere Zustände zu, die jeweils einen Teil des inneren Zustandes der Verschlüsselungsmaschine bilden.

In **Fig. 11a** ist eine alternative Ausführungsform einer Auswahleinheit für eine Verschlüsselungsmaschine dargestellt. Im Folgenden werden lediglich die Unterschiede zwischen der Auswahleinheit der **Fig. 11** und zu der Auswahleinheit der **Fig. 11a** dargestellt. Die in **Fig. 11a** dargestellte Auswahleinheit umfasst weitere Register $\delta_1, ..., \delta_G$, wobei jeder Stufe jeweils ein solches weiteres Register $\delta$ zugeordnet ist. Diese weiteren Register $\delta$ können im Rahmen der noch zu beschreibenden Aktualisierung zwischen einzelnen Verschlüsselungsvorgängen abgeändert und von außen beschrieben werden, insbesondere in Abhängigkeit von den ausgewählten Grundtransformation und Verschlüsselungsergebnissen. Im Zuge der Auswahl der jeweiligen Grundtransformation bleibt der Inhalt der Register $\delta_1, ..., \delta_G$ unverändert. Der Wert $\Phi$ des jeweiligen Auswahlregisters 221 der jeweils vorangehenden Stufe 220 und der Wert des jeweiligen weiteren Registers $\delta$ werden einer Rechenoperation $\mathcal{A}$ zugeführt und hieraus der Zeigerwert ermittelt, der für den Zugriff auf das Auswahlregister 221 der jeweiligen Stufe verwendet wird.

Zur Bestimmung des jeweiligen Werts $\Phi_0$ für die erste Auswahlstufe 220-1 wird ein erster Zeiger $\Phi_0$ herangezogen, der nach jeder Auswahl automatisch zyklisch inkrementiert oder dekrementiert wird und dessen Ergebnis der Rechenoperation $\mathcal{A}$ zugeführt wird.

Eine Aktualisierung der Auswahleinheit kann bei der in Fig. 11a dargestellten Ausführungsform beinhalten, dass lediglich jeweils eines der Register $\delta_1, ..., \delta_G$ nach einer oder nach einer Anzahl von ausgewählten Grundtransformationen abgeändert wird. Das zu modifizierende Register $\delta$ wird vorteilhafterweise jeweils nach einer oder einer Anzahl von Abfragen nach Transformationsvorschriften gewechselt.

Auch die Grund-Transformationsvorschriften $f_1$, bis $f_A$ können während der Durchführung der Kodierung, insbesondere des Iterationsschrittes $S_{29}$, bzw. bei der Entschlüsselung können die inversen Grund-Trans-formationsvorschriften $f^{-1}_1$, bis $f^{-1}_A$ insbesondere beim Iterationsschritt $S_{39}$, in Abhängigkeit von $b_i$, $c_i$ und $\rho$ modifiziert werden.

Die Anzahl der möglicherweise verwendeten Transformationen g steigt dadurch auf $(2^8)! \sim 10^{506}$.

Dies sind alle möglichen Transformationen von 8-Bit Bytes. Durch diese Maßnahme wird ein unberechtigter Zugriff auf den Klartext ohne Kenntnis des Passwortes und des Klartextes nahezu ausgeschlossen. Durch diese Maßnahme wird die für den neunten Iterationsschritt $S_{29}$ bzw. bei der Entschlüsselung bei Iterationsschritt $S_{39}$ benötigte Zeit bedeutend länger.

Eine günstige Anwendung einer Spezial-Transformationsvorschrift h für die STREAM-Verarbeitung gemäß dem ersten Ausführungsbeispiel besteht darin, während der Verschlüsselung der ersten 256 Bytes die Spezial-Transformationsvorschrift h zu modifizieren und danach unverändert zu lassen. Aber dennoch für den Rest der Daten immer aktiv zu belassen.

Eine günstige Anwendung einer Spezial-Transformationsvorschrift h für die BLOCK Verarbeitung gemäß dem zweiten oder dritten Ausführungsbeispiel besteht darin, bei der ersten Vorwärts-Kodierung die Spezial-Transformationsvorschrift nicht anzuwenden und/oder nicht abzuändern und für die erste Rückwärts-Kodierung die Spezial-Transformationsvorschrift anzuwenden und/oder abzuändern aber eine Modifikation dieser nur für die ersten 256 Verschlüsselungen zu vorzunehmen.

Eine weitere günstige Anwendung einer Spezial-Transformationsvorschrift h für die BLOCK Verarbeitung gemäß dem zweiten oder dritten Ausführungsbeispiel besteht darin, die bei Kodierung des ersten Datenblockes erstellte Spezialtransformationsvorschrift h bei der Verarbeitung der folgenden Datenblocke unverändert während der Vorwärts- und/oder Rückwärts-Kodierung einzusetzen.

Bei der Entschlüsselung wird entsprechend die Inverse $h^{-1}$ der Spezial-Transformationsvorschrift h verwendet und gegebenenfalls auch entsprechend abgeändert.

## Initialisierung

Im Folgenden wird unter Verweis auf die **Fig. 12** eine mögliche vorteilhafte Ausführungsvariante einer Initialisierung des Zufallszahlengenerators 212, einer Transformationseinheit 213 sowie der Verschlüsselungsmaschine 200 beschrieben, wobei die Initialisierung für sämtliche der vorstehend dargestellten Ausführungsbeispiele verwendet werden kann. Grundsätzlich wird die konkrete Art der Initialisierung der Verschlüsselungsmaschine 200 durch das bei der Verschlüsselung verwendete Passwort $W_0$ bestimmt. Das Passwort $W_0$ wird an eine Initialisierungseinheit übertragen, die die im Folgenden genannten Schritte durchführt.

In **Fig. 12** ist die Initialisierung der Verschlüsselungsmaschine 200 dargestellt.

In einem ersten Schritt wird ein Start-Zufallszahlengenerator 212-UR verwendet, der vorab bekannt ist und im Prinzip allgemein bekannt gegeben werden kann.

Das Passwort $W_0$ wird vor der Verschlüsselung der Rohdaten vom Benutzer zur Verfügung gestellt. Als Passwort $W_0$ dient eine eine Anzahl von sequentiell angeordneten Bytes mit 8 Bits pro Byte. Um die Auswirkungen unterschiedlicher Passwörter $W_0$ mit identischem Beginn möglichst ausschließen zu können, wird dem jeweiligen Passwort jeweils seine Länge in Bytes vorangestellt. Alternativ oder zusätzlich kann dem Passwort $W_0$ auch eine Checksumme vorangestellt werden. Sofern die Länge des Passwortes $W_0$ einen vorgegebenen Wert unterschreitet wird das Passwort $W_0$ durch Wiederholung oder Hintereinanderreihung des Passwortes, auf die vorgegebene Länge verlängert und in einem Passwort-Erstellungsschritt S101 ein Start-Passwort $W_N$ erstellt.

Anschließend wird eine erste Verschlüsselungsmaschine 200a mit Werten initialisiert, die sich aus dem Start-Passwort $W_N$ und den Werten des Start-Zufallszahlengenerators 212-UR ergeben. Das Start-Passwort $W_N$ und die Werte des Start-Zufallszahlengenerators 212-UR werden einer Verknüpfungseinheit 219a in den Schritten S102a und S103a zugeführt. Das Initial-Passwort $W_N$ und die Zufallszahlen des Start-Zufallszahlengenerators 212-UR werden dort verknüpft, beispielsweise durch bitweise durchgeführte Exklusiven-Oder-Verknüpfung (XOR-Verknüpfung) entsprechender Bytes, die daraus resultierenden Werte werden zur Initialisierung der ersten Verschlüsselungsmaschine 200a, d.h. zur Festlegung ihres inneren Zustandes, insbesondere des inneren Zustandes ihrer Transformationseinheit 213a im Schritt S105a und ihres Zufallszahlengenerators 212a im Schritt S104a verwendet. Anschließend wird das Start-Passwort $W_N$ mittels der ersten Verschlüsselungsmaschine 200a in einem Verschlüsselungsschritt S106a verschlüsselt und man erhält ein erstes Passwort $W_a$.

Es wird eine zweite Verschlüsselungsmaschine 200b erstellt, indem das erste Passwort $W_a$ und Zufallszahlen, die mit den Zufallszahlengenerator 212a der ersten Verschlüsselungsmaschine 200a erstellt wurden, in den Schritten S102b und S103b an die Verknüpfungseinheit 219b übermittelt und von dieser verknüpft werden und die aus dieser Verknüpfung resultierenden Daten zur Festlegung des inneren Zustandes der zweiten Verschlüsselungsmaschine 200b in den Schritten S104b und S105b verwendet werden. Es wird ein zweites Passwort $W_b$ durch Verschlüsselung des ersten Passwortes $W_a$ mit der zweiten Verschlüsselungsmaschine 200b im Schritt S106b erstellt. Dieser Vorgang kann beliebig oft widerholt werden. Am Ende erhält man eine in **Fig. 12** unten dargestellte Verschlüsselungsmaschine 200.

## Wahl der Bits pro Byte

Ganz allgemein kann anstelle des bei dem vorliegenden Ausführungsbeispiel verwendeten Datenspeichers 211 auch ein anderes Speicherlayout verwendet werden. Es ist dabei grundsätzlich möglich, auch Speicher mit einer abweichenden Anzahl von Bits pro Byte zu verwenden, um eine bessere Durchmischung der einzelnen Eingangsdaten zu erreichen. In diesem Fall werden die zu 8 Bit pro Byte vorliegenden Rohdaten bitweise in den Datenspeicher geschrieben, wobei die Zuordnung zwischen Bits und Bytes geändert wird.

## Erhöhung der Verarbeitungsgeschwindigkeit

Es ist vorteilhaft, jedoch nicht zwingend erforderlich, dass die Transformationsvorschrift g für jedes zu verschlüsselnde Byte separat geändert wird. Es ist auch möglich, dass mehrere Bytes mit derselben Transformationsvorschrift g verschlüsselt werden und erst anschließend eine neue Transformationsvorschrift g bestimmt wird.

Es ist ebenso möglich, dass die beiden Auswahleinheiten 220, 230 nach der Auswahl einer Grund-Transformationsvorschrift f oder eines Teil-Zufallszahlengenerators 233 lediglich dadurch abgeändert werden, dass der Registerwert von 225, 235 geändert wird, jedoch sonst keine Änderungen vorgenommen werden. Um mehrfache Verschlüsselungen mit derselben Transformationsvorschrift g zu vermeiden, sollte die Anzahl der Inkrementierung des Auswahlzeigers 225 ohne extern verursachte Zustandsänderung durch Zufuhr externer Daten geringer sein als die Länge A der Auswahlregister 221.

Es ist ebenso möglich, dass die beiden Auswahleinheiten 230, 220 nach der Auswahl einer Grund-Transformationsvorschrift f oder eines Teil-Zufallszahlengenerators 233 lediglich dadurch abgeändert werden, dass der Auswahlzeiger 222-1,232-1 der ersten Auswahlstufe 220-1 bzw. 230-1 inkrementiert wird, jedoch sonst keine Änderungen vorgenommen werden. Um mehrfache Verschlüsselungen mit derselben Transformationsvorschrift g zu vermeiden, sollte die Anzahl der Inkrementierung des Auswahlzeigers 222 ohne extern verursachte Zustandsänderung durch Zufuhr externer Daten geringer sein als die Länge A der Auswahlregister 221.

Ein Verfahren, bei dem mehrere Bytes mit derselben Vorschrift verschlüsselt werden, ist eher anfällig für Angriffe als ein Verfahren, das jeweils eine eigene Transformationsvorschrift g für jedes Byte verwendet.

Ebenso braucht der Rückkopplungsmechanismus aus Zeitgründen nicht bei jedem Schritt durchgeführt werden. Es ist auch möglich, dass Rückkoppelung der Auswahleinheiten 220, 230 alternierend oder auch nicht synchron erfolgt. Auch kann die Rückkopplung zum Zufallszahlengenerator 212 oder zur Transformationseinheit 213 bei einigen Schritten entfallen. Dennoch ist in diesen Fällen die verwendete Transformationsvorschrift eine andere.

## Entschlüsselung

Die Entschlüsselung wird im wesentlichen gleich wie die Verschlüsselung mit einer in **Fig. 13** gezeigten Entschlüsselungsmaschine 300 vorgenommen, wobei der innere Zustand der Transformationseinheit 313 und des Zufallszahlengenerators 312 mit dem inneren Zustand der Transformationseinheit 213 und des Zufallszahlengenerators 212 nach der Verarbeitung des jeweils i-ten Bytes bei der Verschlüsselung und bei der Entschlüsselung jeweils identisch sind, natürlich mit Ausnahme der Daten, die die inversen Grund-Transformationen $f^{-1}$ beschreiben und im Falle der dynamischen Änderung der (Grund-)Transformationsvorschriften werden allenfalls noch neben den Inversen der (Grund-)Transformationsvorschriften die jeweils geänderten, nicht invertierten (Grund-) Transformationsvorschriften zur Verfügung gehalten.

Gleiches gilt natürlich auch für die Spezial-Transformationsvorschrift h. Die Inverse h-1 der Spezial-Transformationsvorschrift h wird dynamisch während des Entschlüsselns modifiziert bzw. neu berechnet, und zwar zu den entsprechenden Zeitpunkten, bei denen beim Verschlüsseln die Spezial-Transformationsvorschrift h zu ändern ist.

Auch der Aufbau der Verschlüsselungsmaschine 200 und der Entschlüsselungsmaschine 300 ist bis auf die im Folgenden dargestellten Unterschiede identisch. Die Entschlüsselungsmaschine 300 verfügt über einen Datenspeicher 311, einen Zufallszahlengenerator 312 und eine Transformationseinheit 313, wie in **Fig. 13** dargestellt. Wie auch bei einer Verschlüsselung gemäß **dem ersten Ausführungsbeispiel ("STREAM")** erfolgt die Entschlüsselung (**Fig. 3**) derart, dass die einzelnen Bytes $c_1$, ..., $c_N$ des Datenspeichers 11 sequentiell vom Anfang bis zum Ende in Datenrichtung durchlaufen werden.

Anders als bei der Verschlüsselung werden anstelle der Transformationsvorschriften g und Grund-Transformationsvorschriften $f_1$, ..., $f_A$ die inversen Transformationsvorschriften $g^{-1}$ und inversen Grund-Transformationsvorschriften $f_1^{-1}$, ..., $f_A^{-1}$ verwendet. Sofern, wie eine Verbesserung vorschlägt, die Transformationsvorschriften aus Grund-Transformationsvorschriften $f_1$, ..., $f_A$ zusammengesetzt werden, reicht es aus, anstelle der Grund-Transformationsvorschriften $f_1$, ..., $f_A$ jeweils die inversen Grund-Transformationsvorschriften $f_1^{-1}$, ..., $f_A^{-1}$ abzuspeichern.

Für den Fall, dass die Grund-Transformationsvorschriften $f_i$ oder die Spezial-Transformationsvorschrift h während der Verschlüsselung modifiziert werden, so werden für die Entschlüsselung zusätzlich zu den inversen Transformationsvorschriften $h^{-1}$, $f_1^{-1}$ ... $f_A^{-1}$ auch die ursprünglichen Transformationsvorschriften h, $f_1$ ... $f_A$ vorgehalten .

Will man die Inverse $g^{-1}$ einer aus mehreren Grund-Transformationsvorschriften $f_{\mu 1}$, $f_{\mu 2}$, ..., $f_{\mu p}$ zusammengesetzten Transformationsvorschrift g ermitteln, so sind die inversen Grund-Transformationsvorschriften $f_1^{-1}$, ..., $f_A^{-1}$ ι gegebenenfalls $h^{-1}$ in der umgekehrten Reihenfolge anzuwenden:

$$c = g(b) = h(f_{\mu 1}(f_{\mu 2}( \; ... \; f_{\mu p}(b) \; ... \; )))$$

$$b = g^{-1}(c) = f_{\mu p}^{-1}(f_{\mu p-1}^{-1}( \; ... \; f_{\mu 1}^{-1}(h^{-1}(c)) \; ... \; ))$$

Um tatsächlich denselben inneren Zustand konsistent zu erhalten, werden jeweils die Rohdaten Bytes b und die verschlüsselten Bytes c und eventuelle Zufallszahlen in gleicher Weise verwendet, wie bei der Verschlüsselung, beispielsweise zur Abänderung des inneren Zustands der Auswahleinheiten 320, 330 des Zufallszahlengenerators 312 sowie der Transformationseinheit 313. Insbesondere werden die verschlüsselten und zu entschlüsselnden Bytes in einen hierfür vorgesehenen Datenspreicher 317 geschrieben, die entschlüsselten Bytes in einen hierfür vorgesehen Datenspeicher 314.

Die in **Fig. 13** dargestellte Entschlüsselungsmaschine wird in Bezug auf die Entschlüsselung gemäß dem ersten Ausführungsbeispiel dargestellt.

In einem ersten Schritt wird die Entschlüsselungsmaschine 300 mit dem Passwort W initialisiert. Hierbei werden sämtliche internen Speicher des Zufallszahlengenerators 312 sowie der Transformationseinheit 313 in einen durch ein Passwort W bestimmten Initialzustand $Y'_0$ gebracht. Die spezielle Initialisierung der Entschlüsselungsmaschine für die Entschlüsselungsmaschine wird später unter Bezugnahme auf **Fig. 16** näher beschrieben.

In einem zweiten Schritt wird der Datenspeicher 311 mit verschlüsselten Daten befüllt. Diejenige Menge an verschlüsselten Daten $c_1$, ..., $c_N$, die gleichzeitig im Datenspeicher 311 zur Verfügung steht, wird auch als Block oder Datenblock D bezeichnet. Ein Datenzeiger i, mit dem jeweils ein Byte $c_i$ aus dem Datenspeicher 211 ausgewählt wird, wird auf den ersten Speicherplatz des Datenspeichers 311 gesetzt.

Die folgenden Iterationsschritte werden für sämtliche Bytes des Datenspeichers 311 ausgeführt. Der im Speicher 316 abgespeicherte Datenzeiger i zeigt dabei anfangs auf das erste Byte $c_1$ des zu verschlüsselnden Datenblocks D und wird nach Durchführung der Iterationsschritte $S_{31}...S_{39}$ so lange inkrementiert, bis er auf das letzte Byte $b_N$ des zu verschlüsselnden Datenblocks D zeigt.

In einem ersten Iterationsschritt $S_{31}$ wird das Byte des Datenblockes D des jeweiligen vom Wert des Datenzeigers i ausgewählten Speicherplatz des Datenspeichers 311 in einen Schlüsseldaten-Zwischenspeicher 317 als Schlüsseldaten-Byte $c_i$ kopiert und der

Transformationseinheit 313 zugeführt.

In einem zweiten Iterationsschritt $S_{32}$ wird eine Folge von Zufallszahlen $\mu_{i,1}$, ..., $\mu_{i,P}$ an die Transformationseinheit 313 übermittelt. Für jede Iteration werden separate Zufallszahlen $\mu_{i,1}$, ..., $\mu_{i,P}$ ermittelt. Diese Zufallszahlen sind identisch zu den Zufallszahlen $\mu_{i,1}$, ..., $\mu_{i,P}$ die im Iterationsschritt $S_{22}$ während der Verschlüsselung der Transformationseinheit 213 übermittelt wurden.

Die Transformationseinheit 313 ermittelt im dritten Iterationsschritt $S_{33}$ die Transformationsvorschrift $g_i^{-1}$ in Abhängigkeit von ihrem internen Zustand und den ermittelten Zufallszahlen $\mu_{i,1}$, ..., $\mu_{i,p}$.

Das verschlüsselte Byte $c_i$ wird durch Anwendung der Transformationsvorschrift $g_i^{-1}$ in einem vierten Iterationsschritt S34 gemäß $b_i = g_i^{-1}(c_i)$ entschlüsselt, man erhält wiederum das Rohdaten-Byte $b_i$. Im vorliegenden Fall wird die Transformationsvorschrift $g_i$ durch Zusammensetzung, wie vorstehend beschrieben ermittelt, wobei die Auswahl von T Vorschriften aus den A Grund-Transformationsvorschriften $f_1^{-1}$, ..., $f_A^{-1}$ für die Zusammensetzung aufgrund der angegebenen Zufallszahlen $\mu_{i,1}$, ..., $\mu_{i,p}$ erfolgt.

In einem fünften Iterationsschritt $S_{35}$ wird der Inhalt des jeweiligen vom Datenzeiger i ausgewählten Speicherplatzes des Datenspeichers 311 mit dem entschlüsselten Byte $b_i$ überschrieben. Anschließend wird in einem sechsten Iterationsschritt $S_{36}$ das entschlüsselte Byte $b_i$ in einen eigenen Rohdaten-Zwischenspeicher 314 als Rohdaten-Byte $b_i$ geschrieben.

In einem siebenten Iterationsschritt $S_{37}$ werden das Rohdaten-Byte $b_i$ und das verschlüsselte Byte $c_i$ an den Zufallszahlengenerator 312 und die Transformationseinheit 313 für die künftige Zustandsänderungen dieser übermittelt.

In einem achten Iterationsschritt $S_{38}$ werden weitere vom Zufallszahlengenerator 312 erzeugte Zufallszahlen $\rho_{i,1}$ ... $\rho_{i,R}$, diese Zufallszahlen sind identisch zu den Zufallszahlen $\rho_{i,1}$ ... $\rho_{i,R}$ die im Iterationsschritt $S_{28}$ während der Verschlüsselung übermittelt wurden, an den Zufallszahlengenerator 312 zurück und an die Transformationseinheit 313 für die künftige Zustandsänderungen übermittelt.

In einem neunten Iterationsschritt $S_{39}$ wird der innere Zustand des Zufallszahlengenerators 312 und der Transformationeinheit 313 mit Hilfe der in den Iterationsschritten $S_{37}$ und $S_{38}$ übermittelten Bytes bzw Zufallszahlen abgeändert. Der innere Zustand des Zufallszahlengenerators 312 ist jetzt identisch zum inneren Zustand des Zufallszahlengenerators 212 nach der Bearbeitung des i-ten Datenbytes. Der innere Zustand der Transformationseinheit 313 ist jetzt gleich dem inneren Zustand der Transformationseinheit 213 nach der Bearbeitung des i-ten Datenbytes, natürlich mit Ausnahme der Daten, die die inversen Grund-Transformationen $f^{-1}$ beschreiben.

Werden die Grund-Transformationsvorschriften $f_i$ oder die Spezial-Transformationsvorschrift h nach der Verschlüsselung im Iterationsschritt $S_{29}$ modifiziert, so sind bei der Entschlüsselung ebenfalls die Inversen der Grund-Transformationsvorschriften $f^{-1}_i$ bzw die Inverse der Spezial-Transformationsvorschrift $h^{-1}$ analog abzuändern, sodass im Iterationsschritt $S_{39}$ jeweils die Inverse der abgewandelten Grund-Transformationsvorschriften $f_i$ bzw die Inverse der abgewandelten Spezial-Transformationsvorschrift h ermittelt und für den nächsten Entschlüsselungsschritt zur Verfügung steht.

Je nach Fortschritt der Verschlüsselung entstehen bei der Transformationseinheit 313 sowie beim Zufallszahlengenerator 312 in Abhängigkeit von sowohl den bisherig verarbeiteten entschlüsselten Bytes $b_i$, den verschlüsselten Bytes $c_i$ und den vom Zufallszahlengenerator 312 gelieferten Zufallszahlen $\rho_{i,1}$ ... $\rho_{i,R}$ unterschiedliche, innere Zustände.

Die Auswahl der Transformationsvorschrift $g_i$ bzw. von deren Inversen $g^{-1}$ ist daher sowohl direkt abhängig von dem inneren Zustand der Transformationeinheit 313 zum Zeitpunkt der Verschlüsselung des Rohdatenbytes $b_i$ als auch indirekt durch die von dem Zufallszahlengenerator 312 zum gleichen Zeitpunkt bereitgestellten Zufallszahlen $\rho_{i,1}$ ... $\rho_{i,R}$, $\mu_{i,1}$, ..., $\mu_{i,P}$, die wiederum auch von dem inneren Zustand des Zufallszahlengenerators 312 in Abhängigkeit von den bis dahin verarbeiteten Rohdatenbytes und verschlüsselten Bytes erzeugt werden.

Die Auswahl der Transformationsvorschrift $g_i$ ist daher abhängig von den Werten und der Reihenfolge aller verschlüsselten Bytes $c_1,...c_{i-1}$ sowie der Bytes $b_1, ... b_{i-1}$. Nach der Verschlüsselung wird der Wert des Zeigers i inkrementiert.

Nachdem die im Datenspeicher 311 abgelegten verschlüsselten Bytes $c_1, ... c_N$ allesamt entschlüsselt sind, werden diese für die weitere Verwendung zur Verfügung gehalten. Nach der allfälligen weiteren Verarbeitung der Daten im Datenspeicher 311 wird dieser gemäß dem zweiten Schritt eventuell mit weiteren zu entschlüsselnden Daten wieder aufgefüllt, die analog wie oben verschlüsselt werden.

Der innere Zustand sowohl des Zufallszahlengenerators 312 als auch der Transformationseinheit 313 ist am Beginn der neuerlichen Verarbeitung von weiteren Daten im Datenspeichers 311 gleich wie am Ende der vorherigen Verarbeitung der Daten des Datenspeichers 311.

Bei der Entschlüsselung von nach dem **zweiten Ausführungsbeispiel ("BLOCK")** verschlüsselten Daten beginnt die Entschlüsselung in umgekehrter Abfolge der Daten (**Fig. 4, 5**). Die Entschlüsselungsmaschine 300 wird in den Initialzustand $Y'_0$ versetzt. Der Initialzustand $Y'_0$ unterscheidet sich vom Initialzustand $Y_0$ nur durch die Daten, die die inversen Grund-Transformationen $f^{-1}$ an Stelle der Grundtransformationen f beschreiben. Allenfalls kann es bei der Änderung von Grund-Transformationsvorschriften $f_1^{-1}...f_A^{-1}$ notwendig werden, die Grund-Transformationsvorschriften $f_1...f_A$ zur Verfügung zu halten. Ebenso kann es notwendig sein, im Falle der Verwendung der Spezial-Transformationsvorschriften, diese auch in nicht invertierter Form zur Verfügung zu haben. Der Datenzeiger i wird zunächst entgegen der Datenrichtung des Datenspeichers 311 verschoben, wobei die einzelnen Bytes jeweils entschlüsselt werden. Anschließend wird die Transformationseinheit 313 wiederum in den Initialzustand $Y'_0$ versetzt, wobei die einzelnen Bytes im Datenspeicher 311 vom ersten Byte bis zum letzten Byte in Datenrichtung entschlüsselt werden. Nach diesem zweiten Durchlauf befindet sich die Rohdatenfolge im Datenspeicher 311. Sofern die Rohdatenfolge mehrfach verschlüsselt wurde, wird auch der Entschlüsselungsvorgang entsprechend mehrfach wiederholt, um die Rohdatenfolge zu erhalten. (**Fig. 6**)

Bei der Entschlüsselung von nach dem **dritten Ausführungsbeispiel ("CHAINED-BLOCK")** verschlüsselten Daten beginnt die Entschlüsselung beim letzten Byte des jeweiligen Blocks (**Fig. 7, 9**). Die Entschlüsselungsmaschine 300 wird in den Initialzustand $Y'_0$ versetzt. Der Datenzeiger i wird zunächst entgegen der Datenrichtung des Datenspeichers 311 verschoben, wobei die einzelnen Bytes jeweils entschlüsselt werden. Anschließend wird die Entschlüsselungsmaschine 300 wiederum in den Initialzustand $Y'_0$ versetzt, ihr momentaner innerer Zustand $Y_x$ wird verworfen. Anschließend werden die einzelnen Bytes im Datenspeicher 311 vom ersten Byte bis zum letzten Byte in Datenrichtung entschlüsselt. Nach diesem zweiten Durchlauf befindet sich die Rohdatenfolge im Datenspeicher 311. Sofern die Rohdatenfolge mehrfach verschlüsselt wurde, wird auch der Entschlüsselungsvorgang entsprechend mehrfach wiederholt, um die Rohdatenfolge des jeweiligen Datenblocks zu erhalten.

Die Entschlüsselungsmaschine 300 hat den inneren Zustand $Y'_1$. Beim nächsten Durchlauf wird der Zustand $Y'_1$ als Initialzustand verwendet und das vorstehende Vorgehen erneut durchgeführt, wobei der innere Zustand, in dem die Entschlüsselungsmaschine 300 am Ende der Entschlüsselung des jeweiligen Datenblocks ist, als Initialzustand für die Entschlüsselung des jeweils nächsten Datenblocks verwendet wird.

Der jeweils entschlüsselte Datenblock D wird für eine weitere Verwendung zur Verfügung gehalten.

Der nächste verschlüsselte bzw. zu entschlüsselnde Datenblock wird in den Datenspeicher 311 geladen. Der bei der Entschlüsselung des vorherigen Blocks zwischengespeicherte innere Zustand ist der Initialzustand für den jetzt zu bearbeitenden Block. Dieser wird in die Entschlüsselungsmaschine 300 geladen und der für den ersten Block dargestellte Vorgang erneut durchgeführt. Dieser Vorgang kann für sämtliche zu entschlüsselnde Datenblöcke durchgeführt werden.

Wie bereits erwähnt, besteht bei der Verschlüsselung auch die Möglichkeit, den inneren Zustand, in dem sich die Verschlüsselungsmaschine 200 nach dem ersten Verschlüsselungsdurchlauf befindet, als inneren Zustand zwischenzuspeichern und vor der Verschlüsselung des jeweils nächsten Datenblocks D als Initialzustand zu verwenden. In diesem Fall braucht bei der Entschlüsselung der innere Zustand der Entschlüsselungsmaschine 300 nicht abgespeichert zu werden. Bei der Entschlüsselung eines zweiten oder späteren Datenblocks kann jeweils der innere Zustand als Initialzustand herangezogen werden, der an der Entschlüsselungsmaschine 300 am Ende der Entschlüsselung des ersten bzw. jeweils vorangehenden Datenblocks vorlag.

Der Zufallszahlengenerator 312 (**Fig. 13**) der Entschlüsselungsmaschine 300 entspricht ident dem Zufallszahlengenerator 212 (**Fig. 1**) der Verschlüsselungsmaschine 200. Die Teil-Zufallszahlengeneratoren 233 und 333 sind sich gleich. Die Auswahleinheiten 230 und 330 (**Fig. 10 und Fig. 14; Fig. 10a und Fig. 14a**) sind sich gleich.

Die Transformationseinheit 313 (**Fig. 13**) der Entschlüsselungsmaschine 300 entspricht der Transformationseinheit 213 der Verschlüsselungsmaschine 200 mit dem Unterschied, dass anstelle der Mittel 240 zur Bildung der Grund-Transformationsvorschrift f Mittel 340 zur Bildung ihrer jeweiligen Inversen $f^{-1}$ zur Verfügung stehen. Die Auswahleinheiten 220 und 320 (**Fig. 11 und Fig. 15; Fig. 11a und Fig. 15a**) sind sich gleich.

## Initialisierung der Entschlüsselungsmaschine

Die Initialisierung der Entschlüsselungsmaschine 300 erfolgt im wesentlichen wie die Initialisierung der Verschlüsselungsmaschine 200 (**Fig. 12**). Bei der Initialisierung wird eine Anzahl von Verschlüsselungsmaschinen 1a, 1b, ... gebildet, jeweils auf dieselbe Weise wie bei der Initialisierung der betreffenden Verschlüsselungsmaschine 200. Aus dem InitialZustand $Y_0$ der letzten gebildeten Verschlüsselungsmaschine wird anschließend der Initialzustand $Y'_0$ der Entschlüsselungsmaschine 300 gebildet. Die Zufallszahlengeneratoren 212 und 312 (**Fig. 1, 13**) sowie die Auswahleinheiten 220 und 320 (**Fig. 11, 15; Fig. 11a, 15a**) sind sich gleich. Der Unterschied der Zustände $Y_0$ und $Y'_0$ besteht zwischen den Verarbeitungseinheiten 240 und 340. Um eine Decodierung erzielen zu können, werden anstelle der Grund-Transformationsvorschrift $f_1...f_A$ jeweils ihre Inversen $f_1^{-1}...f_A^{-1}$ verwendet. Diese werden von der Verschlüsselungsmaschine 200 einer Inversionseinheit 319 übermittelt, diese bestimmt die jeweiligen Inversen $f_1^{-1}...f_A^{-1}$ sowie gegebenenfalls die Inverse $h^{-1}$ der Spezial-Transformationsvorschrift in ihrem Initialzustand und speichert diese in den betreffenden Speichern der Transformationseinheit 313 der Entschlüsselungsmaschine 300.

Ebenso werden gegebenenfalls die Grund-Transformationsvorschriften $f_1...f_A$ selbst sowie die Spezial-Transformationsvorschrift h und ihre Inverse $h^{-1}$ abgespeichert.

## Speicherung des inneren Zustands

Zum Abspeichern und neu Laden eines inneren

Zustands $Y'_0$ steht bei der Entschlüsselungsmaschine 300 ein Zustandsspeicher 318, bei der Verschlüsselungsmaschine 200 ein Zustandsspeicher 218 zur Verfügung. Sofern für die einzelnen dargestellten Verschlüsselungsarten oder Entschlüsselungsarten Zwischespeicherungen vorgesehen sind, verfügen die Verschlüsselungsmaschine 200 und die Entschlüsselungsmaschine 300 über die hierfür erforderlichen Zustandsspeicher 218, 318.

**Patentansprüche**

1. Verfahren zum Erstellen von Zufallszahlen, wobei eine Anzahl H von Auswahlregistern (231; 331) mit jeweils einer vorgegebenen Anzahl Z von Werten von 1 bis Z in beliebiger Reihenfolge vorgegeben werden,

   a) wobei dem ersten Auswahlregister (231-1; 331-1) eine erste Adressiereinheit (232-1; 332-1) vorgeschaltet ist, die mittels eines, bei jedem Verschlüsselungsschritt zyklisch inkrementierten, in der Adressiereinheit (232-1; 332-1) befindlichen, ersten Zeigerwertes ($k_1$) auf eine Speicherposition des ersten Auswahlregisters (231-1; 331-1) verweist,
   b) wobei die an der vom ersten Zeiger ($k_1$) ausgewählten Speicherposition im ersten Auswahlregister (231-1; 331-1) befindliche Zahl ($\theta_1$) ermittelt wird und diese mit der in der zweiten Adressiereinheit (232-2; 332-2) befindlichen Zahl verknüpft, modulo Z genommen und um eins erhöht wird und dann der neue Inhalt der Adressiereinheit (232-2; 332-2) gebildet wird, und der so erhaltene Wert einen zweiten Zeigerwert ($k_2$) bildet, der dann zur Adressierung einer Speicherposition im zweiten Auswahlregister (231-2; 331-2) herangezogen wird,
   c) wobei für die weiteren Adressiereinheiten (232-3,...232-H; 332-3,...332-H) und die weiteren Auswahlregister (231-3...231-H; 331-1...331-H) analog zur Adressiereinheit (232-2; 332-2) und zum Auswahlregister (231-2; 331-2) vorgegangen wird, und/oder für die weiteren Auswahlregister (231-3, ... 231-H ; 331-3, ... 321-H) jeweils die an der vom jeweiligen Zeiger ($k_1$ ... $k_H$) ausgewählten Speicherposition im jeweiligen Auswahlregister (231; 331) befindliche Zahl ermittelt wird und dem jeweils nächsten Zeiger ($k_1$ ... $k_H$) zugewiesen oder zu diesem hinzugezählt oder von diesem abgezogen wird oder sonstwie verknüpft wird, und der Wert des jeweils nächsten Zeigers ($k_1$ ... $k_H$) zur Adressierung einer Speicherposition im jeweils nächsten Auswahlregister (231; 331) herangezogen wird,
   d) wobei eine Anzahl von deterministischen Teil-Zufallszahlengeneratoren (233-1...233-Z, 333-1...333-Z) vorgegeben wird,
   e) wobei der vom letzten Zeigerwert ($k_H$) der Adressiereinheit (232-H; 332-H) adressierte Wert ($\theta_H$) des letzten Auswahlregisters (231-H; 331-H) zur Auswahl des Teil-Zufallszahlengenerators (233-1...233-Z, 333-1...333-Z) herangezogen wird,
   f) wobei zur Auswahl einer Mehrzahl von Zufallszahlengeneratoren jeweils der erste Zeiger ($k_1$) nach vorgegebenen Kriterien abgeändert, erhöht, verringert, inkrementiert oder dekrementiert, wird und die Schritte a) bis e) erneut durchgeführt werden, und
   g) mit dem jeweils ausgewählten Teil-Zufallszahlengenerator (233; 333) eine Zufallszahl erstellt und zur Verfügung gehalten wird,

   **dadurch gekennzeichnet, dass** abhängig von am Eingang (234; 334) anliegenden Werten ($b_i$, $c_i$, $\rho_i$), einem zu verschlüsselnden Byte ($b_i$) und/oder einem verschlüsselten Byte ($c_i$) und/oder von Zufallszahlen ($\rho_i$), eines der Auswahlregister (231; 331) abgeändert wird, und zwei in den Auswahlregistern (231; 331) abgespeicherte Werte miteinander vertauscht werden,

   - wobei der Index des einen Wertes eine Reihe von vorgegebenen Werten nach einer vorab vorgegebenen Reihenfolge durchläuft, und zwar durch zyklisches Hochzählen zwischen 1 und Z, und der Index des zweiten Wertes durch die am Eingang (234; 334) anliegenden Werte festgelegt wird.

2. Verfahren nach Anspruch 1, **dadurch gekennzeichnet, dass** abhängig von am Eingang (234; 334) anliegenden Werten, insbesondere dem zu verschlüsselnden Byte und/oder dem verschlüsselten Byte und/oder von Zufallszahlen ($\rho$), der Wert eines der Adressiereinheiten (232; 332) abgeändert wird,

   - wobei diese Werte mit dem in der jeweiligen Adressiereinheit (232; 332) befindlichen Wert verknüpft werden, vorzugsweise das Resultat dann modulo Z genommen und um eins erhöht wird, und der Wert dann der jeweiligen Adressiereinheit (232) zugewiesen wird,
   - wobei gegebenenfalls nach Vorliegen eines externen Triggersignals, insbesondere ausgelöst durch eine vorzunehmende Verschlüsselung oder Entschlüsselung eines oder einer vorgegebenen Anzahl von Bytes, jeweils der Wert der nächsten Adressiereinheit abgeändert wird und für den Fall, dass im vorherigen Schritt der Wert der letzten Adressiereinheit (232-H; 332-H) abgeändert wurde, wiederum die erste Adressiereinheit (232-1; 332-1) abgeändert wird.

3. Verfahren zum Erstellen von Zufallszahlen, wobei eine Anzahl H von Auswahlregistern (231; 331) mit jeweils einer vorgegebenen Anzahl Z von Werten von 1 bis Z in beliebiger Reihenfolge vorgegeben werden,

a) wobei dem ersten Auswahlregister (231-1; 331-1) eine erste Adressiereinheit (232-1; 332-1) vorgeschaltet ist, die mittels eines, bei jedem Verschlüsselungsschritt zyklisch inkrementierten, Werts ($\theta_0$) sowie eines vom inneren Zustand des Zufallsgenerators abhängigen weiteren Registers ($\eta_1$) aufgrund einer vorab vorgegebenen Rechenoperation (**Z**) einen ersten Zeigerwert ($k_1$) ermittelt, der auf eine Speicherposition des ersten Auswahlregisters (231-1; 331-1) verweist,

b) wobei die an der vom ersten Zeiger ($k_1$) ausgewählten Speicherposition im ersten Auswahlregister (231-1; 331-1) befindliche Zahl ($\theta_1$) ermittelt wird und eine zweite Adressiereinheit (232-2, 332-2) mittels dieser Zahl ($\theta_1$) sowie mittels eines vom inneren Zustand des Zufallsgenerators abhängigen weiteren Registers ($\eta_2$) aufgrund der vorab vorgegebenen Rechenoperation (Z) einen zweiter Zeigerwert ($k_2$) ermittelt, der auf eine Speicherposition des zweiten Auswahlregisters (231-2; 331-2) verweist, und der dann zur Adressierung einer Speicherposition im zweiten Auswahlregister (231-2; 331-2) herangezogen wird,

c) wobei für die weiteren Adressiereinheiten (232-3,...232-H; 332-3,...332-H) und die weiteren Auswahlregister (231-3...231-H; 331-1...331-H) analog zur Adressiereinheit (232-2; 332-2) und zum Auswahlregister (231-2; 331-2) vorgegangen wird,

d) wobei eine Anzahl von deterministischen Teil-Zufallszahlengeneratoren (233-1...233-Z, 333-1...333-Z) vorgegeben wird,

e) wobei der vom letzten Zeigerwert ($k_H$) der Adressiereinheit (232-H; 332-H) adressierte Wert ($\theta_H$) des letzten Auswahlregisters (231-H; 331-H) zur Auswahl des Teil-Zufallszahlengenerators (233-1...233-Z, 333-1...333-Z) herangezogen wird,

f) wobei zur Auswahl einer Mehrzahl von Teil-Zufallszahlengeneratoren (233-1...233-Z, 333-1...333-Z) jeweils das Register $\theta_0$ nach vorgegebenen Kriterien abgeändert, erhöht, verringert, inkrementiert oder dekrementiert, wird und die Schritte a) bis e) erneut durchgeführt werden, und

g) mit dem jeweils ausgewählten Teil-Zufallszahlengenerator (233; 333) eine Zufallszahl erstellt und zur Verfügung gehalten wird, **dadurch gekennzeichnet, dass** abhängig von am Eingang (234; 334) anliegenden Werten ($b_i$, $c_i$, $\rho_i$), einem zu verschlüsselnden Byte ($b_i$) und/oder einem verschlüsselten Byte ($c_i$) und/oder von Zufallszahlen ($\rho_i$), eines der Auswahlregister (231; 331) abgeändert wird, und zwei in den Auswahlregistern (231; 331) abgespeicherte Werte miteinander vertauscht werden,

- wobei der Index des einen Wertes eine Reihe von vorgegebenen Werten nach einer vorab vorgegebenen Reihenfolge durchläuft, und zwar durch zyklisches Hochzählen zwischen 1 und Z, und der Index des zweiten Wertes durch die am Eingang (234; 334) anliegenden Werte festgelegt wird.

4. Verfahren nach Anspruch 3, **dadurch gekennzeichnet, dass** abhängig von am Eingang (234; 334) anliegenden Werten, insbesondere dem zu verschlüsselnden Byte und/oder dem verschlüsselten Byte und/oder von Zufallszahlen ($\rho$), einer der Werte der weiteren Register ($\eta$) abgeändert wird,

- wobei gegebenenfalls nach Vorliegen eines externen Triggersignals, insbesondere ausgelöst durch eine vorzunehmende Verschlüsselung oder Entschlüsselung, oder einer vorgegebenen Anzahl von Triggersignalen eine Aktualisierung vorgenommen wird,
- wobei bei ersten Aktualisierung jeweils der Wert des ersten weiteren Registers ($\eta$) abgeändert wird, und bei jeder weiteren Aktualisierung der Wert des weiteren Registers ($\eta$) der jeweils nächsten Auswahlstufe abgeändert wird, und für den Fall, dass im vorherigen Schritt der Wert des weiteren Registers ($\eta$) der letzten Auswahlstufe abgeändert wurde, wiederum die der Wert des weiteren Registers ($\eta$) der ersten Auswahlstufe abgeändert wird.

5. Verfahren nach einem der Ansprüche 1 oder 4, wobei nach Vorliegen eines externen Triggersignals, insbesondere ausgelöst durch eine vorzunehmende Verschlüsselung oder Entschlüsselung eines Bytes oder einer vorgegebenen Anzahl von Bytes, nach jeder Vertauschung oder nach einer vorgegeben Anzahl von Vertauschungen in einem Auswahlregister (231; 331) zum jeweils nächsten Auswahlregister (231; 331) gewechselt wird und für den Fall, dass im vorherigen Schritt in dem letzten Auswahlregister (231-H; 331-H) bereits die vorgegebene Anzahl von Vertauschungen statt gefunden hat, wieder das erste Auswahlregister (231-1; 331-1) für Abänderungen herangezogen wird.

**6.** Verfahren zur Ermittlung und Anwendung einer Transformationsvorschrift ($g_i$, $g_i^{-1}$) für Verschlüsselungsverfahren oder Entschlüsselungsverfahren, wobei eine Anzahl G von Auswahlregistern (221; 321) mit jeweils einer vorgegebenen Anzahl A Werten 1 bis A in beliebiger Reihenfolge vorgegeben werden, wobei in jedem Auswahlregister (221; 321) jeweils eine Anzahl von einzelnen Speicherpositionen im jeweiligen Auswahlregister (221; 321) repräsentierenden Zahlen vorgegeben wird, wobei jede eine Speicherposition repräsentierende Zahl jeweils einmal im Auswahlregister (221; 321) enthalten ist,

a) wobei dem ersten Auswahlregister (221-1; 321-1) eine erste Adressiereinheit (222-1; 322-1) vorgeschaltet ist, die mittels eines, bei jedem Verschlüsselungsschritt zyklisch inkrementierten, in der Adressiereinheit (222-1; 322-1) befindlichen ersten Zeigerwertes ($j_1$) auf eine Speicherposition des ersten Auswahlregisters (221-1; 321-1) verweist,

b) wobei die an der vom ersten Zeiger ($j_1$) ausgewählten Speicherposition im ersten Auswahlregister (221-1; 321-1) befindliche Zahl ($\Phi_1$) ermittelt wird und diese mit der in der zweiten Adressiereinheit (222-2; 322-2) befindlichen Zahl verknüpft, modulo A genommen und um eins erhöht wird, und dann der neue Inhalt der Adressiereinheit (222-2; 322-2) gebildet wird, und der so erhaltene Wert einen zweiten Zeigerwert ($j_2$) bildet, der dann zur Adressierung einer Speicherposition im zweiten Auswahlregister (221-2; 321-2) herangezogen wird,

c) wobei für die weiteren Adressiereinheiten (222-3,...222-G; 322-3,...322-G) und die weiteren Auswahlregister (221-3...221-G; 321-1...321-G) analog zur Adressiereinheit (222-2; 322-2) und zum Auswahlregister (221-2; 321-2) vorgegangen wird, und/oder dass für die weiteren Auswahlregister (221-3, ... 221-G ; 321-3, ... 321-G) jeweils die an der vom jeweiligen Zeiger ($j_1$ ... $j_G$) ausgewählten Speicherposition im jeweiligen Auswahlregister (221; 321) befindliche Zahl ermittelt wird und dem jeweils nächsten Zeiger ($j_1$ ... $j_G$) zugewiesen oder zu diesem hinzugezählt oder von diesem abgezogen wird, und der Wert des jeweils nächsten Zeigers ($j_1$ ... $j_G$) zur Adressierung einer Speicherposition im jeweils nächsten Auswahlregister (221; 321) herangezogen wird,

d) wobei eine Anzahl von Grund-Transformationsvorschriften ($f_1..f_A$ ; $f^{-1}_1..f^{-1}_A$) vorgegeben wird,

e) wobei der vom letzten Zeigerwert ($j_G$) der Adressiereinheit (222-G ; 322-G) adressierte Wert ($\Phi_G$) des letzten Auswahlregisters (221-G; 321-G) zur Auswahl der Grund-Transformationsvorschriften ($f_1..f_A$; $f^{-1}_1..f^{-1}_A$) herangezogen

wird,

f) wobei zur Auswahl einer Mehrzahl von Grund-Transformationsvorschriften ($f_1..f_A$; $f^{-1}_1..f^{-1}_A$) jeweils der erste Zeiger ($j_1$) nach vorgegebenen Kriterien abgeändert, erhöht, verringert, inkrementiert oder dekrementiert, wird und die Schritte a) bis e) erneut durchgeführt werden, und

g) ein Datenwert, ein zu verschlüsselndes Byte ($b_i$) oder ein zu entschlüsselndes Byte ($c_i$), angegeben wird und die ausgewählte Transformationsvorschrift ($g_i$; $g^{-1}_i$) auf den Datenwert angewendet wird, die mehreren ausgewählten Grund-Transformationsvorschriften ($f_{i,1}..f_{i,T}$ ; $f^{-1}_{i,1}..f^{-1}_{i,T}$) hintereinander, im Falle der Verschlüsselung in der Reihenfolge ihrer Auswahl oder im Falle der Entschlüsselung entgegen der Reihenfolge ihrer Auswahl, auf den Datenwert angewendet werden und das Ergebnis der Anwendung zur Verfügung gehalten wird, **dadurch gekennzeichnet, dass** abhängig von am Eingang (224; 324) anliegenden Werten ($b_i$, $c_i$, $\rho$), einem zu verschlüsselnden Byte ($b_i$) und/oder einem verschlüsselten Byte ($c_i$) und/oder Zufallszahlen ($\rho$) eines der Auswahlregister (221; 321) abgeändert wird, und zwei in den Auswahlregistern (221; 321) abgespeicherte Werte miteinander vertauscht werden,

- wobei der Index des einen Wertes eine Reihe von vorgegebenen Werten nach einer vorab vorgegebenen Reihenfolge durchläuft, und zwar durch zyklisches Hochzählen zwischen 1 und A, und der Index des zweiten Wertes durch die am Eingang (224; 324) anliegenden Werte festgelegt wird.

**7.** Verfahren nach Anspruch 6, **dadurch gekennzeichnet, dass** abhängig von am Eingang (224; 324) anliegenden Werten, insbesondere dem zu verschlüsselnden Byte und/oder dem verschlüsselten Byte und/oder von Zufallszahlen (p), der Wert eines der Adressiereinheiten (222; 322) abgeändert wird,

- wobei diese Werte mit dem in der jeweiligen Adressiereinheit (222; 322) befindlichen Wert verknüpft werden, vorzugsweise das Resultat dann modulo A genommen und um eins erhöht wird und der Wert dann der jeweiligen Adressiereinheit (222; 322) zugewiesen wird,

- wobei gegebenenfalls nach Vorliegen eines externen Triggersignals, insbesondere ausgelöst durch eine vorzunehmende Verschlüsselung oder Entschlüsselung eines oder einer vorgegebenen Anzahl von Bytes, jeweils die nächste Adressiereinheit abgeändert wird und für den Fall, dass im vorherigen Schritt die letzte Adressiereinheit (222-G; 322-G) abgeändert wurde, wiederum die erste Adressiereinheit (222-1; 322-1) abgeändert wird.

8. Verfahren zur Ermittlung und Anwendung einer Transformationsvorschrift ($g_i$, $g_i^{-1}$) für Verschlüsslungsverfahren oder Entschlüsselungsverfahren, wobei eine Anzahl G von Auswahlregistern (221; 321) mit jeweils einer vorgegebenen Anzahl A Werten 1 bis A in beliebiger Reihenfolge vorgegeben werden, wobei in jedem Auswahlregister (221; 321) jeweils eine Anzahl von einzelnen Speicherpositionen im jeweiligen Auswahlregister (221; 321) repräsentierenden Zahlen vorgegeben wird, wobei jede eine Speicherposition repräsentierende Zahl jeweils einmal im Auswahlregister (221; 321) enthalten ist,

a) wobei dem ersten Auswahlregister (221-1; 3231-1) eine erste Adressiereinheit (222-1; 322-1) vorgeschaltet ist, die mittels eines, bei jedem Verschlüsselungsschritt zyklisch inkrementierten, Wertes eines Registers $\Phi_0$ sowie eines vom inneren Zustand des Zufallsgenerators abhängigen weiteren Registers ($\delta_1$) aufgrund einer vorab vorgegebenen Rechenoperation (**A**) einen ersten Zeigerwert ($j_1$) ermittelt, der auf eine Speicherposition des ersten Auswahlregisters (221-1; 321-1) verweist,

b) wobei die an der vom ersten Zeiger ($j_1$) ausgewählten Speicherposition im ersten Auswahlregister (221-1; 321-1) befindliche Zahl ($\Phi_1$) ermittelt wird und eine zweite Adressiereinheit (222-2, 322-2) mittels dieser Zahl ($\Phi_1$) sowie mittels eines vom inneren Zustand des Zufallsgenerators abhängigen weiteren Registers ($\delta_2$) aufgrund der vorab vorgegebenen Rechenoperation (**A**) einen zweiter Zeigerwert ($j_2$) ermittelt, der auf eine Speicherposition des zweiten Auswahlregisters (221-2; 321-2) verweist, und der dann zur Adressierung einer Speicherposition im zweiten Auswahlregister (221-2; 321-2) herangezogen wird,

c) wobei für die weiteren Adressiereinheiten (222-3,...222-G; 322-3,...322-G) und die weiteren Auswahlregister (221-3...221-G; 321-3...321-G) analog zur Adressiereinheit (222-2; 322-2) und zum Auswahlregister (221-2; 321-2) vorgegangen wird,

d) wobei eine Anzahl von Grund-Transformationsvorschriften ($f_1$..$f_A$ ; $f^{-1}_1$..$f^{-1}_A$) vorgegeben wird,

e) wobei der vom letzten Zeigerwert ($j_G$) der Adressiereinheit (222-G ; 322-G) adressierte Wert ($\Phi_G$) des letzten Auswahlregisters (221-G; 321-G) zur Auswahl der Grund-Transformationsvorschriften ($f_1$..$f_A$; $f^{-1}_1$..$f^{-1}_A$) herangezogen wird,

f) wobei zur Auswahl einer Mehrzahl von Grund-Transformationsvorschriften ($f_1$..$f_A$ ; $f^{-1}_1$..$f^{-1}_A$) jeweils das Register $\Phi_0$ nach vorgegebenen Kriterien abgeändert, erhöht, verringert, inkrementiert oder dekrementiert, wird und die Schritte a) bis e) erneut durchgeführt werden, und

g) ein Datenwert, ein zu verschlüsselndes Byte ($b_i$) oder ein zu entschlüsselndes Byte ($c_i$), angegeben wird und die ausgewählte Transformationsvorschrift ($g_i$; $g^{-1}_i$) auf diesen Datenwert angewendet wird, die mehreren ausgewählten Grund-Transformationsvorschriften ($f_{i,1}$..$f_{i,T}$ ; $f^{-1}_{i,1}$..$f^{-1}_{i,T}$) hintereinander, im Falle der Verschlüsselung in der Reihenfolge ihrer Auswahl oder im Falle der Entschlüsselung entgegen der Reihenfolge ihrer Auswahl, auf diesen Datenwert angewendet werden und das Ergebnis der Anwendung zur Verfügung gehalten wird, **dadurch gekennzeichnet, dass** abhängig von am Eingang (224; 324) anliegenden Werten ($b_i$, $c_i$, $\rho$), einem zu verschlüsselnden Byte ($b_i$) und/oder einem verschlüsselten Byte ($c_i$) und/oder Zufallszahlen ($\rho$) eines der Auswahlregister (221; 321) abgeändert wird, und zwei in den Auswahlregistern (221; 321) abgespeicherte Werte miteinander vertauscht werden,

- wobei der Index des einen Wertes eine Reihe von vorgegebenen Werten nach einer vorab vorgegebenen Reihenfolge durchläuft, und zwar durch zyklisches Hochzählen zwischen 1 und A, und der Index des zweiten Wertes durch die am Eingang (224; 324) anliegenden Werte festgelegt wird.

9. Verfahren nach Anspruch 8, **dadurch gekennzeichnet, dass** abhängig von am Eingang (224; 324) anliegenden Werten, insbesondere dem zu verschlüsselnden Byte und/oder dem verschlüsselten Byte und/oder von Zufallszahlen ($\rho$), einer der Werte der weiteren Register ($\delta$) (222) abgeändert wird,

- wobei nach Vorliegen eines externen Triggersignals, insbesondere ausgelöst durch die Anfrage nach einer Grund-Transformation, oder einer Anzahl von Triggersignalen eine Aktualisierung vorgenommen wird,

- wobei bei ersten Aktualisierung jeweils der Wert des ersten weiteren Register ($\delta$) abgeändert wird, und bei jeder weiteren Aktualisierung der Wert des weiteren Registers ($\delta$) der jeweils nächsten Auswahlstufe abgeändert wird, und für den Fall, dass im vorherigen Schritt der Wert des weiteren Registers ($\delta$) der letzten Auswahlstufe abgeändert wurde, wiederum die der Wert des weiteren Registers ($\delta$) der ersten Auswahlstufe abgeändert wird.

10. Verfahren nach einem der Ansprüche 6 oder 9, wobei nach Vorliegen eines externen Triggersignals, insbesondere ausgelöst durch eine vorzunehmende Verschlüsselung oder Entschlüsselung eines Bytes oder einer vorgegebenen Anzahl von Bytes, nach jeder Vertauschung oder nach einer vorgegeben Anzahl von Vertauschungen in einem Auswahlregister (221; 321) zum jeweils nächsten Auswahlregister (221; 321) gewechselt wird und für den Fall, dass im vorherigen Schritt in dem letzten Auswahlregister (221-G; 321-G) bereits die vorgegebene Anzahl von Vertauschungen statt gefunden hat, wieder das erste Auswahlregister (221-1; 321-1) für Abänderungen herangezogen wird.

11. Verfahren nach Anspruch 6 oder 10, **dadurch gekennzeichnet, dass** abhängig von am Eingang (224; 324) anliegenden Werten ($b_i$, $c_i$, $\rho$), insbesondere einem zu verschlüsselnden Byte ($b_i$) und/oder einem verschlüsselten Byte ($c_i$) und/oder Zufallszahlen ($\rho$) die Transformationsvorschriften ($g_i$, $g_i^{-1}$) oder die Grund-Transformationsvorschriften ($f_i$; $f^{-1}_i$) modifiziert werden,

    - wobei die Transformationsvorschriften ($g_i$; $f_i$) zu den Transformationsvorschriften ($g_i^{-1}$; $f_i^{-1}$) invers sind,
    - wobei nach einer vorgegebenen Anzahl von Abänderungen in einer Transformationsvorschrift oder Grund-Transformationsvorschrift (f), zur jeweils nächsten Transformationsvorschrift oder Grund-Transformationsvorschrift (f), gewechselt wird und für den Fall, dass im vorherigen Schritt die letzte Transformationsvorschrift oder Grund-Transformationsvorschrift ($f_A$), abgeändert wurde, wieder die erste Transformationsvorschrift oder Grund-Transformationsvorschrift, für Abänderungen herangezogen wird.

12. Verfahren nach Anspruch 6, **dadurch gekennzeichnet, dass** die Anwendung der Transformationsvorschriften ($g_i$, $g^{-1}_i$) oder Grund-Transformationsvorschriften ($f_i$, $f^{-1}_i$) bei der Verschlüsselung eines Bytes der Rohdaten oder der Entschlüsselung eines verschlüsselten Bytes vorgenommen wird.

13. Computerprogrammprodukt, welches, wenn auf einen Computer geladen und ausgeführt, ausgebildet ist, ein Verfahren gemäß einem der Ansprüche 1, 3, 6 oder 8 durchzuführen.

## Claims

1. Method for creating random numbers, wherein a number H of selection registers (231; 331) are specified with in each case a predetermined number Z of values from 1 to Z in an arbitrary sequence,

a) wherein the first selection register (231-1; 331-1) is preceded by a first addressing unit (232-1; 332-1), which by means of a first indicator value ($k_1$) located in the addressing unit (232-1; 332-1), cyclically incremented in each encryption step, refers to a memory position of the first selection register (231-1; 331-1),
b) wherein the number ($\theta_1$) located at the memory position selected by the first indicator ($k_1$) in the first selection register (231-1; 331-1) is determined and this is coupled with the number located in the second addressing unit (232-2; 332-2), taken modulo Z, and is increased by one and then the new content of the addressing unit (232-2; 332-2) is formed, and the value thereby obtained forms a second indicator value ($k_2$), which is then used to address a memory position in the second selection register (231-2; 331-2),
c) wherein the procedure is repeated for the further addressing units (232-3, ... 232-H; 332-3, ... 332-H) and the further selection registers (231-3 ... 231-H; 331-1.... 331-H) analogously to the addressing unit (232-2; 332-2) and to the selection register (231-2; 331-2), and/or for the further selection registers (231-3, ... 231-H; 331-3, ... 321-H) in each case the number located at the storage position selected by the respective indicator ($k_1$ ... $k_H$) in the respective selection register (231; 331) is determined and is assigned to the in each case next indicator ($k_1$ ... $k_H$) or is added to or subtracted therefrom or is otherwise coupled thereto, and the value of the in each case next indicator ($k_1$ ... $K_H$) is used to address a memory position in the in each case next selection register (231; 331),
d) wherein a number of deterministic partial random number generators (233-1... 233-Z, 333-1 ... 333-Z) is specified,
e) wherein the value ($\theta_H$) of the last selection register (231-H; 331-H) addressed by the last indicator value ($k_H$) of the addressing unit (232-H; 332-H) is used to select the partial random number generator (233-1... 233-Z, 333-1 ... 333-Z),
f) wherein in order to select a plurality of random number generators in each case the first indicator ($k_1$) is modified, increased, reduced, incremented or decremented according to specified criteria, and the steps a) to e) are repeated, and
g) a random number is created with the in each case selected partial random number generator (233; 333) and is made available,
**characterised in that** depending on the values ($b_i$, $c_i$, $\rho_i$) present at the input (234; 334), a byte ($b_i$) to be encrypted and/or an encrypted byte ($c_i$) and/or random numbers ($\rho_i$), one of the selection registers (231; 331) is changed, and two values stored in the selection registers (231;

331) are exchanged,

- wherein the index of one value runs through a series of predetermined values according to a predetermined sequence, and specifically by cyclical incrementing between 1 and Z, and the index of the second value is determined by the values present at the input (234; 334).

2. Method according to claim 1, **characterised in that** depending on the values present at the input (234; 334), in particular on the byte to be encrypted and/or the encrypted byte and/or random numbers ($\rho$), the value of one of the addressing units (232; 332) is changed,

- wherein these values are coupled to the value located in the respective addressing unit (232; 332), the result is preferably then taken modulo Z and is increased by one, and the value is then assigned to the respective addressing unit (232),

- wherein if necessary after the presence of an external trigger signal, in particular triggered by an encryption or decryption of one or a predetermined number of bytes to be carried out, in each case the value of the next addressing unit is changed, and in the event that in the previous step the value of the last addressing unit (232-H; 332-H) was changed, the first addressing unit (232-1; 332-1) is again changed.

3. Method for creating random numbers, wherein a number H of selection registers (231; 331) is specified with in each case a predetermined number Z of values from 1 to Z in an arbitrary sequence,

a) wherein the first selection register (231-1; 331-1) is preceded by a first addressing unit (232-1; 332-1), which by means of a value ($\theta_0$) cyclically incremented in each encryption step and also by means of a further register ($\eta_1$) depending on the internal state of the random number generator, determines a first indicator value ($k_1$) on the basis of a previously specified arithmetic operation (**Z**), that refers to a memory position of the first selection register (231-1; 331-1),

b) wherein the number ($\theta_1$) located at the storage position selected by the first indicator ($k_1$) in the first selection register (231-1; 331-1) is determined and a second addressing unit (232-2, 332-2) by means of this number ($\theta_1$) as well as by means of a further register ($\eta_2$) depending on the internal state of the random number generator determines a second indicator value ($k_2$) based on the previously specified arithmetic operation (**Z**), which refers to a memory position of the second selection register (231-2; 331-2), and which is then used to address a memory position in the second selection register (231-2; 331-2),

c) wherein for the further addressing units (232-3, ... 232-H; 332-3, ... 332-H) and the further selection registers (231-3 ... 231-H; 331-1 ... 331-H) the procedure is repeated analogously to the addressing unit (232-2; 332-2) and to the selection register (231-2; 331-2),

d) wherein a number of deterministic partial random number generators (233-1... 233-Z, 333-1 ... 333-Z) is specified,

e) wherein the value ($\theta_H$) of the last selection register (231-H; 331-H) addressed by the last indicator value ($k_H$) of the addressing unit (232-H; 332-H) is used to select the partial random number generator (233-1 ... 233-Z, 333-1 ... 333-Z),

f) wherein for the selection of a plurality of partial random number generators (233-1 ... 233-Z, 333-1 ... 333-Z) in each case the register $\theta_o$ is changed, increased, decreased, incremented or decremented according to specified criteria, and the steps a) to e) are repeated, and

g) a random number is created with the in each case selected partial random number generator (233; 333) and is made available,

**characterised in that** depending on the values ($b_i$, $c_i$, $\rho_i$) present at the input (234; 334), a byte ($b_i$) to be encrypted and/or an encrypted byte ($c_i$) and/or random numbers ($\rho_i$), one of the selection registers (231; 331) is changed, and two values stored in the selection registers (231; 331) are exchanged,

- wherein the index of one value runs through a series of predetermined values according to a predetermined sequence, and specifically by cyclical incrementing between 1 and Z, and the index of the second value is determined by the values present at the input (234; 334).

4. Method according to claim 3, **characterised in that** depending on values (234; 334) present at the input, in particular on the byte to be encrypted and/or the encrypted byte and/or random numbers ($\rho$), one of the values of the further registers ($\eta$) is changed,

- wherein if necessary after the presence of an external trigger signal, in particular triggered by an encryption or decryption to be performed, or a predetermined number of trigger signals, an update is carried out,

- wherein the value of the first further register ($\eta$) is changed in each case with the first update, and the value of the further register ($\eta$) of the in each case next selection stage is changed with each further update, and in the event that in the previous step the value of the further register ($\eta$) of the last selection stage was changed, the value of the further register ($\eta$) of the first selection stage is in turn changed.

5. Method according to any one of claims 1 or 4, wherein after the presence of an external trigger signal, in particular triggered by an encryption or decryption of a byte or a specified number of bytes to be performed, after each exchange or after a specified number of exchanges in a selection register (231; 331) a switch is made to the in each case next selection register (231; 331), and in the event that in the previous step in the last selection register (231-H; 331-H) the specified number of exchanges has already taken place, the first selection registers (231-1; 331-1) is again used for changes.

6. Method for determining and applying a transformation rule ($g_i$, $g_i^{-1}$) for encryption methods or decryption methods, wherein a number G of selection registers (221; 321) is specified in an arbitrary sequence with a predetermined number A of values 1 to A, wherein in each selection register (221; 321) in each case a number of numbers representing individual memory positions in the respective selection register is specified, wherein each number representing a memory position is in each case contained once in the selection register (221; 321),

a) wherein the first selection register (221-1; 321-1) is preceded by a first addressing unit (222-1; 322-1), which by means of a first indicator value ($j_1$) located in a memory position of the first selection register (221-1; 321-1), cyclically incremented in each encryption step, refers to a memory position of the first selection register (221-1; 321-1),
b) wherein the number ($\Phi_1$) located in the first addressing unit (221-1; 321-1) at the memory position selected by the first indicator ($j_1$,) is determined and this is coupled with the number located in the second selection register (222-2; 322-2), taken modulo A, and is increased by one, and then the new content of the addressing unit (222-2; 322-2) is formed, and the value thereby obtained forms a second indicator value ($j_2$), which is then used to address a memory position in the second selection register (221-2; 321-2),
c) wherein for the further addressing units (222-3, ... 222-G; 322-3, ... 322-G) and the further selection registers (221-3 ... 221-G; 321-1 ... 321-G) the procedure is adopted analogously to the addressing unit (222-2; 322-2) and to the selection register (221-2; 321-2), and/or
that for the further selection registers (221-3, ... 221-G; 321-3, ... 321-G) in each case the number located in the respective memory register (221; 321) at the position selected by the respective indicator ($j_1$... $j_G$) in the respective selection register (221; 321) is determined and is assigned to the in each case next indicator ($j_1$ ... $j_G$) or is added to or subtracted therefrom, and the value of the in each case next indicator ($j_1$ ... $j_G$) is used to address a memory position in the in each case next selection register (221; 321),
d) wherein a number of basic transformation rules ($f_1$ ..$f_A$; $f^{-1}_1$ ..$f^{-1}_A$) are specified,
e) wherein the value ($\Phi_G$) of the last selection register (221-G; 321-G) addressed by the last indicator value ($j_G$) of the addressing unit (222-G; 322-G) is used to select the basic transformation rules ($f_1$ ..$f_A$; $f^{-1}_1$ ..$f^{-1}_A$),
f) wherein for the selection of a plurality of basic transformation rules ($f_1$..$f_A$; $f^{-1}_1$..$f^{-1}_A$) in each case the first indicator ($j_1$) is changed, increased, decreased, incremented or decremented according to specified criteria, and the steps a) to e) are repeated, and
g) a data value, a byte ($b_i$) to be encrypted or a byte ($c_i$) to be decrypted is specified and the selected transformation rule ($g_i$; $g^{-1}_1$) is applied to the data value, the multiple selected basic transformation rules ($f_{i,1}$ ..$f_{i,T}$; $f^{-1}_{i,1}$ ..$f^{-1}_{i,T}$) are applied successively to the data value, in the case of encryption in the order of their selection or in the case of decryption in the opposite order of their selection, and the result of the application is made available,
**characterised in that** depending on the values ($b_i$, $c_i$, $\rho$) present at the input (224; 324), a byte to be encrypted ($b_i$) and/or an encrypted byte ($c_i$) and/or random numbers ($p$), one of one of the selection registers (221; 321) is changed, and values stored in the selection registers (221; 321) are exchanged,

- wherein the index of one value runs through a series of predetermined values according to a predetermined sequence, and specifically by cyclical incrementing between 1 and A, and the index of the second value is determined by the values present at the input (224; 324).

7. Method according to claim 6, **characterised in that** depending on the values present at the input (224; 324), in particular on the byte to be encrypted and/or the encrypted byte and/or random numbers ($\rho$), the value of one of the addressing units (222; 322) is changed,

- wherein these values are coupled to the value located in the respective addressing unit (222; 322), preferably the result is then taken modulo A and is increased by one, and the value is then assigned to the respective addressing unit (222; 322),

- wherein if necessary after the presence of an external trigger signal, in particular triggered by encryption or decryption of one or a predetermined number of bytes, in each case the next addressing unit is changed and in the event that in the previous step the last addressing unit (222-G; 322-G) was changed, the first addressing unit (222-1; 322-1) is again changed.

8. Method for determining and applying a transformation rule ($g_i$, $g_i^{-1}$) for encryption methods or decryption methods, wherein a number G of selection registers (221; 321) are specified with in each case a predetermined number A of values 1 to A in an arbitrary order, wherein in each selection register (221; 321) in each case a number of numbers representing individual memory positions in the respective selection register (221; 321) is specified, wherein each number representing a storage position is in each case contained once in the selection register (221; 321),

a) wherein the first selection register (221-1; 3231-1) is preceded by a first addressing unit (222-1; 322-1), which by means of a value of a register $\Phi_0$ incremented cyclically in each encryption step and also by means of a further register ($\delta_1$) depending on the internal state of the random generator, determines a first indicator value ($j_1$) on the basis of a previously specified arithmetic operation (**A**), which refers to a memory position of the first selection register (221-1; 321-1),

b) wherein the number ($\Phi_1$) located in the first selection register (221-1; 321-1) at the memory position selected by the first indicator ($j_1$) is determined, and a second addressing unit (222-2, 322-2) by means of this number ($\theta_1$) and also by means of a further register ($\delta_2$) depending on the internal state of the random generator determines a second indicator value ($j_2$) on the basis of the previously specified arithmetic operation (**A**), which refers to a memory position of the second selection register (221-2; 321-2), and which is then used to address a memory position in the second selection register (221-2; 321-2),

c) wherein for the further addressing units (222-3, ... 222-G; 322-3, ... 322-G) and the further selection registers (221-3 ... 221-G; 321-3 ... 321-G) the procedure is adopted analogously to the addressing unit (222-2; 322-2) and to the selection register (221-2; 321-2)

d) wherein a number of basic transformation rules ($f_1$ .. $f_A$; $f^{-1}_1$ .. $f^{-1}_A$) are specified,

e) wherein the value ($\theta_G$) of the last selection register (221-G; 321-G) addressed by the last indicator value ($j_G$) of the addressing unit (222-G; 322-G) is used to select the basic transformation rules ($f_1$ .. $f_A$; $f^{-1}_1$ .. $f^{-1}_A$),

f) wherein in order to select a plurality of basic transformation rules ($f_1$ .. $f_A$; $f^{-1}_1$ .. $f^{-1}_A$) in each case the register $\Phi_0$ is changed, increased reduced, incremented or decremented according to specified criteria, and the steps a) to e) are repeated, and

g) a data value, a byte ($b_i$) to be encrypted or a byte ($c_i$) to be decrypted, is specified and the selected transformation rule ($g_i$; $g^{-1}_1$) is applied to this data value, the multiple selected basic transformation rules ($f_{i,1}$ .. $f_{i,T}$; $f^{-1}_{i,1}$ .. $f^{-1}_{i,T}$) are applied successively, in the case of encryption in the order of their selection or in the case of decryption in the opposite order of their selection, and the result of the application is made available, **characterised in that** depending on the values ($b_i$, $c_i$, $\rho$) present at the input (224; 324), a byte ($b_i$) to be encrypted and/or an encrypted byte ($c_i$) and/or random numbers ($\rho$), one of one of the selection registers (221; 321) is changed, and two values stored in the selection registers (221; 321) are exchanged,

- wherein the index of one value runs through a series of predetermined values according to a predetermined sequence, and specifically by cyclical incrementing between 1 and A, and the index of the second value is determined by the values present at the input (224; 324).

9. Method according to claim 8, **characterised in that** depending on values (224; 324) present at the input, in particular the byte to be encrypted and/or the encrypted byte and/or random numbers ($\rho$), one of the values of the further registers ($\delta$) (222) is changed,

- wherein after the presence of an external trigger signal, in particular triggered by the request for a basic transformation, or a number of trigger signals, an update is performed
- wherein in the first update in each case the value of the first further register ($\delta$) is changed, and in each further update the value of the further register ($\delta$) of the in each case next selection stage is changed, and in the event that in the previous step the value of the other register ($\delta$) of the last selection stage was changed, the value of the further register ($\delta$) of the first selection stage is again changed.

**10.** Method according to any one of claims 6 or 9, wherein after the presence of an external trigger signal, in particular triggered by an encryption or decryption of a byte or of a predetermined number of bytes to be carried out, after each exchange or after a specified number of exchanges a switch is made in a selection register (221; 321) to the in each case next selection register (221; 321), and in the event that in the previous step in the last selection register (221-G; 321-G) the specified number of exchanges has already taken place, the first selection register (221-1; 321-1) is used again for changes.

**11.** Method according to claim 6 or 10, **characterised in that** depending on the values $(b_i, c_i, \rho)$ present at the input (224; 324), in particular a byte to be encrypted $(b_i)$ and/or an encrypted byte $(c_i)$ and/or random numbers $(\rho)$, the transformation rules $(g_i, g_i^{-1})$ or the basic transformation rules $(f_i; f^{-1}_i)$ are modified,

- wherein the transformation rules $(g_i; f_i)$ are inverse to the transformation rules $(g_i^{-1}; f_i^{-1})$,
- wherein after a predetermined number of changes in a transformation rule or basic transformation rule (f), a switch is made to the in each case next transformation rule or basic transformation rule (f), and in the event that the last transformation rule or basic transformation rule $(f_A)$ was changed in the previous step, the first transformation rule or basic transformation rule is used again for changes.

**12.** Method according to claim 6, **characterised in that** the application of the transformation rules $(g_i, g^{-1}_i)$ or basic transformation rules $(f_i, f^{1}_1)$ is carried out in the encryption of a byte of the raw data or in the decryption of an encrypted byte.

**13.** Computer program which, when uploaded and run on a computer, is designed to carry out a method according to one of claims 1, 3, 6 or 8.

**Revendications**

**1.** Procédé de génération de nombres aléatoires, dans lequel un nombre H de registres de sélection (231 ; 331) avec respectivement un nombre Z prédéfini de valeurs de 1 à Z sont prédéfinis dans un ordre quelconque,

a) dans lequel une première unité d'adressage (232-1 ; 332-1), pointant vers une position de mémoire du premier registre de sélection (231-1 ; 331-1) au moyen d'une première valeur d'indicateur $(k_1)$ située dans l'unité d'adressage (232-1 ; 332-1) et incrémentée de manière cyclique à chaque étape de codage, est commutée en amont du premier registre de sélection (231-1 ; 331-1),

b) dans lequel le nombre $(\theta_1)$ situé dans le premier registre de sélection (231-1 ; 331-1) au niveau de la position de mémoire sélectionnée par le premier pointeur $(k_1)$ est déterminé et est lié au nombre situé dans la seconde unité d'adressage (232-2 ; 332-2), le reste Z est retenu et augmenté de un, puis le nouveau contenu de l'unité d'adressage (232-2 ; 332-2) est formé, et la valeur ainsi obtenue forme une seconde valeur de pointeur $(k_2)$, qui est ensuite extraite pour l'adressage d'une position de mémoire dans le second registre de sélection (231-2 ; 331-2),

c) dans lequel on procède pour les unités d'adressage (232-3,... 232-H ; 332-3,... 332-H) supplémentaires et les registres de sélection (231-3... 231-H ; 331-1... 331-H) supplémentaires de la même manière que pour l'unité d'adressage (232-2 ; 332-2) et pour le registre de sélection (231-2 ; 331-2), et/ou le nombre situé dans le registre de sélection (231; 331) respectif au niveau de la position de mémoire sélectionnée par le pointeur $(k_1 ... k_H)$ respectif est déterminé respectivement pour les registres de sélection (231-3, ... 231-H ; 331-3, ... 321-H) supplémentaires et est affecté au pointeur $(k_1 ... k_H)$ respectivement suivant ou ajouté à celui-ci ou retranché de celui-ci ou lié d'une autre manière, et la valeur du pointeur $(k_1 ... k_H)$ respectivement suivant est extraite pour l'adressage d'une position de mémoire dans le registre de sélection (231 ; 331) respectivement suivant,

d) dans lequel un certain nombre de sous-générateurs déterministes de nombres aléatoires (233-1 ... 233-Z, 333-1 ... 333-Z) sont prédéfinis,

e) dans lequel la valeur $(\theta_H)$ du dernier registre de sélection (231-H ; 331-H), adressée par la dernière valeur de pointeur $(k_H)$ de l'unité d'adressage (232-H ; 332-H) est extraite pour la sélection du sous-générateur de nombres aléatoires (233-1 ... 233-Z, 333-1... 333-Z),

f) dans lequel respectivement le premier pointeur $(k_1)$ est modifié, augmenté, diminué, incrémenté ou décrémenté selon des critères prédéfinis pour la sélection d'une pluralité de générateurs de nombres aléatoires, et les étapes a) à e) sont réalisées de manière répétée, et

g) un nombre aléatoire est généré par le biais du sous-générateur de nombres aléatoires (233 ; 333) respectivement sélectionné, et tenu à disposition,

**caractérisé en ce qu'**un des registres de sélection (231 ; 331) est modifié en fonction de valeurs $(b_i, c_i, \rho_i)$ s'appliquant à l'entrée (234 ; 334), d'un octet à coder $(b_i)$ et/ou d'un octet codé $(c_i)$ et/ou de nombres aléatoires $(\rho_i)$, et deux valeurs

mémorisées dans les registres de sélection (231 ; 331) sont permutées,

- dans lequel l'index de la première des valeurs suit une série de valeurs prédéfinies selon un ordre défini au préalable, à savoir par comptage cyclique entre 1 et Z, et l'index de la deuxième des valeurs est fixé grâce aux valeurs s'appliquant à l'entrée (234 ; 334).

2. Procédé selon la revendication 1, **caractérisé en ce que** la valeur d'une des unités d'adressage (232 ; 332) est modifiée en fonction de valeurs s'appliquant à l'entrée (234 ; 334), notamment de l'octet à coder et/ou de l'octet codé et/ou de nombres aléatoires ($\rho$),

- dans lequel lesdites valeurs sont liées à la valeur située dans l'unité d'adressage (232 ; 332) respective, le reste Z est ensuite de manière préférée retenu du résultat et augmenté de un, et la valeur est ensuite affectée à l'unité d'adressage (232) respective,

- dans lequel le cas échéant en vertu de la présence d'un signal de déclenchement externe, notamment déclenché par un codage ou un décodage à effectuer d'un octet ou d'un nombre prédéfini d'octets, la valeur de l'unité d'adressage suivante est modifiée et dans le cas où la valeur de la dernière unité d'adressage (232-H ; 332-H) a été modifiée à l'étape précédente, la première unité d'adressage (232-1 ; 332-1) est à nouveau modifiée.

3. Procédé de génération de nombres aléatoires, dans lequel un nombre H de registres de sélection (231 ; 331) avec respectivement un nombre Z prédéfini de valeurs de 1 à Z sont prédéfinis dans un ordre quelconque,

a) dans lequel une première unité d'adressage (232-1 ; 332-1) qui détermine, sur la base d'une opération de calcul (*Z*) définie au préalable et au moyen d'une valeur ($\theta_0$) incrémentée de manière cyclique à chaque étape de codage ainsi que d'un autre registre ($\eta_1$) dépendant de l'état interne du générateur aléatoire, une première valeur de pointeur ($k_1$) pointant vers une position de mémoire du premier registre de sélection (231-1 ; 331-1), est commutée en amont du premier registre de sélection (231-1; 331-1),

b) dans lequel le nombre ($\theta_1$) situé dans le premier registre de sélection (231-1 ; 331-1) au niveau de la position de mémoire sélectionnée par le premier pointeur ($k_1$) est déterminé et une seconde unité d'adressage (232-2, 332-2) détermine, sur la base de l'opération de calcul (*Z*) définie au préalable et au moyen dudit nombre

($\theta_1$) ainsi qu'au moyen d'un autre registre ($\eta_2$) dépendant de l'état interne du générateur aléatoire, une seconde valeur de pointeur ($k_2$) pointant vers une position de mémoire du second registre de sélection (231-2 ; 331-2) et extraite ensuite pour l'adressage d'une position de mémoire dans le second registre de sélection (231-2 ; 331-2),

c) dans lequel on procède pour les unités d'adressage (232-3, ... 232-H ; 332-3, ... 332-H) supplémentaires et les registres de sélection (231-3 ... 231-H ; 331-1 ... 331-H) supplémentaires de la même manière que pour l'unité d'adressage (232-2 ; 332-2) et pour le registre de sélection (231-2 ; 331-2),

d) dans lequel un certain nombre de sous-générateurs déterministes de nombres aléatoires (233-1 ... 233-Z, 333-1 ... 333-Z) sont prédéfinis,

e) dans lequel la valeur ($\theta_H$) du dernier registre de sélection (231-H ; 331-H), adressée par la dernière valeur de pointeur ($k_H$) de l'unité d'adressage (232-H ; 332-H) est extraite pour la sélection du sous-générateur de nombres aléatoires (233-1 ... 233-Z, 333-1... 333-Z),

f) dans lequel respectivement le registre $\theta_0$ est modifié, augmenté, diminué, incrémenté ou décrémenté selon des critères prédéfinis pour la sélection d'une pluralité de sous-générateurs de nombres aléatoires (233-1 ... 233-Z, 333-1 ... 333-Z), et les étapes a) à e) sont réalisées de manière répétée, et

g) un nombre aléatoire est généré par le biais du sous-générateur de nombres aléatoires (233 ; 333) respectivement sélectionné, et tenu à disposition,

**caractérisé en ce qu'**un des registres de sélection (231 ; 331) est modifié en fonction de valeurs ($b_i$, $c_i$, $\rho_i$) s'appliquant à l'entrée (234 ; 334), d'un octet à coder ($b_i$) et/ou d'un octet codé ($c_i$) et/ou de nombres aléatoires ($\rho_i$), et deux valeurs mémorisées dans les registres de sélection (231 ; 331) sont permutées,

- dans lequel l'index de la première des valeurs suit une série de valeurs prédéfinies selon un ordre défini au préalable, à savoir par comptage cyclique entre 1 et Z, et l'index de la deuxième des valeurs est fixé grâce aux valeurs s'appliquant à l'entrée (234 ; 334).

4. Procédé selon la revendication 3, **caractérisé en ce qu'**une des valeurs des registres de sélection ($\eta$) supplémentaires est modifiée en fonction de valeurs s'appliquant à l'entrée (234 ; 334), notamment de l'octet à coder et/ou de l'octet codé et/ou de nombres aléatoires ($\rho$),

- dans lequel une mise à jour est éventuellement effectuée en vertu de la présence d'un signal de déclenchement externe, notamment déclenché par un codage ou un décodage à effectuer, ou d'un nombre prédéfini de signaux de déclenchement,

- dans lequel respectivement la valeur du premier registre ($\eta$) supplémentaire est modifiée dans le cas d'une première mise à jour, et la valeur du registre ($\eta$) supplémentaire du niveau de sélection respectivement suivant est modifiée pour chaque mise à jour supplémentaire, et, dans le cas où la valeur du registre ($\eta$) supplémentaire du dernier niveau de sélection a été modifiée à l'étape précédente, la valeur du registre ($\eta$) supplémentaire du premier niveau de sélection est à nouveau modifiée.

5. Procédé selon la revendication 1 ou 4, dans lequel, en vertu de la présence d'un signal de déclenchement externe, notamment déclenché par un codage ou un décodage à effectuer d'un octet ou d'un nombre prédéfini d'octets, et après chaque permutation ou après un nombre prédéfini de permutations dans un registre de sélection (231 ; 331), on change pour le registre de sélection (231 ; 331) respectivement suivant, et dans le cas où le nombre prédéfini de permutations a déjà eu lieu à l'étape précédente dans le dernier registre de sélection (231-H ; 331-H), le premier registre de sélection (231-1 ; 331-1) est extrait pour des modifications.

6. Procédé de détermination et d'application d'une prescription de transformation ($g_i$, $g_i^{-1}$) pour un procédé de codage ou un procédé de décodage, dans lequel un nombre G de registres de sélection (221 ; 321) avec respectivement un nombre A prédéfini de valeurs de 1 à A sont prédéfinis dans un ordre quelconque, dans lequel respectivement un certain nombre de nombres représentant des positions de mémoire individuelles dans un registre de sélection (221 ; 321) respectif sont prédéfinis dans chaque registre de sélection (221 ; 321), dans lequel chaque nombre représentant une position de mémoire est contenu respectivement une fois dans le registre de sélection (221 ; 321),

a) dans lequel une première unité d'adressage (222-1; 322-1), pointant vers une position de mémoire du premier registre de sélection (221-1 ; 321-1) au moyen d'une première valeur d'indicateur ($j_1$) située dans l'unité d'adressage (222-1 ; 322-1) et incrémentée de manière cyclique à chaque étape de codage, est commutée en amont du premier registre de sélection (221-1 ; 321-1),

b) dans lequel le nombre ($\Phi_1$) situé dans le premier registre de sélection (221-1 ; 321-1) au niveau de la position de mémoire sélectionnée par le premier pointeur ($j_1$) est déterminé et ledit nombre est lié au nombre situé dans la seconde unité d'adressage (222-2 ; 322-2), le reste A est retenu et augmenté de un, puis le nouveau contenu de l'unité d'adressage (222-2 ; 322-2) est formé, et la valeur ainsi obtenue forme une seconde valeur de pointeur ($j_2$), qui est ensuite extraite pour l'adressage d'une position de mémoire dans le second registre de sélection (221-2 ; 321-2),

c) dans lequel on procède pour les unités d'adressage (222-3,... 222-G ; 322-3,... 322-G) supplémentaires et les registres de sélection (221-3... 22-G ; 321-1... 321-G) supplémentaires de la même manière que pour l'unité d'adressage (222-2 ; 322-2) et pour le registre de sélection (221-2 ; 321-2), et/ou le nombre situé dans le registre de sélection (221 ; 321) respectif au niveau de la position de mémoire sélectionnée par le pointeur ($j_1$ ... $j_G$) respectif est déterminé respectivement pour les registres de sélection (221-3, ... 221-G ; 321-3, ... 321-G) supplémentaires et est affecté au pointeur ($j_1$ ... $j_G$) respectivement suivant ou ajouté à celui-ci ou retranché de celui-ci, et la valeur du pointeur ($j_1$ ... $j_G$) respectivement suivant est extraite pour l'adressage d'une position de mémoire dans le registre de sélection (221 ; 321) respectivement suivant,

d) dans lequel un certain nombre de prescriptions de transformation de base ($f_1$ ... $f_A$ ; $f^{-1}_1$ ... $f^{-1}_A$) sont prédéfinies,

e) dans lequel la valeur ($\Phi_G$) du dernier registre de sélection (221-G ; 321-G), adressée par la dernière valeur de pointeur ($j_G$) de l'unité d'adressage (222-G ; 322-G) est extraite pour la sélection des prescriptions de transformation de base ($f_1$ ... $f_A$ ; $f^{-1}_1$ ... $f^{-1}_A$),

f) dans lequel respectivement le premier pointeur ($j_1$) est modifié, augmenté, diminué, incrémenté ou décrémenté selon des critères prédéfinis pour la sélection d'une pluralité de prescriptions de transformation de base ($f_1$ ... $f_A$ ; $f^{-1}_1$ ... $f^{-1}_A$), et les étapes a) à e) sont réalisées de manière répétée, et

g) une valeur de donnée, un octet ($b_i$) à coder ou un octet ($c_i$) à décoder est fourni(e) et la prescription de transformation ($g_i$; $g^{-1}_i$) sélectionnée est appliquée à la valeur de donnée, les plusieurs prescriptions de transformation de base ($f_{i,1}$ .. $f_{i,T}$; $f^{-1}_{i,1}$, .. $f^{-1}_{i,T}$) sélectionnées sont appliquées de manière successive à la valeur de donnée, dans l'ordre de leur sélection dans le cas du codage ou contrairement à l'ordre de leur sélection dans le cas du décodage, et le résultat de l'application est tenu à disposition,

**caractérisé en ce qu'**un des registres de sélection (221 ; 321) est modifié en fonction de valeurs ($b_i$, $c_i$, $\rho$) s'appliquant à l'entrée (224 ; 324), d'un octet à coder ($b_i$) et/ou d'un octet codé ($c_i$) et/ou de nombres aléatoires ($\rho$), et deux valeurs mémorisées dans les registres de sélection (221 ; 321) sont permutées,

- dans lequel l'index de la première des valeurs suit une série de valeurs prédéfinies selon un ordre défini au préalable, à savoir par comptage cyclique entre 1 et A, et l'index de la deuxième des valeurs est fixé grâce aux valeurs s'appliquant à l'entrée (224 ; 324).

7. Procédé selon la revendication 6, **caractérisé en ce que** la valeur d'une des unités d'adressage (222 ; 322) est modifiée en fonction de valeurs s'appliquant à l'entrée (224 ; 324), notamment de l'octet à coder et/ou de l'octet codé et/ou de nombres aléatoires ($\rho$),

- dans lequel lesdites valeurs sont liées à la valeur située dans l'unité d'adressage (222 ; 322) respective, le reste A est ensuite de manière préférée retenu du résultat et augmenté de un, et la valeur est ensuite affectée à l'unité d'adressage (222 ; 322) respective,
- dans lequel, le cas échéant en vertu de la présence d'un signal de déclenchement externe, notamment déclenché par un codage ou un décodage à effectuer d'un octet ou d'un nombre prédéfini d'octets, l'unité d'adressage suivante est respectivement modifiée et, dans le cas où la dernière unité d'adressage (222-G ; 322-G) a été modifiée à l'étape précédente, la première unité d'adressage (222-1 ; 322-1) est à nouveau modifiée.

8. Procédé de détermination et d'application d'une prescription de transformation ($g_i$, $g_i^{-1}$) pour un procédé de codage ou un procédé de décodage, dans lequel un nombre G de registres de sélection (221 ; 321) avec respectivement un nombre A prédéfini de valeurs de 1 à A sont prédéfinis dans un ordre quelconque, dans lequel respectivement un certain nombre de nombres représentant des positions de mémoire individuelles dans le registre de sélection (221 ; 321) respectif sont prédéfinis dans chaque registre de sélection (221 ; 321), dans lequel chaque nombre représentant une position de mémoire est contenu respectivement une fois dans le registre de sélection (221 ; 321),

a) dans lequel une première unité d'adressage (222-1 ; 322-1) qui détermine, sur la base d'une opération de calcul (**A**) définie au préalable et au moyen d'une valeur, incrémentée de manière cyclique à chaque étape de codage, d'un registre $\Phi_0$ ainsi que d'un autre registre ($\delta_1$) dépendant de l'état interne du générateur aléatoire, une première valeur de pointeur ($j_1$) pointant vers une position de mémoire du premier registre de sélection (221-1 ; 321-1), est commutée en amont du premier registre de sélection (221-1; 3231-1),
b) dans lequel le nombre ($\Phi_1$) situé dans le premier registre de sélection (221-1 ; 321-1) au niveau de la position de mémoire sélectionnée par le premier pointeur ($j_1$) est déterminé et une seconde unité d'adressage (222-2, 322-2) détermine, sur la base de l'opération de calcul (**A**) définie au préalable et au moyen dudit nombre ($\Phi_1$) ainsi qu'au moyen d'un autre registre ($\delta_2$) dépendant de l'état interne du générateur aléatoire, une seconde valeur de pointeur ($j_2$) pointant vers une position de mémoire du second registre de sélection (221-2 ; 321-2) et extraite ensuite pour l'adressage d'une position de mémoire dans le second registre de sélection (221-2 ; 321-2),
c) dans lequel on procède pour les unités d'adressage (222-3, ... 232-G ; 322-3, ... 322-G) supplémentaires et les registres de sélection (221-3 ... 221-G ; 321-1 ... 321-G) supplémentaires de la même manière que pour l'unité d'adressage (222-2 ; 322-2) et pour le registre de sélection (221-2 ; 321-2),
d) dans lequel un certain nombre de prescriptions de transformation de base ($f_1 ... f_A$ ; $f^{-1}_1 ... f^{-1}_A$) sont prédéfinies,
e) dans lequel la valeur ($\Phi_G$) du dernier registre de sélection (221-G ; 321-G), adressée par la dernière valeur de pointeur ($j_G$) de l'unité d'adressage (222-G ; 322-G) est extraite pour la sélection des prescriptions de transformation de base ($f_1 ... f_A$ ; $f^{-1}_1 ... f^{-1}_A$),
f) dans lequel le registre $\Phi_0$ est respectivement modifié, augmenté, diminué, incrémenté ou décrémenté selon des critères prédéfinis pour la sélection d'une pluralité de prescriptions de transformation de base ($f_1 .. f_A$; $f^{-1}_1 ... f^{-1}_A$), et les étapes a) à e) sont réalisées de manière répétée, et
g) une valeur de donnée, un octet ($b_i$) à coder ou un octet ($c_i$) à décoder est fourni(e) et la prescription de transformation ($g_i$ ; $g^{-1}_i$) sélectionnée est appliquée à ladite valeur de donnée, les plusieurs prescriptions de transformation de base ($f_{i,1} .. f_{i,T}$ ; $f^{-1}_{i,1} .. f^{-1}_{i,T}$) sélectionnées sont appliquées de manière successive à ladite valeur de donnée, dans l'ordre de leur sélection dans le cas du codage ou contrairement à l'ordre de leur sélection dans le cas du décodage, et le résultat de l'application est tenu à disposition, **caractérisé en ce qu'**un des registres de sélection (221 ; 321) est modifié en fonction de valeurs

$(b_i, c_i, \rho)$ s'appliquant à l'entrée (224 ; 324), d'un octet à coder $(b_i)$ et/ou d'un octet codé $(c_i)$ et/ou de nombres aléatoires $(\rho)$, et deux valeurs mémorisées dans les registres de sélection (221 ; 321) sont permutées,

- dans lequel l'index de la première des valeurs suit une série de valeurs prédéfinies selon un ordre défini au préalable, à savoir par comptage cyclique entre 1 et A, et l'index de la deuxième des valeurs est fixé grâce aux valeurs s'appliquant à l'entrée (224 ; 324).

9. Procédé selon la revendication 8, **caractérisé en ce qu'**une des valeurs des registres de sélection $(\delta)$ (222) supplémentaires est modifiée en fonction de valeurs s'appliquant à l'entrée (224 ; 324), notamment de l'octet à coder et/ou de l'octet codé et/ou de nombres aléatoires,

- dans lequel une mise à jour est effectuée en vertu de la présence d'un signal de déclenchement externe, notamment déclenché par une requête de transformation de base, ou d'un certain nombre de signaux de déclenchement,
- dans lequel respectivement la valeur du premier registre $(\delta)$ supplémentaire est modifiée dans le cas d'une première mise à jour, et la valeur du registre $(\delta)$ supplémentaire du niveau de sélection respectivement suivant est modifié pour chaque mise à jour supplémentaire, et, dans le cas où la valeur du registre $(\delta)$ supplémentaire du dernier niveau de sélection a été modifiée à l'étape précédente, la valeur du registre $(\delta)$ supplémentaire du premier niveau de sélection est à nouveau modifiée.

10. Procédé selon la revendication 6 ou 9, dans lequel, en vertu de la présence d'un signal de déclenchement externe, notamment déclenché par un codage ou un décodage à effectuer d'un octet ou d'un nombre prédéfini d'octets, et après chaque permutation ou après un nombre prédéfini de permutations dans un registre de sélection (221 ; 321), on change pour le registre de sélection (221 ; 321) respectivement suivant, et dans le cas où le nombre prédéfini de permutations a déjà eu lieu à l'étape précédente dans le dernier registre de sélection (221-G ; 321-G), le premier registre de sélection (221-1 ; 321-1) est à nouveau extrait pour des modifications.

11. Procédé selon la revendication 6 ou 10, **caractérisé en ce que**
les prescriptions de transformation $(g_i, g_i^{-1})$ ou les prescriptions de transformation de base $(f_i, ; f^{-1}_i)$ sont modifiées en fonction de valeurs $(b_i, c_i, p)$ s'appliquant à l'entrée (224 ; 324), notamment d'un octet à coder et/ou d'un octet codé et/ou de nombres aléatoires $(\rho)$,
dans lequel les prescriptions de transformation $(g_i ; f_i)$ sont inverses par rapport aux prescriptions de transformation $(g_i^{-1} ; f_i^{-1})$,

- dans lequel après un nombre prédéfini de modifications au sein d'une prescription de transformation ou d'une prescription de transformation de base $(f)$, on change pour la prescription de transformation ou à la prescription de transformation de base $(f)$ respectivement suivante, et dans le cas où la dernière prescription de transformation ou prescription de transformation de base $(f_A)$ a été modifiée à l'étape précédente, la première prescription de transformation ou prescription de transformation de base est à nouveau extraite pour des modifications.

12. Procédé selon la revendication 6, **caractérisé en ce que** l'application des prescriptions de transformation $(g_i, g^{-1}_i)$ ou des prescriptions de transformation de base $(f_i, f^{-1}_i)$ est mise en œuvre pour le codage d'un octet des données brutes ou pour le décodage d'un octet codé.

13. Produit programme informatique qui, lorsqu'il est chargé et exécuté sur un ordinateur, est conçu pour mettre en œuvre un procédé selon l'une quelconque des revendications 1, 3, 6 ou 8.

**Fig. 1**

**Fig. 2**

**Fig. 3**

**Fig. 4**

**Fig. 5**

ENCODE          DECODE

$Y_0$

$Y_0$          $Y_0$

$Y_0$

$Y_0$          $Y_0$

$Y'_0$          $Y'_0$

$Y'_0$          $Y'_0$

211          311

**Fig. 6**

ENCODE          DECODE

d = 1 .. n          d = 1 .. n

$S_{20-B}$:  $Y := Y_{d-1}$          $S_{30-B}$:  $Y' := Y'_{d-1}$

i = 1 .. N          i = N .. 1

$S_{21} ... S_{29}$          $S_{31} ... S_{39}$

$S_{20-C}$:  $Y_d := Y$          $S_{30-C}$:  $Y' := Y'_{d-1}$
            $Y := Y_{d-1}$

i = N .. 1          i = 1 .. N

$S_{21} ... S_{29}$          $S_{31} ... S_{39}$

$S_{20-Y}$:  $\{c_1...c_N\} \rightarrow$          $S_{30-Y}$:  $Y'_d := Y'$
                                                    $\{b_1...b_N\} \rightarrow$

CHAINED-
BLOCK

**Fig. 7**

**Fig. 8**

**Fig. 9**

Fig. 10

Fig. 10a

$\mathcal{Z}$ ... steht für eine beliebige Verknüpfung
der beiden Inputwerte zu einem Resultat
mit einem Wert zwischen 1 und Z

**Fig. 11**

$\mathcal{A}$... steht für eine beliebige Verknüpfung
der beiden Inputwerte zu einem Resultat
mit einem Wert zwischen 1 und A

# Fig. 11a

**Fig. 12**

**Fig. 13**

**Fig. 16**

**Fig. 14**

**Fig. 14a**

$\mathcal{Z}$... steht für eine beliebige Verknüpfung
der beiden Inputwerte zu einem Resultat
mit einem Wert zwischen 1 und Z

**Fig. 15**

Fig. 15a

$\mathscr{A}$ ... steht für eine beliebige Verknüpfung
der beiden Inputwerte zu einem Resultat
mit einem Wert zwischen 1 und A

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20120076293 A